# EUROPEAN PATENT SPECIFICATION

(11) **EP 3 270 310 B1**
(45) Date of publication and mention of the grant of the patent: **10.06.2020**
(21) Application number: 16178926.8
(22) Date of filing: 11.07.2016
(51) Int. Cl.: G06F 21/12, G06F 21/14

(54) **MOBILE DEVICE APPLICATIONS SECURITY PROTECTION BASED ON PERSONALIZATION AND SECURED CODE DOMAINS PAIRING**
SCHUTZ DER SICHERHEIT VON MOBILVORRICHTUNGSANWENDUNGEN BASIEREND AUF PERSONALISIERUNG UND GESICHERTER CODEDOMÄNENPAARUNG
PROTECTION DE SÉCURITÉ D'APPLICATIONS DE DISPOSITIF MOBILE SUR LA BASE D'APPARIEMENT DES DOMAINES DE CODE ET DE PERSONNALISATION

(43) Date of publication of application: 17.01.2018
(73) Proprietor: Afirma Consulting & Technologies, S.L., 28029 Madrid (ES)
(72) Inventor: Pérez Lafuente, Carlos Alberto, 28029 Madrid (ES)
(74) Representative: Lorente Berges, Ana

(56) References cited:
- WO-A1-2015/139950
- US-A1- 2013 124 606

## Description

### TECHNICAL FIELD

This invention relates to methods and apparatus to automatically personalize in terms of security mobile device software applications, the personalization associated to secured code domains pairing.

### BACKGROUND

In current mobile technologies multiple mobile applications are protected using secure elements such as SIM cards, embedded chips or micro-SD cards. In spite those secured containers offer strong resistance to tampering, business control issues make service providers to look for alternatives to protect the sensitive assets (such as keys and secret data) of their mobile applications, and the mobile applications themselves.

Within those alternatives code obfuscation and white box cryptography, in combination with other techniques, are used to protect mobile device software applications. Ideally, each application should be protected in a personalized manner but sometimes said personalization may introduce additional complexity in terms of application installation and management.

Prior art documents, such as document WO 2015/139950 A1, disclose methods to automatically generate protected mobile device software applications by using obfuscation software, where a given resulting protected mobile device software application may be different than any other one in terms of security parameters and/or obfuscation rules. Within those methods the application binary file(s) resulting from a given security protection would be different than the application binary file(s) resulting from a different security protection of the same version of an application.

Nevertheless, most popular mobile device software applications distribution markets (e.g. Google Play Store or Apple Store) are not currently enabled to distribute different binary/executable file(s) for different groups of users, in connection to a given version of an application. The binary file(s) are the same for all users' mobile devices downloading and installing a given version of the application.

Considering the above limitations, the distribution of said different binary file(s) for different groups of users may require the usage of applications distribution servers different than the ones of an applications market (e.g. servers of the service provider owning the application). It could impact on usability, and sometimes may even not be allowed by the mobile device operating system owner.

In order to avoid the referred issues, within this invention the binary file(s) associated to a given version of an application is the same for all users' mobile devices, but security personalization is applied to the protected mobile device software application in such a way said personalization is in association to secured code domains pairing processes, thus still strongly increasing the protection of the mobile device software application in a user's mobile device.

So this new invention discloses methods related to a protected mobile device software application comprising several code domains, related to one or more service providers, where at least part of them are in a non-personalized security status that disable them for regular operation when the application is distributed and installed in a user's mobile device, and one or more of those code domains are later personalized in the protected mobile device software application upon security personalization methods and techniques that enable them for regular operation and that are based on one or more of the code domains being paired on security terms to other one or more of the code domains.

Advantageously, these methods and techniques permits an improved application protection in terms of protecting application sensitive assets and critical processes in a personalized manner, as described herein below.

### SUMMARY OF THE DISCLOSURE

What is disclosed herein are new methods and apparatus to personalize a mobile device software application on security terms, where one or more first code domains are paired on security terms to second one or more code domains via a security personalization that is required to enable the one or more first code domain for regular operation.

According to some implementations this is achieved by providing a method associated with one or more service providers and a provider of personalization services in connection to the security personalization of a mobile device software application in a user's mobile device, the method comprising:
using by the provider of personalization services a mobile device software application, a security personalization registry and security protection software that are stored in one or more memories to generate by using one or more processing devices a protected mobile device software application that is personalized on security terms by using data of the security personalization registry, the generated application comprising several code domains, related to the one or more service providers, where one or more first code domains are paired on security terms to one or more second code domains via the security personalization, said personalization related to security parameters and/or obfuscation rules and/or code checksums data that are at least partly available in the one or more second code domains and that are required to enable the one or more first code domains for regular operation;
sending the protected mobile device software application in a non-personalized security status from the provider of personalization services to a distribution server, said status disabling the one or more first code domains for regular operation, and the protected mobile device software application being stored in one or more memories of the distribution server;
receiving from the user's mobile device a request for a security personalization of at least one of the one or more first code domains, the request being triggered by using executable code belonging to one of the one or more second code domains of the protected mobile device software application being in a non-personalized security status;
sending security personalization data associated to a life cycle security personalization registry that relates to the user's mobile device, to the non-security personalized protected mobile device software application in the user's mobile device, the security personalization data enabling in the application at least one of the one or more first code domains for regular operation.

According to some implementations the provider of personalization services is one of the one or more service providers.

According to some implementations the enablement of the at least one of the one or more first code domains is associated to one or more security parameters related to the life cycle security personalization registry, that are different than the corresponding ones of the security personalization registry.

According to some implementations the security personalization associated to the life cycle security personalization registry relates to security parameters and/or obfuscation rules and/or code checksums data that are at least partly available in the one or more second code domains and that are required to enable the at least one of the one or more first code domains for regular operation.

According to some implementations successive requests for a security personalization of at least another one or more first code domains are received from the user's mobile device, each request being triggered by using executable code belonging to one of the one or more first code domains that has previously been enabled for regular operation, and security personalization data associated to the life cycle security personalization registry is sent to the partly-security personalized protected mobile device software application, the security personalization data enabling in the application for regular operation the at least another one or more first code domains that is associated to the particular request. Advantageously different groups of not-enabled one or more first code domains are personalized in security terms at different time instants, so an attacker would need to perform different attacks to each protected mobile device software application along its security personalization live cycle to try to gradually exploit the functionality covered by each one or more first code domains that has already been enabled for regular operation.

According to some implementations at least one of the another one or more first code domains is paired on security terms by the provider of personalization services to one or more first code domains via the security personalization, said personalization related to security parameters and/or obfuscation rules and/or code checksums data that are at least partly available in the one or more first code domains and that are required to enable the at least one of the another one or more first code domains for regular operation.

According to some implementations at least part of the security parameters and/or obfuscation rules and/or code checksums data required to enable the at least one of the another one or more first code domains for regular operation have been previously sent to a part of the protected mobile device software application data base that is associated to the one or more first code domains.

According to some implementations one or more processing devices make a partly-security personalized protected mobile device software application expiring if a request for a security personalization of at least another one or more first code domains is received later than a predefined period of time after security personalization data related to a previous request for a security personalization of at least one or another different one of the one or more first code domains was sent to the protected mobile device software application being in either a non-personalized or in a partly-personalized security status. By limiting the permitted time window between two different partial security personalization processes of one or more first code domains, sensitive assets handled by the application between one security personalization and a later one may be better protected.

According to some implementations the one or more first/second code domains associated in one or more memories of the provider of personalization services to the protected mobile device software application in a mobile device of a first user are different than the one or more first/second code domains associated in one or more memories of the provider of personalization services to the protected mobile device software application in a mobile device of a second user.

According to some implementations security re-personalization data associated to the life cycle security personalization registry, or to other life cycle security personalization registry related to the user's mobile device, is sent to the protected mobile device software application being in either a partly-personalized or in a personalized security status, the security re-personalization data is at least partly different than the security personalization data and enables in the application for regular operation at least one of the one or more first code domains and/or at least one of the another one or more first code domains.

According to some implementations at least one of the another one or more first code domains is paired on security terms by the provider of personalization services to one or more first code domains via the security re-personalization, said re-personalization related to security parameters and/or obfuscation rules and/or code checksums data that are at least partly available in the one or more first code domains and that are required to enable the at least one of the another one or more first code domains for regular operation;

According to some implementations at least part of the security parameters and/or obfuscation rules and/or code checksums data required to enable the at least one of the another one or more first code domains for regular operation have been previously sent to a part of the protected mobile device software application data base that is associated to the one or more first code domains.

According to some implementations one or more first code domains associated to a first service provider may be enabled for regular operation by the provider of personalization services independently of the enablement for regular operation of other one or more first code domains associated to a second service provider.

According to some implementations there is a method associated with the use of a user's mobile device in connection to the security personalization of a protected mobile device software application in the user's mobile device, the protected mobile device software application previously generated by a provider of personalization services in a personalized security status by using a mobile device software application, a security personalization registry and security protection software, the protected application comprising several code domains, related to one or more service providers, where one or more first code domains became paired on security terms to one or more second code domains via the security personalization associated to the security personalization registry, the method comprising:
requesting from the user's mobile device a mobile device software application to a distribution server, the distribution server storing in one or memories the protected mobile device software application being in a non-personalized security status;
receiving from the distribution server and subsequently installing by one or more processing devices in the mobile device the non-security personalized protected mobile device software application, wherein in said pending security personalization status the one or more first code domains are disabled for regular operation;
sending from the user's mobile device a request for a security personalization of at least one of the one or more first code domains, the request being triggered by one or more processing devices by using executable code belonging to one of the one or more second code domains of the protected mobile device software application being in a non-personalized security status;
receiving security personalization data associated to a life cycle security personalization registry that relates to the user's mobile device from the provider of personalization services, the security personalization data enabling in the non-security personalized protected mobile device software application at least one of the one or more first code domains for regular operation, said personalization related to security parameters and/or obfuscation rules and/or code checksums data that are at least partly available in the one or more second code domains and that are required to enable the at least one of the one or more first code domains for regular operation.

According to some implementations the enablement of the at least one of the one or more first code domains is associated to one or more security parameters related to the life cycle security personalization registry, that are different than the corresponding ones of the security personalization registry.

According to some implementations successive requests for a security personalization of at least another one or more first code domains are sent from the user's mobile device to the provider of personalization services, each request being triggered by one or more processing devices by using executable code belonging to one of the one or more first code domains that has previously been enabled for regular operation, and security personalization data associated to the life cycle security personalization registry related to the user's mobile device is received in the partly-security personalized protected mobile device software application, the security personalization data enabling in the application for regular operation the at least another one or more first code domains that is associated to the particular request.

According to some implementations at least one of the another one or more first code domains is paired on security terms to one or more first code domains via the security personalization, said personalization related to security parameters and/or obfuscation rules and/or code checksums data that are at least partly available in the one or more first code domains and that are required to enable the at least one of the another one or more first code domains for regular operation.

According to some implementations at least part of the security parameters and/or obfuscation rules and/or code checksums data required to enable the at least one of the another one or more first code domains for regular operation are available in a part of the protected mobile device software application data base that is associated to one or more first code domains that has previously been enabled for regular operation.

According to some implementations a request for a security personalization of at least another one or more first code domains is sent from the user's mobile device to the provider of personalization services later than a predefined period of time after security personalization data related to a previous request for a security personalization of at least one or another different one of the one or more first code domains was received in the protected mobile device software application being in either a non-personalized or in a partly-personalized security status, and a notification from the provider of personalization services indicating that the partly-security personalized protected mobile device software application has expired is received in the user's mobile device.

According to some implementations the one or more first code domains enabled via first security personalization data received in the protected mobile device software application installed in a mobile device of a first user are different than the one or more first code domains enabled via second security personalization data received in the protected mobile device software application installed in a mobile device of a second user.

According to some implementations the security personalization data received in the mobile device of a first user, the data enabling in the application one or more first code domains for regular operation and associated to a first life cycle security personalization registry that comprises first security parameters and/or obfuscation rules and/or code checksums data, are different than the security personalization data received in the mobile device of a second user, the data enabling in the application one or more first code domains for regular operation and associated to a second life cycle security personalization registry that comprises second security parameters and/or obfuscation rules and/or code checksums data.

According to some implementations security re-personalization data associated to the life cycle security personalization registry, or to other life cycle security personalization registry related to the user's mobile device, is received in the protected mobile device software application being in either a partly-personalized or in a personalized security status, the security re-personalization data is at least partly different than the security personalization data and enables in the application for regular operation at least one of the one or more first code domains and/or at least one of the another one or more first code domains.

A non-transitory computer readable medium storing computer readable program code for causing a processor of a user's mobile device to perform a method associated to the security personalization of a protected mobile device software application in the user's mobile device, the protected mobile device software application previously generated by a provider of personalization services in a personalized security status by using a mobile device software application, a security personalization registry and security protection software, the protected application comprising several code domains, related to one or more service providers, where one or more first code domains became paired on security terms to one or more second code domains via the security personalization associated to the security personalization registry, the method comprising:
requesting from the user's mobile device a mobile device software application to a distribution server, the distribution server storing in one or memories the protected mobile device software application being in a non-personalized security status;
receiving from the distribution server and subsequently installing by one or more processing devices in the mobile device the non-security personalized protected mobile device software application, wherein in said pending security personalization status the one or more first code domains are disabled for regular operation;
sending from the user's mobile device a request for a security personalization of at least one of the one or more first code domains, the request being triggered by one or more processing devices by using executable code belonging to one of the one or more second code domains of the protected mobile device software application being in a non-personalized security status;
receiving security personalization data associated to a life cycle security personalization registry that relates to the user's mobile device from the provider of personalization services, the security personalization data enabling in the non-security personalized protected mobile device software application at least one of the one or more first code domains for regular operation, said personalization related to security parameters and/or obfuscation rules and/or code checksums data that are at least partly available in the one or more second code domains and that are required to enable the at least one of the one or more first code domains for regular operation.

According to some implementations a non-transitory computer readable medium storing computer readable program code is provided that causes the processor sending successive requests for a security personalization of at least another one or more first code domains from the user's mobile device to the provider of personalization services, each request being triggered by one or more processing devices by using executable code belonging to one of the one or more first code domains that has previously been enabled for regular operation, and receiving security personalization data associated to the life cycle security personalization registry related to the user's mobile device in the partly-security personalized protected mobile device software application, the security personalization data enabling in the application for regular operation the at least another one or more first code domains that is associated to the particular request.

According to some implementations a user's mobile device is provided that is associated with the security personalization of a protected mobile device software application in the user's mobile device, the protected mobile device software application previously generated by a provider of personalization services in a personalized security status by using a mobile device software application, a security personalization registry and security protection software, the protected application comprising several code domains, related to one or more service providers, where one or more first code domains became paired on security terms to one or more second code domains via the security personalization associated to the security personalization registry, the mobile device comprising:
an electronic storage medium that stores security personalization data; and
a processor adapted to:
   request a mobile device software application to a distribution server, the distribution server storing in one or memories the protected mobile device software application being in a non-personalized security status;
   receive from the distribution server and subsequently install in the mobile device the non-security personalized protected mobile device software application, wherein in said pending security personalization status the one or more first code domains are disabled for regular operation;
   send a request for a security personalization of at least one of the one or more first code domains, the request being triggered by using executable code belonging to one of the one or more second code domains of the protected mobile device software application being in a non-personalized security status;
   receive security personalization data associated to a life cycle security personalization registry that relates to the user's mobile device from the provider of personalization services, the security personalization data enabling in the non-security personalized protected mobile device software application at least one of the one or more first code domains for regular operation, said personalization related to security parameters and/or obfuscation rules and/or code checksums data that are at least partly available in the one or more second code domains and that are required to enable the at least one of the one or more first code domains for regular operation.

According to some implementations the processor is adapted to send successive requests for a security personalization of at least another one or more first code domains from the user's mobile device to the provider of personalization services, each request being triggered by using executable code belonging to one of the one or more first code domains that has previously been enabled for regular operation, and to receive security personalization data associated to the life cycle security personalization registry related to the user's mobile device in the partly-security personalized protected mobile device software application, the security personalization data enabling in the application for regular operation the at least another one or more first code domains that is associated to the particular request.

### BRIEF DESCRIPTION OF THE DRAWINGS

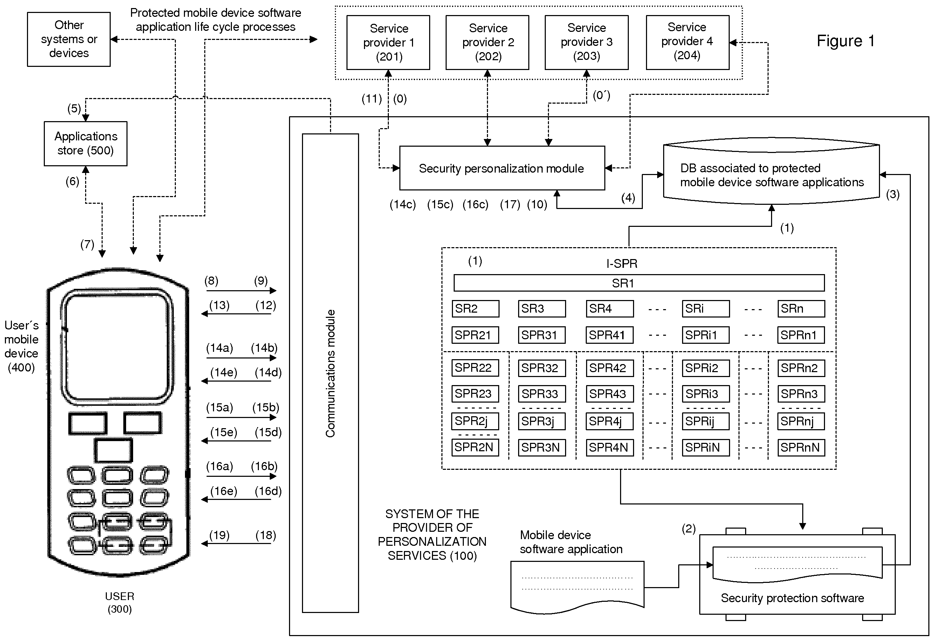

Figure 1 is a schematic diagram illustrating methods and apparatus according to some implementations, related to one or more service providers and a provider of personalization services in connection to the security personalization of a mobile device software application, wherein a more detailed description is provided in connection to service provider 1 and the provider of personalization services.

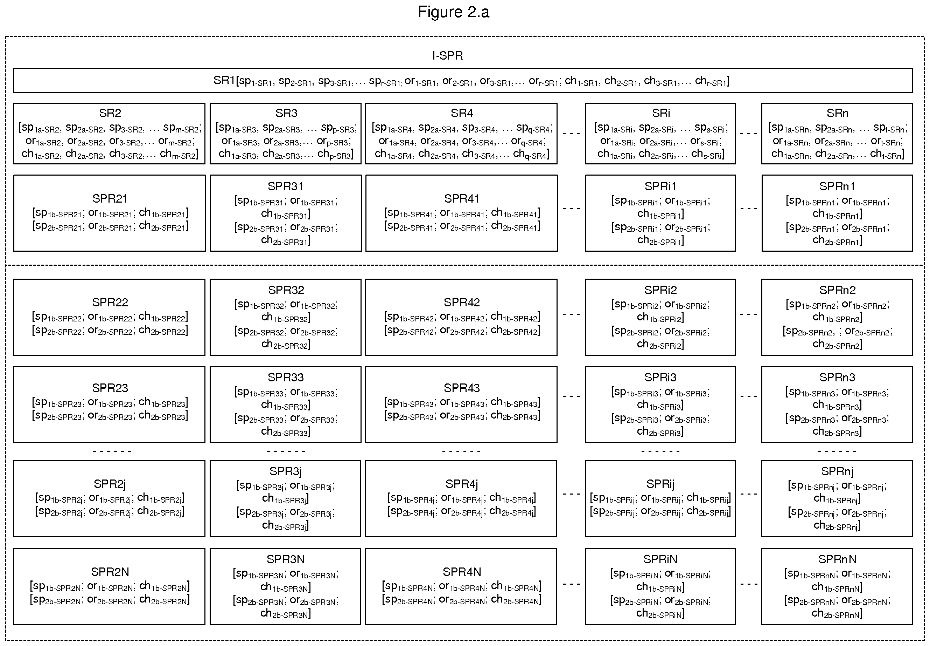

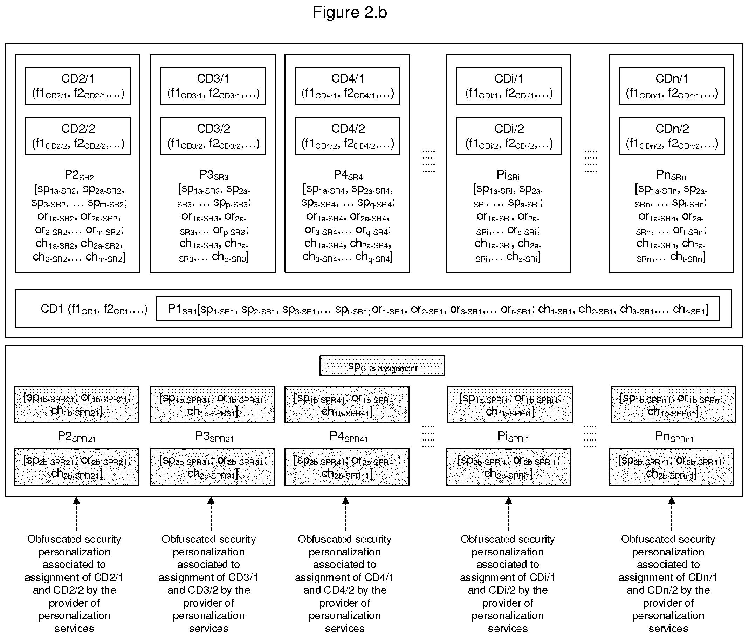

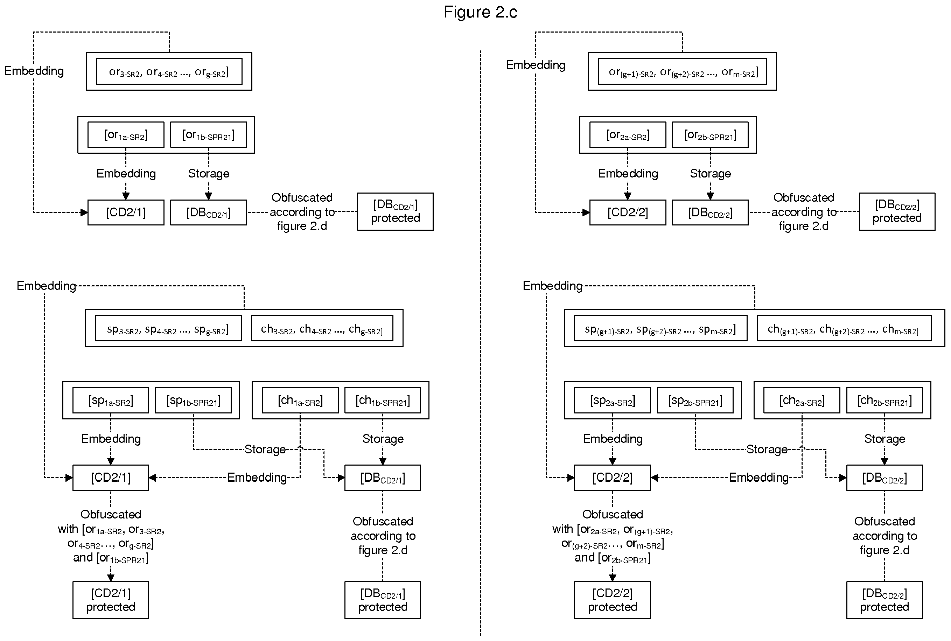

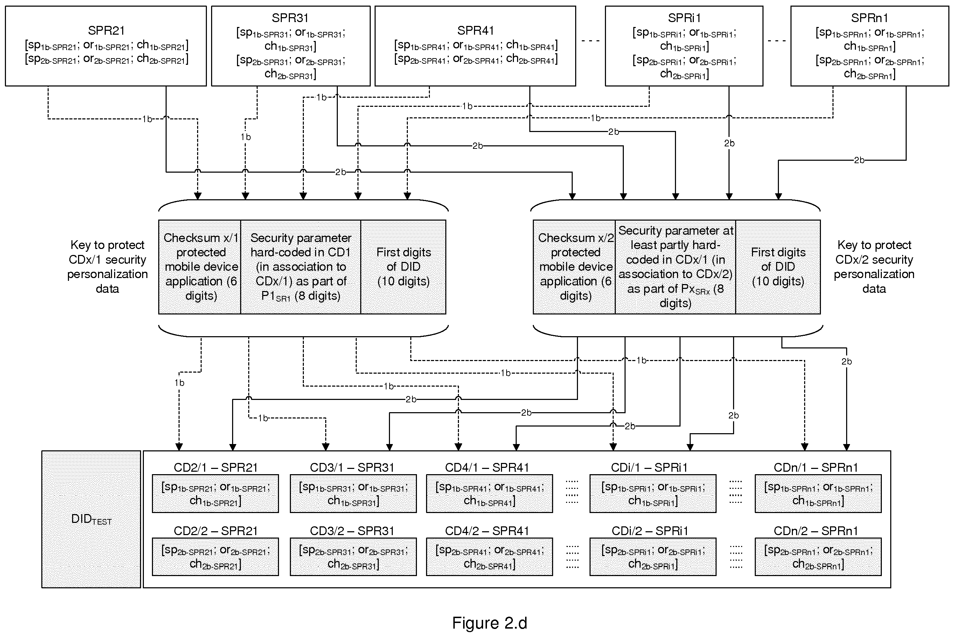

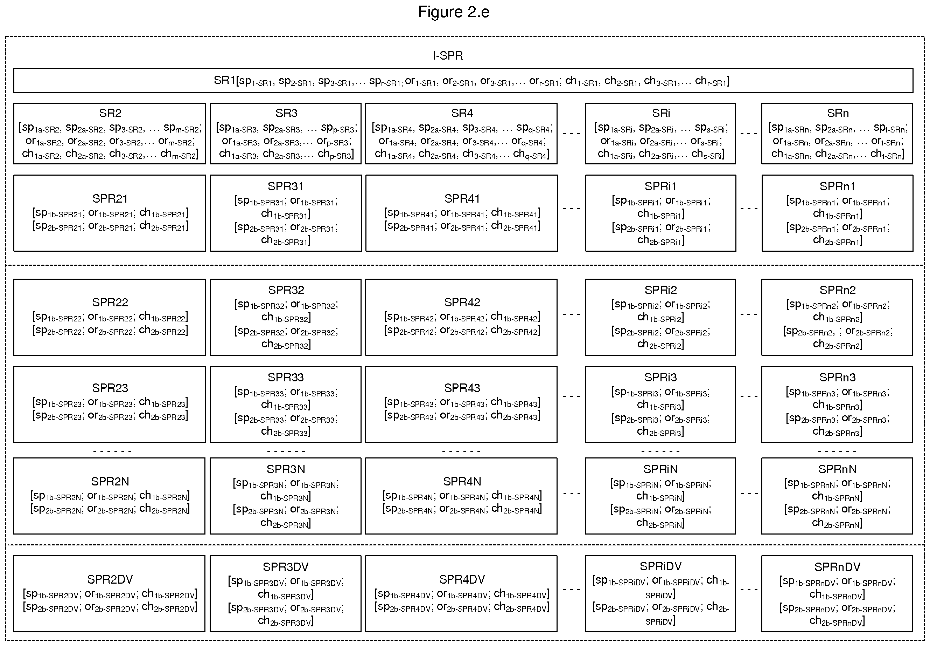

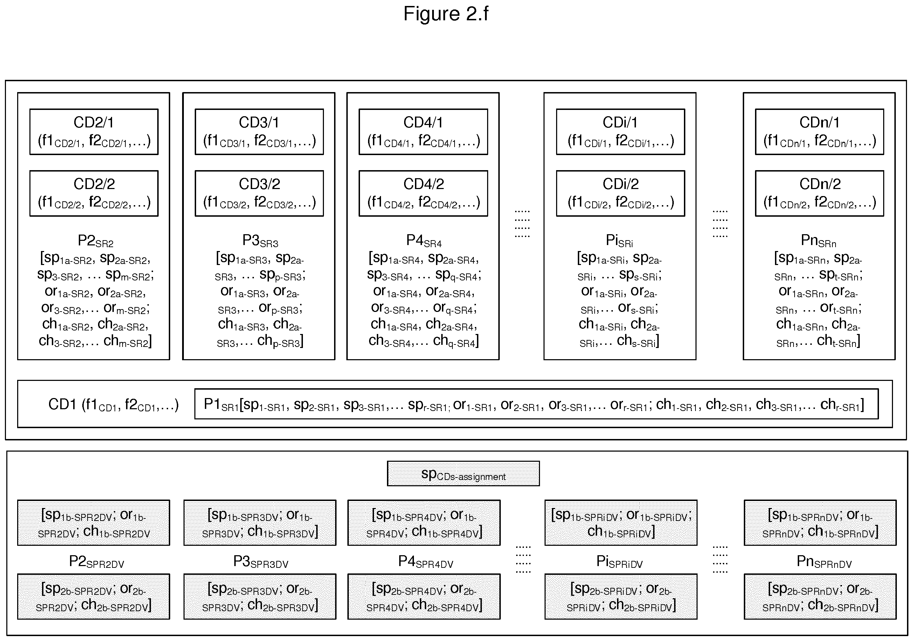

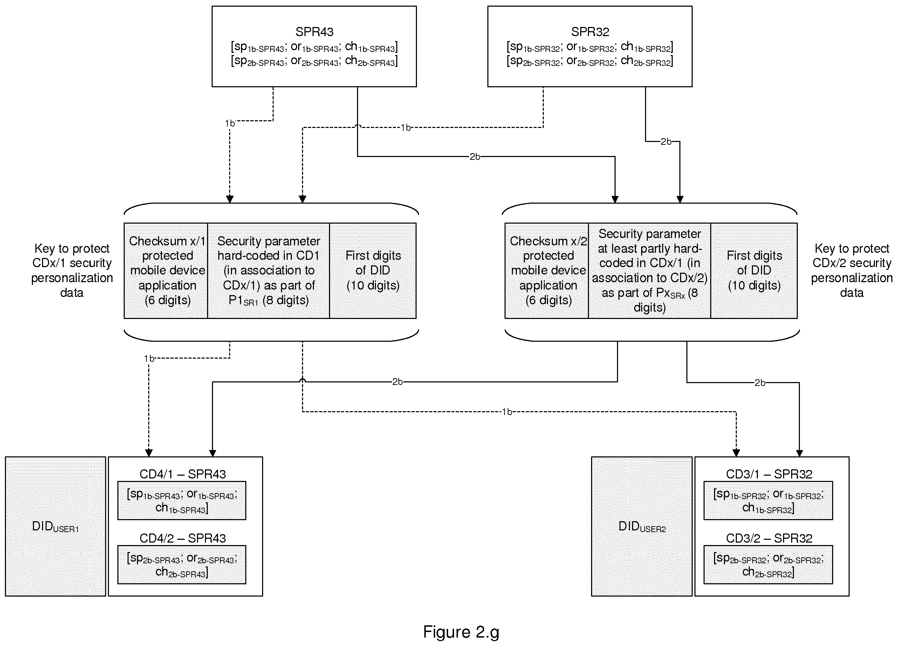

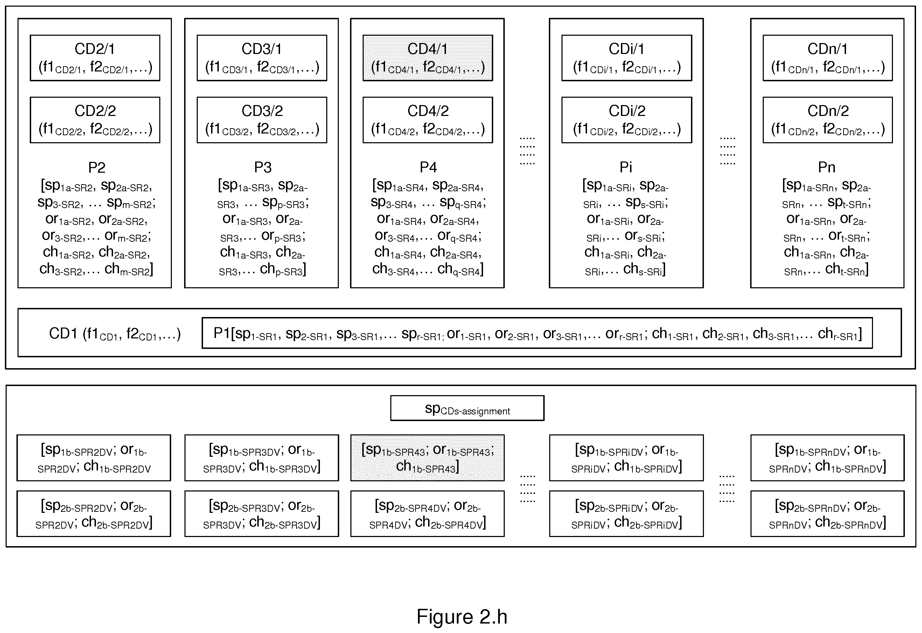

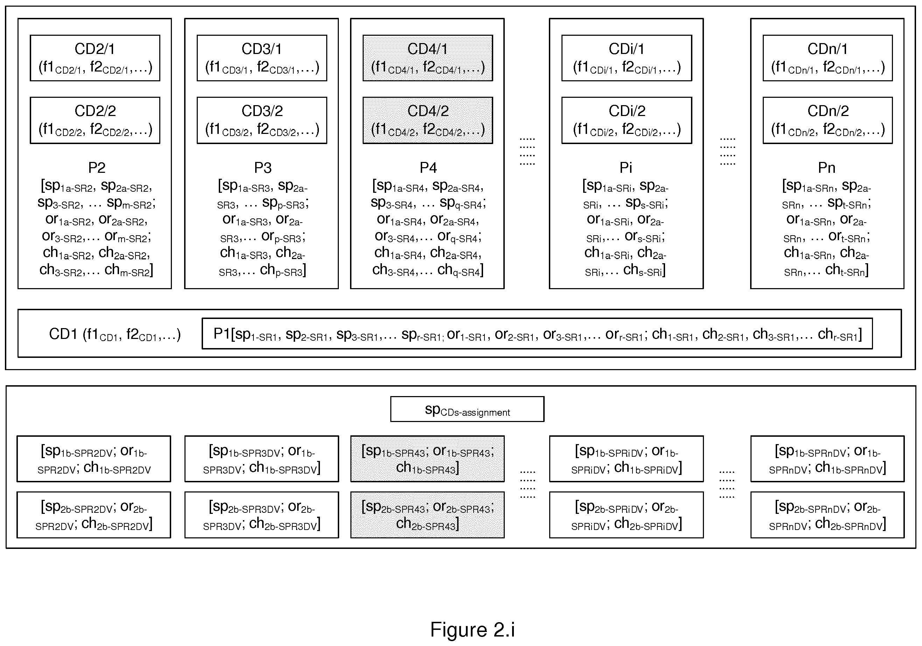

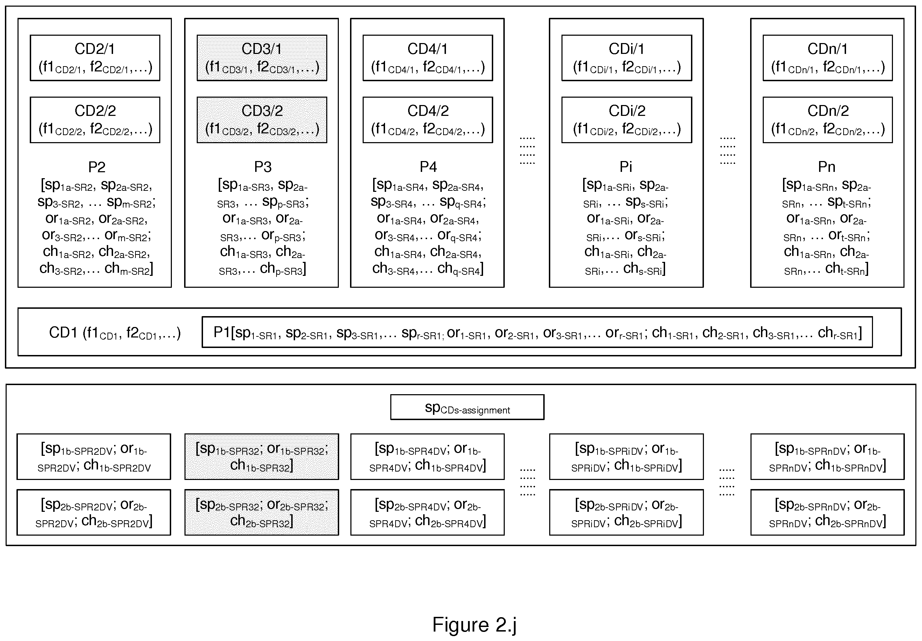

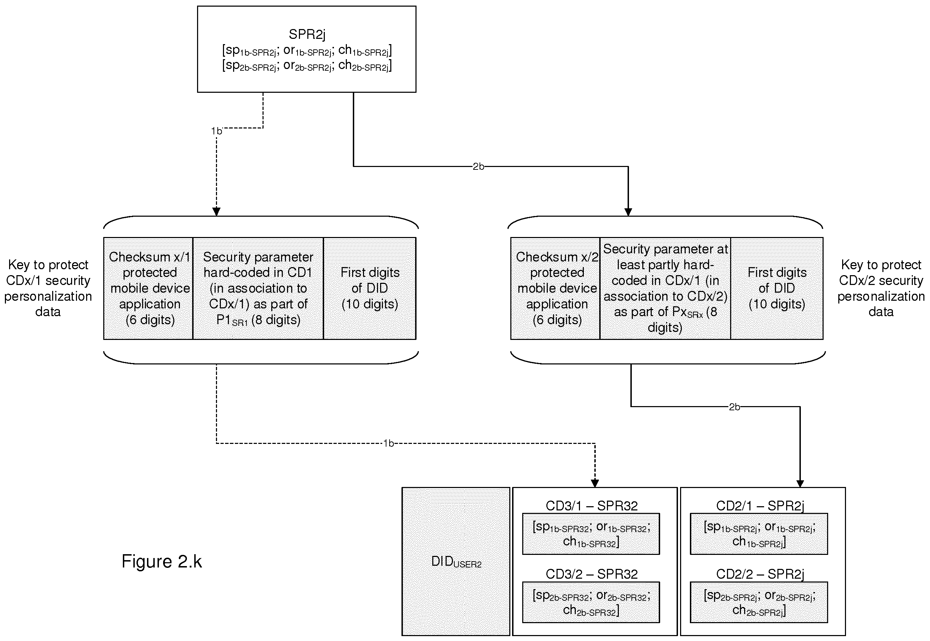

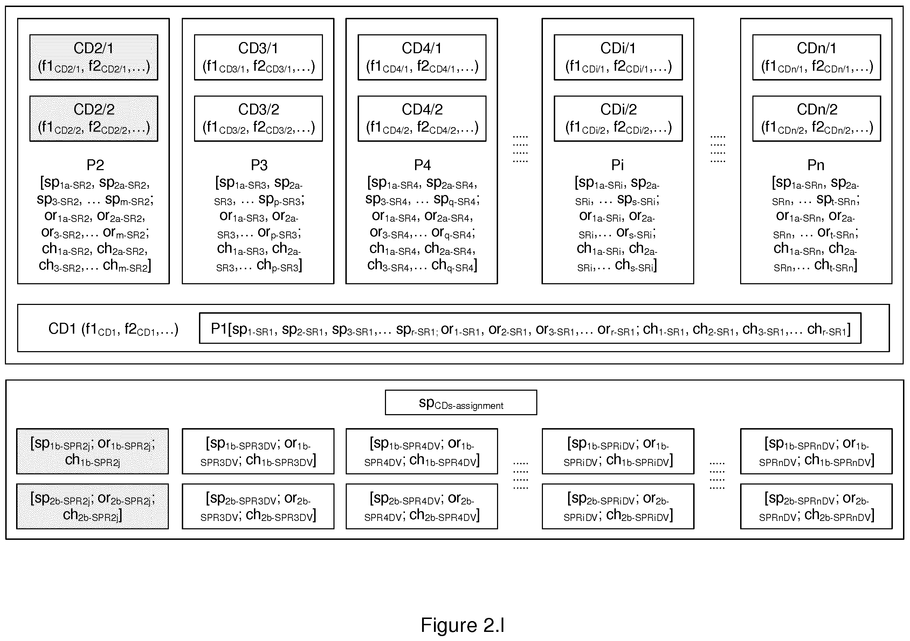

Figures 2.a to 2.l are schematic diagrams illustrating methods and apparatus according to some implementations in connection to the security personalization of a mobile device software application. In particular:
   - Figure 2.a illustrates security personalization registries generated by the provider of personalization services and also relates to the generation of a security personalized protected mobile device software application.
   - Figure 2.b illustrates some implementations where a mobile device software application has been developed to perform functions associated to one service provider that is the same entity than the provider of personalization services.
   - Figure 2.c illustrates some implementations of applying a security protection to functions into first code domains, in el context of generating a protected mobile device software application.
   - Figure 2.d illustrates some implementations associated to the protection of at least parts of security parameters, obfuscation rules and networks of checksums in a part of the application data base that is associated to a given code domain, in el context of generating a protected mobile device software application.
   - Figure 2.e illustrates a set of security personalization registries with default (/wrong) values that may be used for testing purposes.
   - Figure 2.f illustrates a security personalization that uses default values and testing scenarios.
   - Figure 2.g illustrates some implementations associated to the protection of security personalization data associated to the protected mobile device software application installed in the mobile device of a first and a second user.
   - Figure 2.h illustrates some implementations where the mobile device of a first user stores security personalization data that enables first code domains for regular operation.
   - Figure 2.i illustrates some implementations where the mobile device of a first user stores security personalization data that enables first code domains and another first code domains for regular operation.
   - Figure 2.j illustrates some implementations where the mobile device of a second user stores security personalization data that enables first code domains and another first code domains for regular operation.
   - Figure 2.k illustrates some implementations associated to the protection of security re-personalization data associated to the protected mobile device software application installed in the mobile device of a second user.
   - Figure 2.l illustrates some implementations where the mobile device of a second user stores security re-personalization data that enables first code domains and another first code domains for regular operation.
Figure 3 is a schematic diagram illustrating methods and apparatus where the protected mobile device software application relates to several service providers and an architecture equivalent to the one illustrated in figure 2.b is replicated into the application code for each one of the service providers.

### DETAILED DESCRIPTION

Figure 1 is a schematic diagram illustrating methods and apparatus according to some implementations in connection to the security personalization of a mobile device software application. In particular, figure 1 illustrates a method associated with one or more service providers (201, 202, 203 and 204) and a provider of personalization services (100) in connection to the security personalization of a mobile device software application in a user's mobile device (400).

The mobile device software application may be developed such that parts of it may perform functions associated to one or more service providers, other parts may perform functions associated to other one or more service providers, etc. Also, different parts of the mobile device software application constitute different code domains, each one grouping one or more functions of the mobile device software application that are associated to one or more service providers.

Within this invention security personalization is applied to certain code domains, said personalization enabling them for regular operation, it is to enable them to regularly perform the code domain functions associated to the related one or more service providers. Some of those functions may relate to protected mobile device software application life cycle processes such as services registration processes, personalization processes, payment processes, authentication processes, information requests, etc., as illustrated in figure 1. Accordingly, some processes may take place between the user's mobile device and a services registration server, a personalization server, a transaction terminal, and authentication server, a proxy terminal, a proxy server, a server processing a first part of a transaction, a server processing application life cycle processes, etc. Other functions may relate for example to local processes performed by the protected mobile device software application in the user's mobile device.

In figure 1 several service providers are illustrated, particularly service provider 1 (201), service provider 2 (202), service provider 3 (203) and service provider 4 (204). The service providers may be transportation authorities, health services companies, internet of things service providers, location and/or presence services providers, financial institutions, etc.

According to some implementations the provider of personalization services is one of the one or more service providers. In a particular example service provider 1 is the same entity than the provider of personalization services and the code domains and the related functions within a mobile device software application are entirely associated to service provider 1.

In step (1) one or more processing devices within the system of the provider of personalization services generates a set of security personalization registries and stores them in a data base (DB) associated to protected mobile device software applications. According to some implementations at least part of the security personalization registries are generated upon input data provided to the provider of personalization services by one or more a service providers (this possibility is represented in figure 1 as step (0) and step (0'), in reference to service provider 1 and service provider 3 respectively, where input data is received in the security personalization module) such that the related service provider may later associate an at least part of a security personalization registry received from the provider of personalization services with the related input data.

Figure 1 illustrates an example of generated security personalization registries as follows:
- An initialization security personalization registry (I-SPR) that comprises a set of generic security sub-registries SR₁, SR₂, SR₃, SR₄, ..., SRᵢ, ..., SRₙ, and a set of security personalization sub-registries SPR₂₁, SPR₃₁, SPR₄₁, ..., SPRᵢ₁, ..., SPRₙ₁;
- a set of additional life cycle security personalization registries associated to the generic security sub-registries SR₁ and SR₂: SPR₂₂, SPR₂₃, ..., SPR₂ⱼ, ..., SPR_{2N}];
- a set of additional life cycle security personalization registries associated to the generic security sub-registries SR₁ and SR₃: SPR₃₂, SPR₃₃, ..., SPR₃ⱼ, ..., SPR_{3N}];
- a set of additional life cycle security personalization registries associated to the generic security sub-registries SR₁ and SR₄: SPR₄₂, SPR₄₃, ..., SPR₄ⱼ, ..., SPR_{4N}];
- a set of additional life cycle security personalization registries associated to the generic security sub-registries SR₁ and SRᵢ: SPRᵢ₂, SPRᵢ₃, ..., SPRᵢⱼ, ..., SPR_{iN}];
- a set of additional life cycle security personalization registries associated to the generic security sub-registries SR₁ and SRₙ: SPRₙ₂, SPRₙ₃, ..., SPRₙⱼ, ..., SPR_{nN}];

In step (2) the provider of personalization services uses a mobile device software application, a security personalization registry and security protection software that are stored in one or more memories to generate by using one or more processing devices a protected mobile device software application that is personalized on security terms by using data of the security personalization registry. In a particular example the security personalization registry is the initialization security personalization registry (I-SPR) referred above.

According to some implementations the one or more memories and the one or more processing devices reside in one or more servers of the provider of personalization services.

As described above the generated application comprises several code domains, related to the one or more service providers, where one or more first code domains are paired on security terms to one or more second code domains via the security personalization, said personalization related to security parameters and/or obfuscation rules and/or code checksums data that are at least partly available in the one or more second code domains and that are required to enable the one or more first code domains for regular operation.

The application may be tested in order to verify that the security personalization enables the one or more code domains for regular operation (e.g. using a mobile device emulator being part of the security protection software). In step (3) the protected mobile device software application is stored in the data base (DB) associated to protected mobile device software applications, in association to the security personalization data that enables the one or more first code domains for regular operation and to the security personalization registries (including I-SPR).

Afterwards, in step (4) the security personalization module obtains by using one or more processing devices the protected mobile device software application from the data base. According to some implementation the protected application is obtained without any data associated to the security personalization that enables the one or more first code domains for regular operation, so the obtained application is a non-security personalized protected mobile device software application. The non-security personalized protected mobile device software application is in a pending security personalization status, said pending security personalization status disabling the one or more first code domains for regular operation.

In step (5) the protected mobile device software application is sent in a non-personalized security status from the provider of personalization services to a distribution server of an entity in charge to distribute the application and said application is stored in one or more memories of the distribution server of said entity. As illustrated in figure 1, according to some implementations the distribution server relates to one or more of the servers associated to an applications distribution market or an applications store such as Google Play Store or Apple Store.

In step (6) upon user (300) interaction there is a request from the user's mobile device of a mobile device software application to the distribution server, the distribution server storing in one or memories the protected mobile device software application being in a non-personalized security status. As may well understood by those skilled in the art, other servers may be involved in receiving the request from the user's mobile device and/or in distributing the application to the user's mobile device, but independently of the servers architecture of the entity that distributes applications to mobile devices, the request of this invention is targeted to obtain the non-security personalized protected mobile device software application from the referred distribution server, for distribution to the user's mobile device.

In step (7) the user's mobile device receives from the distribution server and subsequently installs by one or more processing devices in the mobile device the non-security personalized protected mobile device software application, wherein in said pending security personalization status the one or more first code domains are disabled for regular operation.

As described herein below, according to some embodiments the user's mobile device is used in connection to the security personalization of the protected mobile device software application in the user's mobile device.

In step (8) the user's mobile device sends a request for a security personalization of at least one of the one or more first code domains, the request being triggered by one or more processing devices by using executable code belonging to one of the one or more second code domains of the protected mobile device software application being in a non-personalized security status.

In step (9) the provider of personalization services receives the request from the user's mobile device and in step (10) one or more processing devices of the provider of personalization services assign a life cycle security personalization registry to the user's mobile device in relation to the protected mobile device software application. According to some embodiments the life cycle security personalization registry assigned in this step by the security personalization module is different (e.g. SPR33) than the security personalization registry used when generating the security personalized mobile device software application (I-SPR in the example above). Still is step (10) the assignment of the life cycle security personalization registry to the user's mobile device and to the protected mobile device software application is stored is the data base associated to protected mobile device software applications.

In step (11) at least part of the assigned life cycle security personalization registry data, and the association to the user's mobile device and protected mobile device software application, may be sent to the corresponding service provider such that it may later use at least part of it in the context of certain protected mobile device software application life cycle processes (figure 1 illustrates an example where said data is sent to service provider 1).

In step (12) security personalization data associated to the assigned life cycle security personalization registry is sent from the provider of personalization services to the user's mobile device. In particular, security personalization data associated to the life cycle security personalization registry related to the user's mobile device is sent to the non-security personalized protected mobile device software application in the user's mobile device, the security personalization data enabling in the application at least one of the one or more first code domains for regular operation.

In step (13) the user's mobile device receives the security personalization data associated to the life cycle security personalization registry that relates to the user's mobile device from the provider of personalization services, the security personalization data enabling in the non-security personalized protected mobile device software application at least one of the one or more first code domains for regular operation, said personalization related to security parameters and/or obfuscation rules and/or code checksums data that are at least partly available in the one or more second code domains and that are required to enable the at least one of the one or more first code domains for regular operation.

According to some implementations the enablement of the at least one of the one or more first code domains is associated to one or more security parameters related to the life cycle security personalization registry, that are different than the corresponding ones of the security personalization registry.

Advantageously, after the above security personalization has been performed, the referred at least one of the one or more first code domains may be used to regularly perform the associated protected mobile device software application life cycle functions.

According to some implementations different groups of not-enabled one or more first code domains are personalized in security terms at different time instants. This approach increases the security of the protected mobile device software application. Steps (14a, 15a and 16a) represent successive requests for a security personalization of at least another one or more first code domains, sent from the user's mobile device to the provider of personalization services.

Within these implementations, each user's mobile device request is triggered by one or more processing devices by using executable code belonging to one of the one or more first code domains that has previously been enabled for regular operation.

In step (14a) a successive request is sent from the user's mobile device to the provider of personalization services and in step (14b) the provider of personalization services receives the successive request from the user's mobile device, and one or more processing devices of the provider of personalization services obtain in step (14c) security personalization data from the life cycle security personalization registry previously assigned to the user's mobile device.

In step (14d) the security personalization data from the life cycle security personalization registry previously assigned to the user's mobile device is sent from the provider of personalization services to the user's mobile device. In particular, security personalization data associated to the life cycle security personalization registry is sent to the partly-security personalized protected mobile device software application.

In step (14e) the user's mobile device receives from the provider of personalization services the security personalization data associated to the life cycle security personalization registry related to the user's mobile device in the partly-security personalized protected mobile device software application, the security personalization data enabling in the application for regular operation the at least another one or more first code domains that is associated to the particular request.

Processes associated to steps 15b, 15c, 15d and 15e will be similar to those already described above in connection to 14a, 14b, 14c, 14d and 14e, but now in connection to successive request 15a and to the enablement in the application for regular operation of the at least another one or more first code domains that is associated to the particular request (15a).

Also, processes associated to steps 16b, 16c, 16d and 16e will be similar to those already described above in connection to 14a, 14b, 14c, 14d and 14e (or to 15a, 15b, 15c, 15d and 15e), but now in connection to successive request 16a and to the enablement in the application for regular operation of the at least another one or more first code domains that is associated to the particular request (16a).

According to some implementations at least one of the another one or more first code domains is paired on security terms by the provider of personalization services to one or more first code domains via the security personalization, said personalization related to security parameters and/or obfuscation rules and/or code checksums data that are at least partly available in the one or more first code domains and that are required to enable the at least one of the another one or more first code domains for regular operation. Further, according to some implementations at least part of the security parameters and/or obfuscation rules and/or code checksums data required to enable the at least one of the another one or more first code domains for regular operation have been previously sent to a part of the protected mobile device software application data base that is associated to the one or more first code domains.

Once the security personalization data are received and stored in the partly-security personalized protected mobile device software application, the at least one of the another one or more first code domains become paired in the application on security terms to the one or more first code domains via said security personalization that relates to security parameters and/or obfuscation rules and/or code checksums data that are at least partly available in the one or more first code domains and that are required to enable the at least one of the another one or more first code domains for regular operation. According to some implementations said security parameters and/or obfuscation rules and/or code checksums data have been received in the application and are available in a part of the protected mobile device software application data base that is associated to one or more first code domains that has previously been enabled for regular operation.

According to some implementations one or more processing devices in the system of the provider of personalization services make a partly-security personalized protected mobile device software application expiring if a request for a security personalization of at least another one or more first code domains is received later than a predefined period of time after security personalization data related to a previous request for a security personalization of at least one or another different one of the one or more first code domains was sent to the protected mobile device software application being in either a non-personalized or in a partly-personalized security status. This approach further increases the security of the protected mobile device software application.

According to some implementation, a notification from the provider of personalization services indicating that the partly-security personalized protected mobile device software application has expired is sent to the user's mobile device and received in the user's mobile device.

In a particular example processes including up to step 13 has already been performed so the protected mobile device software application is in a party-security personalized status. As described above, in step (14a) a successive request is sent from the user's mobile device and received in step (14b) by the provider of personalization services. Within this example, in step (14c), previously to obtaining security personalization data from the life cycle security personalization registry previously assigned to the user's mobile device, one or more processing devices of the provider of personalization services verifies whether the request has been received (step 14b) later than a predefined period of time after security personalization data was sent to the protected mobile device software application in step (12).

If the request has been received later than said predefined period of time, then the partly-security personalized protected mobile device software application associated to the user's mobile device expires in the system of the provider of personalization services. According to some implementations, the provider of personalization services notifies (not illustrated in figure 1) to one or more service providers about the expiration status of the protected mobile device software application associated to the user's mobile device. Also, a notification indicating that the partly-security personalized protected mobile device software application has expired is sent to the user's mobile device and received in the user's mobile device.

In other particular example processes including up to step 14e has already been performed so the protected mobile device software application is in a party-security personalized status. In step (15a) a successive request is sent from the user's mobile device and received in step (15b) by the provider of personalization services. Within this example, in step (15c), previously to obtaining security personalization data from the life cycle security personalization registry previously assigned to the user's mobile device, one or more processing devices of the provider of personalization services verifies whether the request has been received (step 15b) later than a predefined period of time after security personalization data was sent to the protected mobile device software application in step (14d).

If the request has been received later than said predefined period of time, then the partly-security personalized protected mobile device software application associated to the user's mobile device expires in the system of the provider of personalization services. According to some implementations, the provider of personalization services notifies (not illustrated in figure 1) to one or more service providers about the expiration status of the protected mobile device software application associated to the user's mobile device. Complementarily, a notification indicating that the partly-security personalized protected mobile device software application has expired may be sent to the user's mobile device.

According to some implementations the one or more first/second code domains associated in one or more memories of the provider of personalization services to the protected mobile device software application in a mobile device of a first user are different than the one or more first/second code domains associated in one or more memories of the provider of personalization services to the protected mobile device software application in a mobile device of a second user. In a particular implementation each life cycle security personalization registry is already associated to a set of one or more first and second code domains at generation stage (in a particular example: SPR33 is associated to code domains 1, 3/1 and 3/2; and SPR42 is associated to code domains 1, 4/1 and 4/2) such that when a life cycle security personalization registry is assigned to a mobile device of a given user in step (10) the association to the corresponding set of one or more first and second code domains is inherited.

According to some implementations the one or more first code domains enabled via first security personalization data received in the protected mobile device software application installed in a mobile device of a first user are different than the one or more first code domains enabled via second security personalization data received in the protected mobile device software application installed in a mobile device of a second user.

According to some implementations the security personalization data received in the mobile device of a first user, the data enabling in the application one or more first code domains for regular operation and associated to a first life cycle security personalization registry that comprises first security parameters and/or obfuscation rules and/or code checksums data, are different than the security personalization data received in the mobile device of a second user, the data enabling in the application one or more first code domains for regular operation and associated to a second life cycle security personalization registry that comprises second security parameters and/or obfuscation rules and/or code checksums data.

According to some implementations the protected mobile device software application may be re-personalized along its life cycle.

Figure 1 illustrates an implementation wherein one or more processing devices within the system of the provider of personalization services obtain in step (17) security re-personalization data associated to the life cycle security personalization registry, or to other life cycle security personalization registry related to the user's mobile device, from the data base associated to protected mobile device software applications.

The referred security re-personalization data is sent in step (18) to the protected mobile device software application being in either a partly-personalized or in a personalized security status, the security re-personalization data is at least partly different than the security personalization data.

In step (19) the security re-personalization data is received in the protected mobile device software application being in either a partly-personalized or personalized security status, and enables in the application for regular operation at least one of the one or more first code domains and/or at least one of the another one or more first code domains. Advantageously, within this invention at least part of the security protection may be renewed from time to time or under certain circumstances.

According to some implementations at least one of the another one or more first code domains is paired on security terms by the provider of personalization services to one or more first code domains via the security re-personalization, said re-personalization related to security parameters and/or obfuscation rules and/or code checksums data that are at least partly available in the one or more first code domains and that are required to enable the at least one of the another one or more first code domains for regular operation. Further, according to some implementations at least part of the security parameters and/or obfuscation rules and/or code checksums data required to enable the at least one of the another one or more first code domains for regular operation have been previously sent to a part of the protected mobile device software application data base that is associated to the one or more first code domains.

Figures 2.a to 2.l are schematic diagrams illustrating methods and apparatus according to some implementations in connection to the security personalization of a mobile device software application. For simplicity, these diagrams illustrates methods associated with one service provider and a provider of personalization services in connection to the security personalization of a mobile device software application in a user's mobile device. For further simplicity, in the description of these diagrams it will be considered that the one service provider and the provider of personalization services are the same entity (service provider 1 in the context of figures 2.a to 2.l).

Figure 2.a illustrates an example of security personalization registries generated by the provider of personalization services. As already referred to in connection to step (1) of figure 1, one or more processing devices within the system of the provider of personalization services generates a set of security personalization registries.

In the example illustrated in figure 2.a there is an initialization security personalization registry (I-SPR) that comprises a set of generic security sub-registries SR₁, SR₂, SR₃, SR₄, ..., SRᵢ, ..., SRₙ, and a set of security personalization sub-registries SPR₂₁, SPR₃₁, SPR₄₁, ..., SPRᵢ₁, ..., SPRₙ₁ where:
- SR₁ and SR₂ are associated to SPR₂₁;
- SR₁ and SR₃ are associated to SPR₃₁;
- SR₁ and SR₄ are associated to SPR₄₁;
- SR₁ and SRᵢ are associated to SPRᵢ₁;
- SR₁ and SRₙ are associated to SPRₙ₁;

Within this example both the generic security sub-registries and the security personalization sub-registries include data associated to security parameters (sp), obfuscation rules (or) and networks of checksums (ch). In other particular example the security personalization sub-registries include data associated to security parameters (sp) and/or obfuscation rules (or) and/or networks of checksums (ch).

Figure 2.a further illustrates different sets of additional life cycle security personalization registries as follows:
- a set of life cycle security personalization registries associated to the generic security sub-registries SR₁ and SR₂: SPR₂₂, SPR₂₃, ..., SPR₂ⱼ, ..., SPR_{2N}];
- a set of life cycle security personalization registries associated to the generic security sub-registries SR₁ and SR₃: SPR₃₂, SPR₃₃, ..., SPR₃ⱼ, ..., SPR_{3N}];
- a set of life cycle security personalization registries associated to the generic security sub-registries SR₁ and SR₄: SPR₄₂, SPR₄₃, ..., SPR₄ⱼ, ..., SPR_{4N}];
- a set of life cycle security personalization registries associated to the generic security sub-registries SR₁ and SRᵢ: SPRᵢ₂, SPRᵢ₃, ..., SPRᵢⱼ, ..., SPR_{iN}];
- a set of life cycle security personalization registries associated to the generic security sub-registries SR₁ and SRₙ: SPRₙ₂, SPRₙ₃, ..., SPRₙⱼ, ..., SPR_{nN}];

Within this example the life cycle security personalization registries include data associated to security parameters (sp), obfuscation rules (or) and networks of checksums (ch). In other particular example the life cycle security personalization registries include data associated to security parameters (sp) and/or obfuscation rules (or) and/or networks of checksums (ch).

Figure 1 illustrated the usage by the provider of personalization services of a mobile device software application, a security personalization registry (I-SPR in the example of figure 1) and security protection software to generate a protected mobile device software application that is personalized on security terms by using data of the security personalization registry.

According to some implementations security parameters are calculated within the system of the provider of personalization services. In a particular example the security parameters are calculated within the security personalization module and are stored into the security personalization registries. Figure 2.a illustrates the calculated security parameters (sp) stored into the corresponding security personalization registries (I-SPR, SPR₂₂, ..., SPR_{2N}, ..., SPR_{nN}).

According to some implementations security parameters of the security personalization registry (I-SPR in the example) are used by the security protection software to protect certain sensitive data and/or processes of / associated to the mobile device software application.

According to some implementations at least part of the security parameters of the security personalization registry are embedded by the security protection software into the application code (e.g. sp_{3-SR1}). According to some implementations, part of at least a given security parameter of the security personalization registry is embedded by the security protection software into the application code (e.g. sp_{1a-SR2}) and another part is stored in the protected mobile device software application data base (e.g. SP_{1b-SPR21}).

According to some implementations at least part of the security parameters of the security personalization registry (I-SPR in the example) are obfuscated by the security protection software within the mobile device software application code (e.g. sp_{3-SR1}), using obfuscation rules included into the security personalization registry (e.g. or_{3-SR1}). According to some implementations, part of at least a given security parameter of the security personalization registry is obfuscated by the security protection software into the application code (e.g. sp_{1a-SR2}) and another part is stored in an obfuscated format in the protected mobile device software application data base (e.g. sp_{1b-SPR21}), using obfuscation rules included into the security personalization registry (e.g. a part of or_{3-SR1} and or_{1b-SPR21}).

According to some implementations a protected mobile device software application installed in a user's mobile device is personalized with at least part of at least a given security parameter, said part included in a life cycle security personalization registry (e.g. sp_{1b-SPR33} included in SPR₃₃) and being stored during a security personalization process in the protected mobile device software application data base, the security parameter protecting certain sensitive data and/or processes of / associated to the mobile device software application.

According to some implementations at least part of at least a given security parameter, said part included in a life cycle security personalization registry (e.g. sp_{1b-SPR33} included in SPR₃₃), is stored during a security personalization process in an obfuscated format in the data base of a protected mobile device software application installed in a user's mobile device, using obfuscation rules that are partly included into the security personalization registry (e.g. part of or_{3-SR1}) and partly included in the life cycle security personalization registry (e.g. part of or_{1b-SPR33}), the security parameter protecting certain sensitive data and/or processes of / associated to the mobile device software application.

According to some implementations networks of checksums are calculated within the system of the provider of personalization services. In a particular example the networks of checksums are calculated by the security protection software and are stored into the security personalization registries. Figure 2.a illustrates the calculated networks of checksums (ch) stored into the corresponding security personalization registries (I-SPR, SPR₂₂, ..., SPR_{2N}, ... , SPR_{nN}).

According to some implementations at least part of the checksums of the networks of checksums of the security personalization registry (I-SPR in the example) are calculated as checksums of the application code (e.g. ch_{3-SR1}). According to some implementations at least part of the checksums of the networks of checksums of the security personalization registry are calculated as checksums of the application code and/or of security parameters of the security personalization registry (e.g. ch_{3-SR2} calculated using a given part of the application code and sp_{5-SR1}; or e.g. ch_{1b-SPR21} calculated using sp_{3-SR2}; or e.g. ch_{1b-SPR21} calculated using sp_{1b-SPR21}).

According to some implementations networks of checksums of the security personalization registry (I-SPR in the example) are used by the security protection software to protect certain sensitive data and/or processes of / associated to the mobile device software application.

According to some implementations at least part of the networks of checksums of the security personalization registry are embedded by the security protection software into the application code (e.g. ch_{3-SR1}). According to some implementations, part of at least a given checksum of the security personalization registry is embedded by the security protection software into the application code (e.g. ch_{1a-SR2}) and another part is stored in the protected mobile device software application data base (e.g. ch_{1b-SPR21}).

According to some implementations at least part of the networks of checksums of the security personalization registry (I-SPR in the example) are obfuscated by the security protection software within the mobile device software application code (e.g. ch_{3-SR1}), using obfuscation rules included into the security personalization registry (e.g. or_{3-SR1}). According to some implementations, part of at least a given checksum of the security personalization registry is obfuscated by the security protection software into the application code (e.g. ch_{1a-SR2}) and another part is stored in an obfuscated format in the protected mobile device software application data base (e.g. ch_{1b-SPR21}), using obfuscation rules included into the security personalization registry (e.g. a part of or_{3-SR1} and or_{1b-SPR21}).

According to some implementations a protected mobile device software application installed in a user's mobile device is personalized with at least part of at least a given checksum, said part included in a life cycle security personalization registry (e.g. ch_{1b-SPR33} included in SPR₃₃) and being stored during a security personalization process in the protected mobile device software application data base, the checksum protecting certain sensitive data and/or processes of / associated to the mobile device software application.

According to some implementations at least part of at least a given checksum, said part included in a life cycle security personalization registry (e.g. ch_{1b-SPR33} included in SPR₃₃), is stored during a security personalization process in an obfuscated format in the data base of a protected mobile device software application installed in a user's mobile device, using obfuscation rules that are partly included into the security personalization registry (e.g. or_{3-SR1}) and partly included in the life cycle security personalization registry (or_{1b-SPR33}), the checksum protecting certain sensitive data and/or processes of / associated to the mobile device software application.

According to some implementations an obfuscation process is applied within the system of the provider of personalization services to the application code, and/or to security parameters of the security personalization registry that are at least partly embedded into the application code and/or that are at least partly stored into the application data base, and/or to checksums of the networks of checksums of the security personalization registry that are at least partly embedded into the application code and/or that are at least partly stored into the application data base. In a particular example the referred obfuscation process is applied by the security protection software.

The obfuscation process may comprise a diversity of well-known obfuscation techniques such as for example replacing an application code instruction or a set of application code instructions with another application code instruction or set of application instructions with equivalent functionality; change the order of application code instructions; change the order of functions or application code instructions blocks; change loops structure; add meaningless jumps; insert useless data or application code instructions; interleaving one or more application code sequences; reordering of static data; reordering of runtime data; encryption of program instructions; encryption of static data; replace constant values with application code generating the constant value; move static or runtime data between stack, heap and registers; use several stacks; use several stack pointers to the same stack; make the program code self-modifying; mix data (e.g. security parameters and/or code checksums) with program code; allocate partitions of security data, embedded into different part of the application code; rename classes, functions, or variables; rename files or modules. As may be well understood by an expert in the field, the previous list is not exhaustive and other additional obfuscation techniques may be also applied to the mobile device software application without departing from the scope of this invention. Also, it must be understood that some of the techniques may be applied more than once (i.e. applying one or more obfuscation techniques to code and/or data already obfuscated) to achieve a stronger obfuscation degree.

According to some implementations the obfuscation process depends on a previous step of calculating obfuscation rules of the security personalization registry (I-SPR in the example) that are used by the security protection software to protect certain sensitive data and/or processes of / associated to the mobile device software application.

According to some implementations obfuscation rules are calculated within the system of the provider of personalization services and are stored into the security personalization registries. In a particular example the obfuscation rules are calculated by the security protection software or within the security personalization module. Figure 2.a illustrates the calculated obfuscation rules (or) stored into the corresponding security personalization registries (I-SPR, SPR₂₂, ... , SPR_{2N}, ... , SPR_{nN}).

According to some implementations at least part of the obfuscation rules of the security personalization registry (I-SPR in the example) are calculated in relation to the obfuscation of the application code (e.g. or_{3-SR1} calculated in relation to the obfuscation of a given part of the application code). According to some implementations at least part of the obfuscation rules of the security personalization registry are calculated in relation to the obfuscation of the application code and/or of security parameters of the security personalization registry that are at least partly embedded into the application code and/or that are at least partly stored into the application data base, and/or of checksums of the networks of checksums of the security personalization registry that are at least partly embedded into the application code and/or that are at least partly stored into the application data base (e.g. or_{3-SR1} calculated in relation to the obfuscation of a given part of the application code and to the obfuscation of sp_{3-SR2} and to the obfuscation of ch_{3-SR2}; or e.g. or_{1b-SPR31} calculated in relation to the obfuscation of sp_{1b-SPR31} and ch_{1b-SPR31}).

According to some implementations at least part of the obfuscation rules of the security personalization registry are embedded by the security protection software into the application code (e.g. or_{1-SR1}) during an obfuscation process. According to some implementations, during an obfuscation process part of at least a given obfuscation rule of the security personalization registry is embedded by the security protection software into the application code (e.g. or_{1a-SR4}) and another part is stored in the protected mobile device software application data base (e.g. or_{1b-SPR41}). According to some implementations, the protected mobile device software application is programmed to use at least part of the embedded/stored obfuscation rules to properly execute application code instructions and/or to obtain/use application data as defined.

According to some implementations at least part of the obfuscation rules of the security personalization registry (I-SPR in the example) are obfuscated in relation to other obfuscation rules (e.g. or_{1b-SPR41} obfuscated in the protected mobile device software application in relation to or_{m-SR1}).

According to some implementations a protected mobile device software application installed in a user's mobile device is personalized with at least part of at least a given obfuscation rule, said part included in a life cycle security personalization registry (e.g. or_{1b-SPR33} included in SPR₃₃) and being stored during a security personalization process in the protected mobile device software application data base, the obfuscation rule protecting certain sensitive data and/or processes of / associated to the mobile device software application.

According to some implementations part of at least a given obfuscation rule, said part included in a life cycle security personalization registry (e.g. or_{2b-SPR33} included in SPR₃₃), is stored during a security personalization process in an obfuscated format in the data base of a protected mobile device software application installed in a user's mobile device, using for the obfuscation at least part of other given obfuscation rule (e.g. or_{2b-SPR33} obfuscated using at least part of or_{1a-SR3} and or_{1b-}SPR₃₃).

Figure 2.b relates to some implementations where a mobile device software application has been developed to perform functions associated to one service provider (service provider 1 in the context of 2.a to 2.1) that is the same entity than the provider of personalization services.

According to some implementations, different parts of the mobile device software application constitute different code domains, each one grouping one or more functions of the mobile device software application that are associated to the one service provider. Figure 2.b illustrates an example of a mobile device software application with the following code domains and functions associated to the one service provider:
- Code domain 1 (CD1) including functions (f1_{CD1}, f2_{CD1}, ...) of the mobile device software application;
- Code domain 2/1 (CD2/1) including functions (f1_{CD2/1}, f2_{CD2/1}, ...) of the mobile device software application;
- Code domain 2/2 (CD2/2) including functions (f1_{CD2/2}, f2_{CD2/2}, ...) of the mobile device software application;
- Code domain 3/1 (CD3/1) including functions (f1_{CD3/1}, f2_{CD3/1}, ...) of the mobile device software application;
- Code domain 3/2 (CD3/2) including functions (f1_{CD3/2}, f2_{CD3/2}, ...) of the mobile device software application;
- Code domain 4/1 (CD4/1) including functions (f1_{CD4/1}, f2_{CD4/1}, ...) of the mobile device software application;
- Code domain 4/2 (CD4/2) including functions (f1_{CD4/2}, f2_{CD4/2}, ...) of the mobile device software application;
- Code domain i/1 (CDi/1) including functions (f1_{CDi/1}, f2_{CDi/1}, ...) of the mobile device software application;
- Code domain i/2 (CDi/2) including functions (f1_{CDi/2}, f2_{CDi/2}, ...) of the mobile device software application;
- Code domain n/1 (CDn/1) including functions (f1_{CDn/1}, f2_{CDn/1}, ...) of the mobile device software application;
- Code domain n/2 (CDn/2) including functions (f1_{CDn/2}, f2_{CDn/2}, ...) of the mobile device software application;

According to some implementations:
- code instructions of (f1_{CD2/1}, f2_{CD2/1}, ...) in CD2/1 of the application are respectively equivalent in terms of functionality than code instructions of (f1_{CD3/1}, f2_{CD3/1}, ...) in CD3/1 of the application;
- and code instructions of (f1_{CD2/1}, f2_{CD2/1}, ...) in CD2/1 of the application, and code instructions of (f1_{CD3/1}, f2_{CD3/1}, ...) in CD3/1 of the application, are each one respectively equivalent in terms of functionality than code instructions of (f1_{CD4/1}, f2_{CD4/1}, ...) in CD4/1 of the application;
- and code instructions of (f1_{CD2/1}, f2_{CD2/1}, ...) in CD2/1 of the application, and code instructions of (f1_{CD3/1}, f2_{CD3/1}, ...) in CD3/1 of the application, ..., and code instructions of (f1_{CDn-1/1}, f2_{CDn-1/1}, ...) in CDn-1/1 of the application, are each one respectively equivalent in terms of functionality than code instructions of (f1_{CDn/1}, f2_{CDn/1}, ...) in CDn/1 of the application;
   and
- code instructions of (f1_{CD2/2}, f2_{CD2/2}, ...) in CD2/2 of the application are respectively equivalent in terms of functionality than code instructions of (f1_{CD3/2}, f2_{CD3/2}, ...) in CD3/2 of the application;
- and code instructions of (f1_{CD2/2}, f2_{CD2/2}, ...) in CD2/2 of the application, and code instructions of (f1_{CD3/2}, f2_{CD3/2}, ...) in CD3/2 of the application, are each one respectively equivalent in terms of functionality than code instructions of (f1_{CD4/2}, f2_{CD4/2}, ...) in CD4/2 of the application;
- and code instructions of (f1_{CD2/2}, f2_{CD2/2}, ...) in CD2/2 of the application, and code instructions of (f1_{CD3/2}, f2_{CD3/2}, ...) in CD3/2 of the application, ..., and code instruction of (f1_{CDn-1/2}, f2_{CDn-1/2}, ...) in CDn-1/2 of the application, are each one respectively equivalent in terms of functionality than code instructions of (f1_{CDn/2}, f2_{CDn/2}, ...) in CDn/2 of the application.

So advantageously, within those implementations the mobile device software application may achieve the same level of functionality using [(f1_{CDk/1}, f2_{CDk/1}, ...) in CDk/1 and (f1_{CDk/2}, f2_{CDk/2}, ...) in CDk/2] than using [(f1_{CDl/1}, f2_{CDl/1}, ...) in CDI/1 and (fl_{CDl/2}, f2_{CDI/2}, ...) in CDI/2], k and I within the range of 2 to n.

As already mentioned in connection to figure 1, step (2), the provider of personalization services uses a mobile device software application, a security personalization registry (e.g. I-SPR) and security protection software that are stored in one or more memories to generate by using one or more processing devices a protected mobile device software application that is personalized on security terms by using data of the security personalization registry.

Figure 2.b illustrates the security protection applied by the security protection software to the mobile device software application in a particular implementation. The protection process uses the initialization security personalization registry (I-SPR) described in figure 2.a to generate the security personalized protected mobile device software application.

In this implementation both the generic security sub-registries (SR₁, SR₂, SR₃, SR₄, ..., SRᵢ, ..., SRₙ) and the security personalization sub-registries (SPR₂₁, SPR₃₁, SPR₄₁, ..., SPRᵢ₁, ..., SPRₙ₁) of the I-SPR include security parameters (sp), obfuscation rules (or) and networks of checksums (ch), as those illustrated in figure 2.a. In this implementations at least part of the checksums of the networks of checksums of the security personalization registry are calculated as checksums of the application code and of security parameters of the security personalization registry.

Within this implementation an obfuscation process is applied by the security protection software to the mobile device software application code, and to security parameters of the security personalization registry that are at least partly embedded into the application code and/or that are at least partly stored into the application data base by the security protection software, and to checksums of the networks of checksums of the security personalization registry that are at least partly embedded into the application code and/or that are at least partly stored into the application data base by the security protection software. The details are as follows:
- SR1 data are embedded into the application code of CD1(f1_{CD1}, f2_{CD1}, ...) functions, and said application code of CD1(f1_{CD1}, f2_{CD1}, ...) functions, together with the SR1 embedded security parameters [sp_{1-SR1}, ..., sp_{r-SR1}] and the SR1 embedded networks of checksums [ch_{1-SR1}, ..., ch_{r-SR1}], are obfuscated using at least part of the embedded obfuscation rules [or_{1-SR1}, ..., or_{r-sR1}]. So CD1 functions become protected via the obfuscation of the CD1 functions code and the embedded SR1 security parameters and networks of checksums, by using the embedded obfuscation rules (e.g. part of them could be protected via other obfuscation rules). Said protection is illustrated in figure 2.b as P1_{SR1} (protection of CD1 using SR1).
- SR2 data are embedded into the application code of CD2/1(f1_{CD2/1}, f2_{CD2/1}, ...) and CD2/2(f1_{CD2/2}, f2_{CD2/2}, ...) functions, and said application code of CD2/1(f1_{CD2/1}, f2_{CD2/1}, ...) and CD2/2(f1_{CD2/2}, f2_{CD2/2}, ...) functions, together with the SR2 embedded security parameters [sp_{1a-SR2}, ..., sp_{m-SR2}] and the SR2 embedded networks of checksums [ch_{1a-SR2}, ..., ch_{m-SR2}], are obfuscated using obfuscation rules that are at least partly embedded into the application code of CD2/1(f1_{CD2/1}, f2_{CD2/1}, ...) and CD2/2(f1_{CD2/2}, f2_{CD2/2}, ...) functions (or_{1a-SR2}, ..., or_{m-SR2}) and that may also be at least partly stored into the corresponding part of the application data base (e.g. part of or_{1b-SPR21} and or_{2b-SPR21}). So CD2/1(f1_{CD2/1}, f2_{CD2/1}, ...) and CD2/2(f1_{CD2/2}, f2_{CD2/2}, ...) functions become protected via the obfuscation of the CD2/1(f1_{CD2/1}, f2_{CD2/1}, ...) and CD2/2(f1_{CD2/2}, f2_{CD2/2}, ...) functions code and the embedded SR2 security parameters and networks of checksums, by using obfuscation rules that are at least partly embedded into CD2/1(f1_{CD2/1}, f2_{CD2/1}, ...) and CD2/2(f1_{CD2/2}, f2_{CD2/2}, ...) functions and that may be at least partly stored into the application data base. Said protection is illustrated in figure 2.b as P2_{SR2} (protection of CD2/1 and CD2/2 based on embedded SR2 data).
- SPR21 data is stored in obfuscated format in a part of the application data base that is associated to CD2/1 and CD2/2 such that the application code of CD2/1 and CD2/2 functions become also protected via the SPR21 security parameters, obfuscation rules and networks of checksums. Said protection is illustrated in figure 2.b as P2_{SPR21} (protection of CD2/1 and CD2/2 based on storing SPR21 data).
   ∘ [sp_{1a-SR2}] and [sp_{1b-SPR2}] are the two parts of the same security parameter, and within this implementation [sp_{1a-SR2}] is embedded into CD2/1(f1_{CD2/1}, f2_{CD2/1}, ...).
   ∘ [or_{1a-SR2}] and [or_{1b-SPR21}] are the two parts of the same obfuscation rule, and within this implementation [or_{1a-SR2}] is embedded into CD2/1(f1_{CD2/1}, f2_{CD2/1}, ...).
   ∘ [ch_{1a-SR2}] and [ch_{1b-SPR21}] are the two parts of the same network of checksums, and within this implementation [ch_{1a-SR2}] is embedded into CD2/1(f1_{CD2/1}, f2_{CD2/1}, ...).
   ∘ [sp_{2a-SR2}] and [sp_{2b-SPR21}] are the two parts of the same security parameter, and within this implementation [sp_{2a-SR2}] is embedded into CD2/2(f1_{CD2/2}, f2_{CD2/2}, ...).
   ∘ [or_{2a-SR2}] and [or_{2b-SPR21}] are the two parts of the same obfuscation rule, and within this implementation [or_{2a-SR2}] is embedded into CD2/2(f1_{CD2/2}, f2_{CD2/2}, ...).
   ∘ [ch_{2a-SR2}] and [ch_{2b-SPR21}] are the two parts of the same network of checksums, and within this implementation [ch_{2a-SR2}] is embedded into CD2/2(f1_{CD2/2}, f2_{CD2/2}, ...).
- SRn data are embedded into the application code of CDn/1(f1_{CDn/1}, f2_{CDn/1}, ...) and CDn/2(f1_{CDn/2}, f2_{CDn/2}, ...) functions, and said application code of CDn/1(f1_{CDn/1}, f2_{CDn/1}, ...) and CDn/2(f1_{CDn/2}, f2_{CDn/2}, ...) functions, together with the SRn embedded security parameters [sp_{1a-SRn}, ..., sp_{t-SRn}] and the SRn embedded networks of checksums [ch_{1a-SRn}, ..., ch_{t-SRn}], are obfuscated using obfuscation rules that are at least partly embedded into the application code of CDn/1(f1_{CDn/1}, f2_{CDn/1}, ...) and CDn/2(f1_{CDn/2}, f2_{CDn/2}, ...) functions (or_{1a-SRn}, ..., or_{t-SRn}) and that may also be at least partly stored into the corresponding part of the application data base (e.g. part of or_{1b-SPRn1} and or_{2b-SPRn1}). So CDn/1(f1_{CDn/1}, f2_{CDn/1}, ...) and CDn/2(f1_{CDn/2}, f2_{CDn/2}, ...) functions become protected via the obfuscation of the CDn/1(f1_{CDn/1}, f2_{CDn/1}, ...) and CDn/2(f1_{CDn/2}, f2_{CDn/2}, ...) functions code and the embedded SRn security parameters and networks of checksums, by using obfuscation rules that are at least partly embedded into CDn/1(f1_{CDn/1}, f2_{CDn/1}, ...) and CDn/2(f1_{CDn/2}, f2_{CDn/2}, ...) functions and that may be at least partly stored into the application data base. Said protection is illustrated in figure 2.b as Pn_{SRn} (protection of CDn/1 and CDn/2 based on embedded SRn data).
- SPRn1 data is stored in obfuscated format in a part of the application data base that is associated to CDn/1 and CDn/2 such that the application code of CDn/1 and CDn/2 functions become also protected via the SPRn1 security parameters, obfuscation rules and networks of checksums. Said protection is illustrated in figure 2.b as Pn_{SPRn1} (protection of CDn/1 and CDn/2 based on storing SPRn1 data).
   ∘ [sp_{1a-SRn}] and [sp_{1b-SPRn1}] are the two parts of the same security parameter, and within this implementation [sp_{1a-SRn}] is embedded into CDn/1(f1_{CDn/1}, f2_{CDn/1}, ...).
   ∘ [or_{1a-SRn}] and [or_{1b-SPRn1}] are the two parts of the same obfuscation rule, and within this implementation [or_{1a-SRn}] is embedded into CDn/1(f1_{CDn/1}, f2_{CDn/1}, ...).
   ∘ [ch_{1a-SRn}] and [ch_{1b-SPRn1}] are the two parts of the same network of checksums, and within this implementation [ch_{1a-SRn}] is embedded into CDn/1(f1_{CDn/1}, f2_{CDn/1}, ...).
   ∘ [sp_{2a-SRn}] and [sp_{2b-SPRn1}] are the two parts of the same security parameter, and within this implementation [sp_{2a-SRn}] is embedded into CDn/2(f1_{CDn/2}, f2_{CDn/2}, ...).
   ∘ [or_{2a-SRn}] and [or_{2b-SPRn1}] are the two parts of the same obfuscation rule, and within this implementation [or_{2a-SRn}] is embedded into CDn/2(f1_{CDn/2}, f2_{CDn/2}, ...).
   ∘ [ch_{2a-SRn}] and [ch_{2b-SPRn1}] are the two parts of the same network of checksums, and within this implementation [ch_{2a-SRn}] is embedded into CDn/2(f1_{CDn/2}, f2_{CDn/2}, ...).

When code instructions of a given function or set of functions of the protected mobile device software application are executed by one or more processors of the mobile device, a regular operation of the said function or set of functions may require using certain security parameters, obfuscation rules and/or network of checksums. According to some implementations, at least parts of those security parameters, obfuscation rules and/or network of checksums are to be stored (/and obfuscated) in the application data base, and if said parts are not available in the corresponding part of the application data base, or the values are not correct, then said function or set of functions are not enabled for regular operation, and the code domain(s) that includes this function or set of functions is (/are) also not enabled for regular operation in connection to said function or set of functions.

An attempt to execute code instructions of one of those functions without the proper data being available into the corresponding part of the application data base may cause a defined/expected protection reaction of the protected mobile device software application (e.g. the application stop its execution), may cause a later rejection by the service provider of a service request received from the protected mobile device software application, etc., as consequence of the one or more functions not being enabled for regular operation.

Figure 2.c relates to some implementations of applying a security protection to functions into CD2/1, CD2/2, CD3/1, CD3/2, ..., CDn/1 and CDn/2, in el context of generating a protected mobile device software application as the one referred to in figure 2.b.

Within this embodiment, in terms of security parameters of SR2 and SPR21:
- [sp_{1a-SR2}, sp_{3-SR2}, sp_{4-SR2} ..., sp_{g-SR2}] are embedded (i.e. hard-coded) into the application code of CD2/1(f1_{CD2/1}, f2_{CD2/1}, ...) functions.
- [sp_{1a-SR2}] and [sp_{1b-SPR21}] are the two parts of the same security parameter. Figure 2.c illustrates that [sp_{1a-SR2}] is embedded into the application code of CD2/1(f1_{CD2/1}, f2_{CD2/1}, ...) functions and [sp_{1b-SPR21}] is stored in a part of the application data base that is associated to CD2/1. Figure 2.c further refers to the possibility of [sp_{1b-SPR21}] being stored in obfuscated format as described in figure 2.d.
- [sp_{2a-SR2}, sp_{(g+1)-SR2}, sp_{(g+2)-SR2} ..., sp_{m-SR2}] are embedded into the application code of CD2/2(f1_{CD2/2}, f2_{CD2/2}, ...) functions.
- [sp_{2a-SR2}] and [sp_{2b-SPR21}] are the two parts of the same security parameter. Figure 2.c illustrates that [sp_{2a-SR2}] is embedded into the application code of CD2/2(f1_{CD2/2}, f2_{CD2/2}, ...) functions and [sp_{2b-SPR21}] is stored in a part of the application data base that is associated to CD2/2. Figure 2.c further refers to the possibility of [sp_{2b-SPR21}] being stored in obfuscated format as described in figure 2.d.

In terms of the networks of checksums of SR2 and SPR21:
- [ch_{1a-SR2}, ch_{3-SR2}, ch_{4-SR2} ..., ch_{g-SR2}] and [ch_{1b-SPR21}] are calculated as checksums of parts of the application code of CD2/1(f1_{CD2/1}, f2_{CD2/1}, ...) functions and of at least parts of one or more security parameters [sp_{1a-SR2}, sp_{3-SR2}, sp_{4-SR2} ..., sp_{g-SR2}] embedded into the application code of CD2/1(f1_{CD2/1}, f2_{CD2/1}, ...) functions.
- [ch_{1a-SR2}, ch_{3-SR2}, Ch_{4-SR2} ..., ch_{g-SR2}] are embedded (hard-coded) into the application code of CD2/1(f1_{CD2/1}, f2_{CD2/1}, ...) functions.
- [ch_{1a-SR2}] and [ch_{1b-SPR21}] are the two parts of the same network of checksums. Figure 2.c illustrates that [ch_{1a-SR2}] is embedded into the application code of CD2/1(f1_{CD2/1}, f2_{CD2/1}, ...) functions and [ch_{1b-SPR21}] is stored in a part of the application data base that is associated to CD2/1. Figure 2.c further refers to the possibility of [ch_{1b-SPR21}] being stored in obfuscated format as described in figure 2.d.
- [ch_{2a-SR2}, ch_{(g+1)-SR2}, ch_{(g+2)-SR2} ..., ch_{m-SR2}] and [ch_{2b-SPR21}] are calculated as checksums of parts of the application code of CD2/2(f1_{CD2/2}, f2_{CD2/2}, ...) functions and of at least parts of one or more security parameters [sp_{2a-SR2}, [sp_{(g+1)-SR2}, sp_{(g+2)-SR2} ..., sp_{m-SR2}] embedded into the application code of CD2/2(f1_{CD2/2}, f2_{CD2/2}, ...) functions.
- [ch_{2a-SR2}, ch_{(g+1)-SR2}, ch_{(g+2)-SR2} ..., ch_{m-SR2}] are embedded (hard-coded) into the application code of CD2/2(f1_{CD2/2}, f2_{CD2/2}, ...) functions.
- [ch_{2a-SR2}] and [ch_{2b-SPR21}] are the two parts of the same network of checksums. Figure 2.c illustrates that [ch_{2a-SR2}] is embedded into the application code of CD2/2(f1_{CD2/2}, f2_{CD2/2}, ...) functions and [ch_{2b-SPR21}] is stored in a part of the application data base that is associated to CD2/2. Figure 2.c further refers to the possibility of [ch_{2b-SPR21}] being stored in obfuscated format as described in figure 2.d.

In terms of obfuscation rules of SR2 and SPR21:
- [or_{1a-SR2}, or_{3-SR2}, or_{4-SR2} ..., or_{g-SR2}] are embedded into the application code of CD2/1(f1_{CD2/1}, f2_{CD2/1}, ...) functions.
- The application code of CD2/1(f1_{CD2/1}, f2_{CD2/1}, ...) functions together with the [sp_{1a-SR2}, sp_{3-SR2}, sp_{4-SR2} ..., sp_{g-SR2}] and [ch_{1a-SR2}, ch_{3-SR2}, ch_{4-SR2} ..., ch_{g-SR2}] embedded into the application code of CD2/1(f1_{CD2/1}, f2_{CD2/1}, ...) functions are obfuscated using [or_{1a-SR2}, or_{3-SR2}, or_{4-SR2} ..., or_{g-SR2}] and [or_{1b-SPR21}].
- [or_{1a-SR2}] and [or_{1b-SPR21}] are the two parts of the same obfuscation rule. Figure 2.c illustrates that [or_{1a-SR2}] is embedded into the application code of CD2/1(f1_{CD2/1}, f2_{CD2/1}, ...) functions and [or_{1b-SPR21}] is stored in a part of the application data base that is associated to CD2/1. Figure 2.c further refers to the possibility of [or_{1b-SPR21}] being stored in obfuscated format as described in figure 2.d.
- [or_{2a-SR2}, or_{(g+1)-SR2}, or_{(g+2)-SR2} ..., or_{m-SR2}] are embedded into the application code of CD2/2(f1_{CD2/2}, f2_{CD2/2}, ...) functions.
- The application code of CD2/2(f1_{CD2/2}, f2_{CD2/2}, ...) functions together with the [sp_{2a-SR2}, sp_{(g+1)-}SR₂, sp_{(g+2)-SR2} ..., sp_{m-SR2}] and [ch_{2a-SR2}, ch_{(g+1)-SR2}, ch_{(g+2)-SR2} ..., ch_{m-SR2}] embedded into the application code of CD2/2(f1_{CD2/2}, f2_{CD2/2}, ...) functions are obfuscated using [or_{2a-SR2}, or_{(g+1)-SR2}, or_{(g+2)-SR2}..., or_{m-SR2}] and [or_{2b-SPR21}].
- [or_{2a-SR2}] and [or_{2b-SPR21}] are the two parts of the same obfuscation rule. Figure 2.c illustrates that [or_{2a-SR2}] is embedded into the application code of CD2/2(f1_{CD2/2}, f2_{CD2/2}, ...) functions and [or_{2b-SPR21}] is stored in a part of the application data base that is associated to CD2/2. Figure 2.c further refers to the possibility of [or_{2b-SPR21}] being stored in obfuscated format as described in figure 2.d.

In terms of security parameters of SRi and SPRi1:
In terms of the networks of checksums of SRi and SPRi1:
In terms of obfuscation rules of SRi and SPRi1:
Within this embodiment, in terms of security parameters of SRn and SPRn1:
- [sp_{1a-SRn}, sp_{3-SRn}, sp_{4-SRn} ..., sp_{j-SRn}] are embedded (i.e. hard-coded) into the application code of CDn/1(f1_{CDn/1}, f2_{CDn/1}, ...) functions.
- [sp_{1a-SRn}] and [sp_{1b-SPRn1}] are the two parts of the same security parameter. [sp_{1a-SRn}] is embedded into the application code of CDn/1(f1_{CDn/1}, f2_{CDn/1}, ...) functions and [sp_{1b-SPRn1}] is stored in a part of the application data base that is associated to CDn/1.
- [sp_{2a-SRn}, sp_{(j+1)-SRn}, sp_{(j+2)-SRn} ..., sp_{t-SRn}] are embedded into the application code of CDn/2(f1_{CDn/2}, f2_{CDn/2}, ...) functions.
- [sp_{2a-SRn}] and [sp_{2b-SPRn1}] are the two parts of the same security parameter. [sp_{2a-SRn}] is embedded into the application code of CDn/2(f1_{CDn/2}, f2_{CDn/2}, ...) functions and [sp_{2b-SPRn1}] is stored in a part of the application data base that is associated to CDn/2.

In terms of the networks of checksums of SRn and SPRn1:
- [ch_{1a-SRn}, ch_{3-SRn}, ch_{4-SRn} ..., ch_{j-SRn}] and [ch_{1b-SPRn1}] are calculated as checksums of parts of the application code of CDn/1(f1_{CDn/1}, f2_{CDn/1}, ...) functions and of at least parts of one or more security parameters [sp_{1a-SRn}, sp_{3-SRn}, sp_{4-SRn} ..., sp_{j-SRn}] embedded into the application code of CDn/1(f1_{CDn/1}, f2_{CDn/1}, ...) functions.
- [ch_{1a-SRn}, ch_{3-SRn}, ch_{4-SRn} ..., ch_{j-SRn}] are embedded (hard-coded) into the application code of CDn/1(f1_{CDn/1}, f2_{CDn/1}, ...) functions.
- [ch_{1a-SRn}] and [ch_{1b-SPRn1}] are the two parts of the same network of checksums. [ch_{1a-SRn}] is embedded into the application code of CDn/1(f1_{CDn/1}, f2_{CDn/1}, ...) functions and [ch_{1b-SPRn1}] is stored in a part of the application data base that is associated to CDn/1.
- [ch_{2a-SRn}, ch_{(j+1)-SRn}, ch_{(j+2)-SRn} ..., ch_{t-SRn}] and [ch_{2b-SPRn1}] are calculated as checksums of parts of the application code of CDn/2(f1_{CDn/2}, f2_{CDn/2}, ...) functions and of at least parts of one or more security parameters [sp_{2a-SRn}, sp_{(j+1)-SRn}, sp_{(j+2)-SRn} ..., sp_{t-SRn}] embedded into the application code of CDn/2(f1_{CDn/2}, f2_{CDn/2}, ...) functions.
- [ch_{2a-SRn}, ch_{(j+1)-SRn}, ch_{(j+2)-SRn} ..., ch_{t-SRn}] are embedded (hard-coded) into the application code of CDn/2(f1_{CDn/2}, f2_{CDn/2}, ...) functions.
- [ch_{2a-SRn}] and [Ch_{2b-SPRn1}] are the two parts of the same network of checksums. [ch_{2a-SRn}] is embedded into the application code of CDn/2(f1_{CDn/2}, f2_{CDn/2}, ...) functions and [ch_{2b-SPRn1}] is stored in a part of the application data base that is associated to CDn/2.

In terms of obfuscation rules of SRn and SPRn1:
- [or_{1a-SRn}, or_{3-SRn}, or_{4-SRn} ..., or_{j-SRn}] are embedded into the application code of CDn/1(f1_{CDn/1}, f2_{CDn/1}, ...) functions.
- The application code of CDn/1(f1_{CDn/1}, f2_{CDn/1}, ...) functions together with the [sp_{1a-SRn}, sp_{3-SRn}, sp_{4-SRn} ..., sp_{j-SRn}] and [ch_{1a-SRn}, ch_{3-SRn}, ch_{4-SRn} ..., ch_{j-SRn}] embedded into the application code of CDn/1(f1_{CDn/1}, f2_{CDn/1}, ...) functions are obfuscated using [or_{1a-SRn}, or_{3-SRn}, or_{4-SRn} ..., or_{j-SRn}] and [or_{1b-SPRn1}].
- [or_{1a-SRn}] and [or_{1b-SPRn1}] are the two parts of the same obfuscation rule. [or_{1a-SRn}] is embedded into the application code of CDn/1(f1_{CDn/1}, f2_{CDn/1}, ...) functions and [or_{1b-SPRn1}] is stored in a part of the application data base that is associated to CDn/1.
- [or_{2a-SRn}, or_{(j+1)-SRn}, or_{(j+2)-SRn} ..., or_{t-SRn}] are embedded into the application code of CDn/2(f1_{CDn/2}, f2_{CDn/2}, ...) functions.
- The application code of CDn/2(f1_{CDn/2}, f2_{CDn/2}, ...) functions together with the [sp_{2a-SRn}, sp₍ⱼ₊₁₎₋SRₙ, sp_{(j+2)-SRn} ..., sp_{t-SRn}] and [ch_{2a-SRn}, ch_{(j+1)-SRn}, ch_{(j+2)-SRn} ..., ch_{t-SRn}] embedded into the application code of CDn/2(f1_{CDn/2}, f2_{CDn/2}, ...) functions are obfuscated using [or_{2a-SRn}, or_{(j+1)-SRn}, or_{(j+2)-SRn} ..., or_{t-SRn}] and [or_{2b-SPRn1}].
- [or_{2a-SRn}] and [or_{2b-SPRn1}] are the two parts of the same obfuscation rule. [or_{2a-SRn}] is embedded into the application code of CDn/2(f1_{CDn/2}, f2_{CDn/2}, ...) functions and [or_{2b-SPRn1}] is stored in a part of the application data base that is associated to CDn/2.

Figure 2.d relates to some implementations associated to the obfuscation of at least parts of security parameters, obfuscation rules and networks of checksums data in a part of the application data base that is associated to a given code domain, in el context of generating a protected mobile device software application as the one referred to in figures 2.b and 2.c.

As described in figure 2.c, in relation to SRx and SPRx1 (x = 2, 3, 4,..., i, ..., n)
- [sp_{1a-SRx}] and [sp_{1b-SPRx1}] are the two parts of the same security parameter and [sp_{1b-SPRx1}] is stored in a part of the application data base that is associated to CDx/1.
- [ch_{1a-SRx}] and [ch_{1b-SPRx1}] are the two parts of the same network of checksums and [ch_{1b-SPRx1}] is stored in a part of the application data base that is associated to CDx/1.
- [or_{1a-SRx}] and [or_{1b-SPRx1}] are the two parts of the same obfuscation rule and [or_{1b-SPRx1}] is stored in a part of the application data base that is associated to CDx/1.

According to some implementations [sp_{1b-SPRx1}], [ch_{1b-SPRx1}] and [or_{1b-SPRx1}] are obfuscated by the security protection software before being stored in the corresponding part of the application database associated to CDx/1 (figure 2.d illustrates the storage into CDx/1 - SPRx1 part of the application database).

Figure 2.d shows a process of obfuscating [sp_{1b-SPRx1}], [ch_{1b-SPRx1}] and [or_{1b-SPRx1}] by using an obfuscation algorithm (e.g. a BPS data preserving format algorithm) and a key, to protect those CDx/1 security personalization data. In particular, figure 2.d illustrates an obfuscation key constituted by a checksum x/1 of the protected mobile device software application, a security parameter that is hard-coded (embedded) in code domain CD1 (in association to CDx/1) as part of P1_{SR1}, and at least a part of a device identifier (e.g. a part of the MSISDN; for testing purposes by the provider of personalization services, a testing device identifier - DID_{TEST} - may be used as part of the obfuscation key, as illustrated in figure 2.d).

Within these implementations CDx/1 are first code domains and CD1 is a second code domain, and CDx/1 are paired on security terms to CD1 via the personalization of [sp_{1b-SPRx1}], [ch_{1b-SPRx1}] and [or_{1b-SPRx1}] in obfuscated format into the corresponding part of the application data base.

In the embodiment illustrated in figure 2.d, each CDx/1 - CD1 pairing depends on a security parameter that is hard-coded (embedded) in the application code of CD1 (in association to CDx/1). Said security parameter is required by the application code of CDx/1 to properly de-obfuscate [sp_{1b-SPRx1}], [ch_{1b-SPRx1}] and [or_{1b-SPRx1}] for usage, as defined, by the application code of CDx/1(f1_{CDx/1}, f2_{CDx/1}, ...). So a security parameter available in CD1 is required to enable CDx/1 for regular operation.

In a particular example, the CD1 security parameter has been obfuscated using an obfuscation rule embedded in the application code of CD1, so the obfuscation rule available in CD1 (in association to the security parameter) is required to enable CDx/1 for regular operation (i.e. it is required to de-obfuscate the security parameter, that is required as part of the key to de-obfuscate [sp_{1b-SPRx1}], [ch_{1b-SPRx1}] and [or_{1b-SPRx1}], so the obfuscation rule is required to enable CDx/1 for regular operation).

In a particular example, the security parameter has been used to calculate a network of checksums that is embedded in the application code of CD1, so proper verification of the network of checksums by CD1 application code is required to enable CDx/1 for regular operation (e.g. if the network of checksums is not properly verified, the CD1 application code will stop its execution, so the CD1 security parameter will not be obtained, and CDx/1 will not be enabled for regular operation).

Advantageously, the generated application comprises several code domains, related to the one or more service providers, where one or more first code domains (e.g. CDx/1) are paired on security terms to one or more second code domains (e.g. CD1) via the security personalization ([sp_{1b-SPRx1}], [ch_{1b-SPRx1}] and [or_{1b-SPRx1}] stored in the application data base in obfuscated format), said personalization related to security parameters and/or obfuscation rules and/or code checksums data that are at least partly available in the one or more second code domains (the above referred security parameter and/or obfuscation rule and/or checksums data into CD1) and that are required to enable the one or more first code domains for regular operation (e.g. that is/are required to de-obfuscate ([sp_{1b-SPRx1}], [ch_{1b}-_{SPRx1}] and [or_{1b}-_{SPRx1}] for usage by CDx/1).

According to some implementations each of [sp_{1b-SPRx1}], [ch_{1b-SPRx1}] and [or_{1b-SPRx1}] are obfuscated by using a different obfuscation key. In a particular example:
- The key used to obfuscate [sp_{1b-SPRx1}] is constituted by a checksum of the protected mobile device software application, a security parameter (e.g. [sp_{ix-SR1}]) that is hard-coded (embedded) in the application code of CD1 (in association to CDx/1) as part of P1_{SR1}, and a part of a device identifier (e.g. the MSISDN or a calculation based upon the MSISDN, the MAC address, etc.).
- The key used to obfuscate [ch_{1b-SPRx1}] is constituted by a checksum of the protected mobile device software application, a security parameter (e.g. [sp_{jx-SR1}]) that is hard-coded (embedded) in the application code of CD1 (in association to CDx/1) as part of P1_{SR1}, and a part of a device identifier.
- The key used to obfuscate [or_{1b-SPRx1}] is constituted by a checksum of the protected mobile device software application, a security parameter (e.g. [sp_{kx-SR1}]) that is hard-coded (embedded) in the application code of CD1 (in association to CDx/1) as part of P1_{SR1}, and a part of a device identifier.

For testing purposes by the provider of personalization services, a testing device identifier - DID_{TEST} - may be used as part of the corresponding obfuscation key.

Within these implementations, CDx/1 (first code domains) are also paired on security terms to CD1 (second code domain) via the personalization of [sp_{1b-SPRx1}], [ch_{1b-SPRx1}] and [or_{1b-SPRx1}] in obfuscated format into the corresponding part of the application data base.

Each CDx/1 - CD1 pairing depends, in terms of [sp_{1b-SPRx1}] / [ch_{1b-SPRx1}] / [or_{1b-SPRx1}], respectively on [sp_{ix-SR1}] / [sp_{jx-SR1}] / [sp_{kx-SR1}] security parameter. Said [sp_{ix-SR1}] / [sp_{jx-SR1}] / [sp_{kx-SR1}] security parameter is required by the application code of CDx/1 to respectively and properly de-obfuscate [sp_{1b-SPRx1}] / [ch_{1b-SPRx1}] / [or_{1b-SPRx1}] for usage, as defined, by the application code of CDx/1(f1_{CDx/1}, f2_{cDx/1}, ...). So security parameters available in CD1 are required to enable CDx/1 for regular operation.

In a particular example, the CD1 security parameters [sp_{ix-SR1}] / [sp_{jx-SR1}] / [sp_{kx-SR1}] have been obfuscated by using one or more obfuscation rules embedded in the application code of CD1, so obfuscation rules available in CD1 (in association to the security parameters) are required to enable CDx/1 for regular operation (i.e. they are required to de-obfuscate the security parameters, that are required to calculate the de-obfuscation keys, so the obfuscation rules are required to enable CDx/1 for regular operation).

In a particular example, the security parameters [sp_{ix-SR1}] / [sp_{jx-SR1}] / [sp_{kx-SR1}] have been used to calculate one or more networks of checksums that are embedded in the application code of CD1, so proper verification of the networks of checksums by CD1 application code is required to enable CDx/1 for regular operation (e.g. if the networks of checksums are not properly verified, the CD1 application code will stop its execution, so the CD1 security parameters will not be obtained, and CDx/1 will not be enabled for regular operation).

Advantageously, the generated application comprises several code domains, related to the one or more service providers, where one or more first code domains (e.g. CDx/1) are paired on security terms to one or more second code domains (e.g. CD1) via the security personalization ([sp_{1b-SPRx1}], [ch_{1b-SPRx1}] and [or_{1b-SPRx1}] stored in the application data base in obfuscated format), said personalization related to security parameters and/or obfuscation rules and/or code checksums data that are at least partly available in the one or more second code domains (the above referred security parameter and/or obfuscation rule and/or checksums data into CD1) and that are required to enable the one or more first code domains for regular operation (e.g. that is/are required to de-obfuscate ([sp_{1b-SPRx1}], [ch_{1b-SPRx1}] and [or_{1b-SPRx1}] for usage by CDx/1)

As also described in figure 2.c, in relation to SRx and SPRx1 (x = 2, 3, 4,..., i, ..., n)
- [sp_{2a-SRx}] and [sp_{2b-SPRx1}] are the two parts of the same security parameter and [sp_{2b-SPRx1}] is stored in a part of the application data base that is associated to CDx/2.
- [ch_{2a-SRx}] and [ch_{2b-SPRx1}] are the two parts of the same network of checksums and [ch_{2b-SPRx1}] is stored in a part of the application data base that is associated to CDx/2.
- [or_{2a-SRx}] and [or_{2b-SPRx1}] are the two parts of the same obfuscation rule and [or_{2b-SPRx1}] is stored in a part of the application data base that is associated to CDx/2.

According to some implementations [sp_{2b-SPRx1}], [ch_{2b-SPRx1}] and [or_{2b-SPRx1}] are obfuscated by the security protection software before being stored in the corresponding part of the application database associated to CDx/2 (figure 2.d illustrates the storage into CDx/2 - SPRx1 part of the application database).

Figure 2.d shows a process of obfuscating [sp_{2b-SPRx1}], [ch_{2b-SPRx1}] and [or_{2b-SPRx1}] by using an obfuscation algorithm and a key, to protect those CDx/2 security personalization data. In particular, figure 2.d illustrates an obfuscation key constituted by a checksum x/2 of the protected mobile device software application, a security parameter that is at least partly hard-coded (embedded) in code domain CDx/1 (in association to CDx/2) as part of Px_{SRx}, and at least a part of a device identifier (e.g. a part of the MSISDN; for testing purposes by the provider of personalization services, a testing device identifier - DID_{TEST} - may be used as part of the obfuscation key, as illustrated in figure 2.d).

According to some implementations the security parameter is at least partly hard-coded in code domain CDx/1 and partly stored in obfuscated format in a part of the application data base that is associated to CDx/1. In a particular example, the part hard-coded in code domain CDx/1 (in association to CDx/2) is at least a part of [sp_{1a-SRx}] and the part stored in the application data base is at least a part of [sp_{1b-SPRx1}] (that in this respect is also in association to CDx/2). Advantageously, within this example, de-obfuscating [sp_{2b-SPRx1}], [ch_{2b-SPRx1}] and [or_{2b-SPRx1}] requires prior personalization of [sp_{1b-SPRx1}] into the corresponding part of the application data base (i.e. into CDx/1 - SPRx/1) and its de-obfuscation for usage in the calculation of the obfuscation key that protects CDx/2 security personalization data.

Within these implementations CDx/1 are first code domains and CDx/2 are another first code domains and CDx/2 are respectively paired on security terms to CDx/1 via the personalization of [sp_{2b-SPRx1}], [ch_{2b-SPRx1}] and [or_{2b-SPRx1}] in obfuscated format into the corresponding part of the application data base (in the example above each CDx/2 - CDx/1 pairing depends on a part of a security parameter that is hard-coded (embedded) in the application code of CDx/1 and a part of that security parameter that is stored in the application data base)

So said at least part of [sp_{1a-SRx}] / [sp_{1b-SPRx1}] security parameter is required by the application code of CDx/2 to properly de-obfuscate [sp_{2b-SPRx1}], [ch_{2b-SPRx1}] and [or_{2b-SPRx1}] for usage, as defined, by the application code of CDx/2(f1_{CDx/2}, f2_{CDx/2}, ...). So within these implementations at least a part of a security parameter available in a part of the application data base that is associated to CDx/1 (i.e. into CDx/1 - SPRx1) is required to enable CDx/2 for regular operation.

In a particular example, the part [sp_{1a-SRx}] of the security parameter has been obfuscated using an obfuscation rule that is partly hard-coded in code domain CDx/1 [e.g. at least part of or_{1a-SRx}] and partly stored in obfuscated format in a part of the application data base that is associated to CDx/1 [e.g. at least part of or_{1b-SPRx1}]. So within these implementations at least a part of an obfuscation rule available in a part of the application data base that is associated to CDx/1 (i.e. into CDx/1 - SPRx1) is required to enable CDx/2 for regular operation (i.e. it is required to de-obfuscate a part of the security parameter, that is required as part of the key to de-obfuscate [sp_{2b-SPRx1}], [ch_{2b-SPRx1}] and [or_{2b-SPRx1}], so the part of the obfuscation rule available in the corresponding part of the application data base is required to enable CDx/2 for regular operation).

In a particular example, the part [sp_{1a-SRx}] of the security parameter has been used to calculate a network of checksums that is partly hard-coded in code domain CDx/1 [e.g. ch_{1a-SRx}] and partly stored in obfuscated format in a part of the application data base that is associated to CDx/1 [e.g. ch_{1b-SPRx1}]. Within this example, proper verification of the part of the network of checksums available in a part of the application data base that is associated to CDx/1 (i.e. into CDx/1 - SPRx1) is required to enable CDx/2 for regular operation (e.g. if the network of checksums is not properly verified, the CDx/1 application code will stop its execution, so the CDx/1 security parameter will not be obtained, and CDx/2 will not be enabled for regular operation).

Advantageously, another one or more first code domains (e.g. CDx/2) are paired on security terms to one or more first code domains (e.g. CDx/1) via the security personalization ([sp_{2b-SPRx1}], [ch_{2b-SPRx1}] and [or_{2b-SPRx1}] stored in the application data base in obfuscated format), said personalization related to security parameters and/or obfuscation rules and/or code checksums data that are at least partly available in the one or more first code domains (the above referred security parameter and/or obfuscation rule and/or checksums data into CDx/1) and that are required to enable the another one or more first code domains for regular operation (e.g. that is/are required to de-obfuscate [sp_{2b-SPRx1}], [ch_{2b-SPRx1}] and [or_{2b-SPRx1}] for usage by CDx/2).

According to some implementations each of [sp_{2b-SPRx1}], [ch_{2b-SPRx1}] and [or_{2b-SPRx1}] are obfuscated by using a different obfuscation key. In a particular example:
- The key used to obfuscate [sp_{2b-SPRx1}] is constituted by a checksum of the protected mobile device software application, a security parameter (e.g. comprising a part [sp_{1a1-SRx}] that is hard-coded (embedded) in the application code of CDx/1 and a part [sp_{1b1-SPRx1}] that is stored in obfuscated format in the application data base) and a part of a device identifier (e.g. the MSISDN or a calculation based upon the MSISDN, the MAC address, etc.).
- The key used to obfuscate [ch_{2b-SPRx1}] is constituted by a checksum of the protected mobile device software application, a security parameter (e.g. comprising a part [sp_{1a2-SRx}] that is hard-coded (embedded) in the application code of CDx/1 and a part [sp_{1b2-SPRx1}] that is stored in obfuscated format in the application data base) and a part of a device identifier.
- The key used to obfuscate [or_{2b-SPRx1}] is constituted by a checksum of the protected mobile device software application, a security parameter (e.g. comprising a part [sp_{1a3-SRx}] that is hard-coded (embedded) in the application code of CDx/1 and a part [sp_{1b3-SPRx1}] that is stored in obfuscated format in the application data base) and a part of a device identifier.

For testing purposes by the provider of personalization services, a testing device identifier - DID_{TEST} - may be used as part of the corresponding obfuscation key.

Advantageously, within this example, de-obfuscating [sp_{2b-SPRx1}], [ch_{2b-SPRx1}] and [or_{2b-SPRx1}] requires prior personalization of [sp_{1b1-SPRx1}], [sp_{1b2-SPRx1}] and [sp_{1b3-SPRx1}] (which e.g. may be different parts of [sp_{1b-SPRx1}]) into the corresponding part of the application data base (i.e. into CDx/1 - SPRx/1) and its de-obfuscation for usage in the calculation of the respective obfuscation key that protects the related CDx/2 security personalization data.

Within these implementations CDx/1 are first code domains and CDx/2 are another first code domains and CDx/2 are respectively paired on security terms to CDx/1 via the personalization of [sp_{2b-SPRx1}], [ch_{2b-SPRx1}] and [or_{2b-SPRx1}] in obfuscated format into the corresponding part of the application data base. Each CDx/2 - CDx/1 pairing depends, in terms of [sp_{2b-SPRx1}] / [ch_{2b-SPRx1}] / [or_{2b-SPRx1}], respectively on [sp_{1a1-SRx}] & [sp_{1b1-SPRx1}] / [sp_{1a2-SRx}] & [sp_{1b2-SPRx1}] / [sp_{1a3-SRx}] & [sp_{1b3-SPRx1}] security parameter.

So said [sp_{1a1-SRx}] & [sp_{1b1-SPRx1}] / [sp_{1a2-SRx}] & [sp_{1b2-SPRx1}] / [sp_{1a3-SRx}] & [sp_{1b3-SPRx1}] security parameter is required by the application code of CDx/2 to respectively and properly de-obfuscate [sp_{2b-SPRx1}], [ch_{2b-SPRx1}] and [or_{2b-SPRx1}] for usage, as defined, by the application code of CDx/2(f1_{cDx/2}, f2_{CDx/2}, ...). So within these implementations at least a part of security parameters available in a part of the application data base that is associated to CDx/1 (i.e. into CDx/1 - SPRx1) is required to enable CDx/2 for regular operation.

In a particular example, the part [sp_{1a1-SRx}] / [sp_{1a2-SRx}] / [sp_{1a3-SRx}] of the respective security parameter have been obfuscated using one or more obfuscation rules that are partly hard-coded in code domain CDx/1 and partly stored in obfuscated format in a part of the application data base that is associated to CDx/1. So within these implementations at least a part of one or more obfuscation rules available in a part of the application data base that is associated to CDx/1 (i.e. into CDx/1 - SPRx1) is required to enable CDx/2 for regular operation (i.e. it is / they are required to de-obfuscate a part of the security parameters, that are required to calculate the de-obfuscation keys, so the part(s) of the obfuscation rule(s) available in the corresponding part of the application data base in association to CDx/1 is/are required to enable CDx/2 for regular operation).

In a particular example, the parts [sp_{1a1-SRx}] / [sp_{1a2-SRx}] / [sp_{1a3-SRx}] of the security parameters have been used to calculate one or more network of checksums that are partly hard-coded in code domain CDx/1 and partly stored in obfuscated format in a part of the application data base that is associated to CDx/1. Within this example, proper verification of the part of the networks of checksums available in a part of the application data base that is associated to CDx/1 (i.e. into CDx/1 - SPRx1) is required to enable CDx/2 for regular operation (e.g. if the networks of checksums are not properly verified, the CDx/1 application code will stop its execution, so the CDx/1 security parameter will not be obtained, and CDx/2 will not be enabled for regular operation).

Advantageously, another one or more first code domains (e.g. CDx/2) are paired on security terms to one or more first code domains (e.g. CDx/1) via the security personalization ([sp_{2b-SPRx1}], [ch_{2b-SPRx1}] and [or_{2b-SPRx1}] stored in the application data base in obfuscated format), said personalization related to security parameters and/or obfuscation rules and/or code checksums data that are at least partly available in the one or more first code domains (the above referred security parameter and/or obfuscation rule and/or checksums data into CDx/1) and that are required to enable the another one or more first code domains for regular operation (e.g. that is/are required to de-obfuscate [sp_{2b-SPRx1}], [ch_{2b-SPRx1}] and [or_{2b-SPRx1}] for usage by CDx/2).

Figure 2.b has been described above in connection to the generation of a security personalized protected mobile device software application, associated to the security personalization registry I-SPR. The application comprises several code domains, each one grouping one or more functions of the mobile device software application that are associated to one service provider.

As already detailed above in connection to figure 2.b, according to some implementations the mobile device software application may achieve the same level of functionality using [(f1_{CDk/1}], f2_{CDk/1}, ...) in CDk/1 and (f1_{CDk/2}, f2_{CDk/2}, ...) in CDk/2] than using [(f1_{CDl/1}, f2_{CDl/1}, ...) in CDI/1 and (f1_{CDl/2}, f2_{CDl/2}, ...) in CDI/2], k and I within the range of 1 to n.

In the implementation illustrated in figure 2.b, an obfuscation process is applied by the security protection software to the mobile device software application code, and to security parameters of the security personalization registry, and to checksums of the networks of checksums of the security personalization registry.

According to some implementations, once the protected mobile device software application has been generated, the provider of personalization services verifies that the security protection has been properly applied, by using a security parameter (sp_{CDs-assignment}] that is available into the corresponding part of the application data base (as illustrated in figure 2.b) and that permits to assign for execution by a given mobile device a given set of code domains, or a different one, as follows:
- If the security parameter is set to a given value associated to CD2/1 and CD2/2 then the protected mobile device software application may use CD1, CD2/1 and CD2/2 functions during its execution.
- If the security parameter is set to a given value associated to CD3/1 and CD3/2 then the protected mobile device software application may use CD1, CD3/1 and CD3/2 functions during its execution.
- If the security parameter is set to a given value associated to CD4/1 and CD4/2 then the protected mobile device software application may use CD1, CD4/1 and CD4/2 functions during its execution.
- ........;
- If the security parameter is set to a given value associated to CDi/1 and CDi/2 then the protected mobile device software application may use CD1, CDi/1 and CDi/2 functions during its execution.
- .......;
- If the security parameter is set to a given value associated to CDn/1 and CDn/2 then the protected mobile device software application may use CD1, CDn/1 and CDn/2 functions during its execution.

According to some implementations the security parameter sp_{CDs-assignment} value is stored in obfuscated format in the corresponding part of the application data base. In a particular example the method to obfuscate sp_{CDs-assignment} utilizes a security parameter that is embedded into a CD1 functions. In other particular example the method to obfuscate sp_{CDs-assignment} utilizes a security parameter that is embedded into a CD1 function and at least a part of a mobile device identifier. During its life cycle once installed into a mobile device, the protected mobile device software application will be capable to obtain the referred security parameter (/and the at least part of the mobile device identifier), to de-obfuscate sp_{CDs-assignment} and to identify to code domains that may be used during the application execution in said mobile device.

According to some implementations, once the protected mobile device software application has been generated, it may be tested to verify that the security protection associated to I-SPR has been properly applied. The testing may be performed by e.g. using a testing mobile device or e.g. a mobile device emulator (the mobile device identifier of the testing mobile device or emulator is named as DID_{TEST} in the context of figures 2.b, 2.c and 2.d).

To perform the tests:
- the sp_{CDs-assignment} security parameter may be first set to the value associated to CD2/1 and CD2/2, such that the protected mobile device software application may use CD1, CD2/1 and CD2/2 functions during its execution. The testing process must verify that when P2_{SPR21} has been applied (i.e. SPR21 data is stored in obfuscated format in a part of the application data base that is associated to CD2/1 and CD2/2), CD2/1 and CD2/2 are enabled for regular operation;
- once finalized the tests associated to CD2/1 and CD2/2, the sp_{CDs-assignment} security parameter may be set to the value associated to CD3/1 and CD3/2 to test that when P3_{SPR31} has been applied, CD3/1 and CD3/2 are enabled for regular operation.
- .......;
- once finalized the tests associated to CD(n-1)/1 and CD(n-1)/2, the sp_{CDs-assignment} security parameter may be set to the value associated to CDn/1 and CDn/2 to test that when Pn_{SPRn1} has been applied, CDn/1 and CDn/2 are enabled for regular operation.

When sp_{CDs-assignment} security parameter is set to the value associated to CDx/1 and CDx/2, according to some implementations the personalized security protection ([sp_{1b-SPRx1}, ch_{1b-SPRx1}, or_{1b-SPRx1}] stored in obfuscated format in the corresponding part of the application data base) associated to CDx/1 and to DID_{TEST}, is used and tested as follows:
- One or more parts of [sp_{1a-SRx} / sp_{1b-SPRx1}] security parameter are used to validate that a request to preregister a first service, associated to service provider 1, in the protected mobile device software application is received from the appropriate device and has been triggered from the adequate code domain (CDx/1) with the proper security personalization. During said process the one or more parts of [sp_{1a-SRx} / sp_{1b-SPRx1}] are de-obfuscated, and a calculation based on the de-obfuscated one or more parts of [sp_{1a-SRx} / sp_{1b-SPRx1}] is sent to service provider 1 for verification. In the context of the testing process, the appropriate device is the one with DID_{TEST} device identifier and the verification process is performed by a testing system of the provider of personalization services.
- Other one or more parts of [sp_{1a-SRx} / sp_{1b-SPRx1}] security parameter are used to protect data into certain parts of the data base of the protected mobile device software application (when sp_{CDs-assignment} is set to the value associated to CDx/1 and CDx/2). In a particular embodiment, said other one or more part of the security parameter are used to protect at least part of the part of the application data base that is not associated to code domains security personalization / assignment. When the protected mobile device software application receives data for storage into the at least part of the part of the data base that is not associated to code domains security personalization / assignment, those are ciphered by using the referred other one or more parts of [sp_{1a-SRx} / sp_{1b-SPRx1}] security parameter, before being stored into the corresponding at least part of the part of the application data base. When the protected mobile device software application requires usage of data stored into said at least part of the part of the data base, the other one or more parts of [sp_{1a-SRx} / sp_{1b-SPRx1}] security parameter are de-obfuscated by the protected mobile device software application in order to use them to decipher the data into the data base, for usage. In the context of the testing process the used device is the one with DID_{TEST} device identifier.

- Another one or more parts of [sp_{1a-SRx} / sp_{1b-SPRx1}] security parameter are the security parameter that is part of the obfuscation key used to obfuscate [sp_{2b-SPRx1}], [ch_{2b-SPRx1}] and [or_{2b-SPRx1}] (when sp_{CDs-assignment} is set to the value associated to CDx/1 and CDx/2).
- [ch_{1a-SRx} / ch_{1b-SPRx1}] network of checksums is used to verify the integrity of parts of the application code of CDx/1(f1_{CDx/1}, f2_{CDx/1}, ...) functions and of at least parts of one or more security parameters embedded into the application code of CDx/1(f1_{CDx/1}, f2_{CDx/1}, ...) functions. When the protected mobile device software application requires verifying the referred integrity, [ch_{1a-SRx} / ch_{1b-SPRx1}] network of checksums is de-obfuscated by the protected mobile device software application in order to use it in the verification process. In the context of the testing process the used device is the one with DID_{TEST} device identifier.
   ∘ In an alternative implementation:
   - one or more parts of [ch_{1a-SRx} / ch_{1b-SPRx1}] network of checksums are used to verify the integrity of parts of the application code of CDx/1(f1_{CDx/1}, f2_{CDx/1}, ...) functions and of at least parts of one or more security parameters embedded into the application code of CDx/1(f1_{CDx/1}, f2_{CDx/1}, ...) functions when a parameter into sp_{CDs-assignment} is set to a first value;
   - other one or more parts of [ch_{1a-SRx} / ch_{1b-SPRx1}] network of checksums are used to verify the integrity of other parts of the application code of CDx/1(f1_{CDx/1}, f2_{CDx/1}, ...) functions and of at least parts of other one or more security parameters embedded into the application code of CDx/1(f1_{CDx/1}, f2_{CDx/1}, ...) functions when a parameter into sp_{CDs-assignment} is set to a second value;
   - .....;
   - another one or more parts of [ch_{1a-SRx} / ch_{1b-SPRx1}] network of checksums are used to verify the integrity of another parts of the application code of CDx/1(f1_{CDx/1}, f2_{CDx/1}, ...) functions and of at least parts of another one or more security parameters embedded into the application code of CDx/1(f1_{CDx/1}, f2_{CDx/1,} ...) functions when a parameter into SP_{CDs-assignment} is set to a Nth value.
   Advantageously, depending on the value set in sp_{CDs-assignment}, a different part(s) of [ch_{1a-SRx} / ch_{1b-SPRx1}] may be used in the integrity verification. The testing process may test all possible values, using DID_{TEST} device identifier as used device.
- [or_{1a-SRx} / or_{1b-SPRx1}] obfuscation rule is used to obfuscate part of the application code of CDx/1(f1_{CDx/1}, f2_{CDx/1,} ...) functions together with part of the [sp_{1a-SRx}, sp_{3-SRx}, sp_{4-SRx} ..., sp_{g-SRx}] and part of the [ch_{1a-SRx}, ch_{3-SRx}, ch_{4-SRx} ..., ch_{g-SRx}] embedded into the application code of CDx/1(f1_{CDx/1}, f2_{CDx/1}, ...) functions.
   When the protected mobile device software application requires using said referred part of the application code / embedded security parameters / embedded networks of checksums, the corresponding de-obfuscation process is applied by using [or_{1a-SRx} / or_{1b-SPRx1}]. In the context of the testing process the used device is the one with DID_{TEST} device identifier. ∘ In an alternative implementation at least one given function into CDx/1 (fi_{CDx/1}) is coded g-times into CDx/1, the instructions of each function replica being equivalent in terms of functionality. Within this alternative implementation, part of the application code / embedded security parameters / embedded networks of checksums of the first replica is obfuscated using one or more parts of [or_{1a-SRx} / or_{1b-SPRx1}] obfuscation rule, ...., part of the application code / embedded security parameters / embedded networks of checksums of the Gth replica is obfuscated using another one or more parts of [or_{1a-SRx} / or_{1b-SPRx1}] obfuscation rule. Also:
   - The one or more parts of [or_{1a-SRx} / or_{1b-SPRx1}] obfuscation rule are used to de-obfuscate the part of the application code / embedded security parameters / embedded networks of checksums of the first replica of the function when a parameter into sp_{CDs-assignment} is set to a first value;
   - .....;
   - The another one or more parts of [or_{1a-SRx} / or_{1b-SPRx1}] obfuscation rule are used to de-obfuscate the part of the application code / embedded security parameters / embedded networks of checksums of the Gth replica of the function when a parameter into sp_{CDs-assignment} is set to a Gth value.
      Advantageously, depending on the value set in sp_{CDs-assignment}, different one or more parts of [or_{1a-SRx} / or _{1b-SPRx1}] are used in the de-obfuscation of the corresponding part of the of the application code / embedded security parameters / embedded networks of checksums of the corresponding replica of the at least one given function fi_{CDx/1}. The testing process may test all possible values, using DID_{TEST} device identifier as used device.

Also, when sp_{CDs-assignment} security parameter is set to the value associated to CDx/1 and CDx/2, according to some implementations the personalized security protection ([SP_{2b-SPRx1}, ch_{2b-SPRx1}, or_{2b-SPRx1}] stored in obfuscated format in the corresponding part of the application data base) associated to CDx/2 and to DID_{TEST}, is used and tested as follows:
- One or more parts of [sp_{2a-SRx} / sp_{2b-SPRx1}] security parameter are used to validate that a request to register the above referred first service (the registration request being triggered from CDx/2 upon a previously successful preregistration of the first service), associated to service provider 1, in the protected mobile device software application is received from the appropriate device and has been triggered from the adequate code domain (CDx/2) with the proper security personalization. During said process the one or more parts of [sp_{2a-SRx} / sp_{2b-SPRx1}] are de-obfuscated, and a calculation based on the de-obfuscated one or more parts of [sp_{2a-SRx} / sp_{2b-SPRx1}] is sent to service provider 1 for verification. In the context of the testing process, the appropriate device is the one with DID_{TEST} device identifier and the verification process is performed by a testing system of the provider of personalization services. According to some implementations a PIN (Personal Identification Number) is selected by the user during the process of registering a first service of service provider 1 in the protected mobile device software application, and data stored into the protected mobile device software application data base during the preregistration phase is used to authenticate the registration of the selected PIN in the system of service provider 1.
- Other one or more parts of [sp_{2a-SRx} / sp_{2b-SPRx1}] security parameter are used to protect certain unstructured sensitive data before being sent for storage to the protected mobile device software application (e.g. to protect keys/sensitive data necessary for the protected mobile device software application to calculate dynamic credentials associated to services provided by service provider 1; e.g. protection of session keys), when sp_{CDs-assignment} is set to the value associated to CDx/1 and CDx/2. According to some implementations, the unstructured sensitive data are ciphered by service provider 1, or a third party on behalf of service provider 1, by using the other one or more parts of [sp_{2a-SRx} / sp_{2b-SPRx1}] and sent to the protected mobile device software application for storage into the application data base.
   When the protected mobile device software application requires usage of at least part of the unstructured sensitive data, the other one or more parts of [sp_{2a-SRx} / sp_{2b-SPRx1}] security parameter are de-obfuscated by the protected mobile device software application in order to use them to decipher the at least part of the stored unstructured sensitive data, for usage. In the context of the testing process the used device is the one with DID_{TEST} device identifier.
- Another one or more parts of [sp_{2a-SRx} / sp_{2b-SPRx1}] security parameter are used to obfuscate certain sensitive data, in the context of the execution of some CDx/2 code instructions, to avoid they will be exposed in clear in one or more working memories of the mobile device, when sp_{CDs-assignment} is set to the value associated to CDx/1 and CDx/2.
   According to some implementations certain sensitive data (e.g. one or more keys) are obfuscated before being temporally stored in one or more working memories of the mobile device, in the context of the execution of certain code instructions related to CDx/2 by one or more processing devices of the mobile device, such that said sensitive data are not exposed in clear in the working memories.
   In a particular example the obfuscation rule uses the another one or more parts of [sp_{2a-SRx} / sp_{2b-SPRx1}] security parameter and it relates to mixing the sensitive data will sets of non-useful data, for temporary storage in the one or more working memories.
   When, during the execution of certain CDx/2 code instructions, the one or more processing devices require using the obfuscated sensitive data previously stored in the one or more working memories, they use the another one or more parts of [sp_{2a-SRx} / sp_{2b-SPRx1}] and the obfuscation rule to obtain the adequate data for the related calculation/process.
   The above logic may be repeated according to the programming of CDx/2 functions such that the another one or more parts of [sp_{2a-SRx} / sp_{2b-SPRx1}] will serve to avoid that certain sensitive data will be exposed in clear in the one or more working memories of the mobile device along the successive calculations by the one or more processing devices that use those sensitive data.
   In the context of the testing process the used device is the one with DID_{TEST} device identifier.
- [ch_{2a-SRx} / ch_{2b-SPRx1}] network of checksums is used to verify the integrity of parts of the application code of CDx/2(f1_{CDx/2}, f2_{CDx/2,} ...) functions and of at least parts of one or more security parameters embedded into the application code of CDx/2(f1_{CDx/2}, f2_{CDx/2,} ...) functions. When the protected mobile device software application requires verifying the referred integrity, [ch_{2a-SRx} / ch_{2b-SPRx1}] network of checksums is de-obfuscated by the protected mobile device software application in order to use it in the verification process. In the context of the testing process the used device is the one with DID_{TEST} device identifier.
   ∘ In an alternative implementation:
   - one or more parts of [ch_{2a-SRx} / ch_{2b-SPRx1}] network of checksums are used to verify the integrity of parts of the application code of CDx/2(f1_{CDx/2}, f2_{CDx/2,} ...) functions and of at least parts of one or more security parameters embedded into the application code of CDx/2(f1_{CDx/2}, f2_{CDx/2,} ...) functions when a parameter into sp_{CDs-assignment} is set to a first value;
   - other one or more parts of [ch_{2a-SRx} / ch_{2b-SPRx1}] network of checksums are used to verify the integrity of other parts of the application code of CDx/2(f1_{CDx/2}, f2_{CDx/2,} ...) functions and of at least parts of other one or more security parameters embedded into the application code of CDx/2(f1_{CDx/2}, f2_{CDx/2,} ...) functions when a parameter into sp_{CDs-}assignment is set to a second value;
   - .....;
   - another one or more parts of [ch_{2a-SRx} / ch_{2b-SPRx1}] network of checksums are used to verify the integrity of another parts of the application code of CDx/2(f1_{CDx/2}, f2_{CDx/2,} ...) functions and of at least parts of another one or more security parameters embedded into the application code of CDx/2(f1_{CDx/2}, f2_{CDx/2,} ...) functions when a parameter into sp_{CDs-assignment} is set to a Nth value.
   Advantageously, depending on the value set in sp_{CDs-assignment}, a different part of [ch_{2a-SRx} / ch_{2b-SPRx1}] may be used in the integrity verification. The testing process may test all possible values, using DID_{TEST} device identifier as used device.
- [or_{2a-SRx} / or_{2b-SPRx1}] obfuscation rule is used to obfuscate part of the application code of CDx/2(f1_{CDx/2}, f2_{CDx/2,} ...) functions together with part of the [sp_{2a-SRx}, sp_{(g+1)-SRx}, sp_{(g+2)-SRx} ..., SP_{m-SRx}] and part of the [ch_{2a-SRx}], ch_{(g+1)-SRx}, ch_{(g+2)-SRx} ..., ch_{m-SRx}] embedded into the application code of CDx/2(f1_{CDx/2}, f2_{CDx/2,} ...) functions.
   When the protected mobile device software application requires using said referred part of the application code / embedded security parameters / embedded networks of checksums, the corresponding de-obfuscation process is applied by using [or_{2a-SRx} / or_{2b-SPRx1}]. In the context of the testing process the used device is the one with DID_{TEST} device identifier. ∘ In an alternative implementation at least one given function into CDx/2 (fi_{CDx/2}) is coded h-times into CDx/2, the instructions of each function replica being equivalent in terms of functionality. Within this alternative implementation, part of the application code / embedded security parameters / embedded networks of checksums of the first replica is obfuscated using one or more parts of [or_{2a-SRX} / or_{2b-SPRx1}] obfuscation rule, ...., part of the application code / embedded security parameters / embedded networks of checksums of the Hth replica is obfuscated using another one or more parts of [or_{2a-SRx} / or_{2b-SPRx1}] obfuscation rule. Also:
   - The one or more parts of [or_{2a-SRx} / or_{2b-SPRx1}] obfuscation rule are used to de-obfuscate the part of the application code / embedded security parameters / embedded networks of checksums of the first replica of the function when a parameter into sp_{CDs-assignment} is set to a first value;
   - .....;
   - The another one or more parts of [or_{2a-SRx} / or_{2b-SPRx1}] obfuscation rule are used to de-obfuscate the part of the application code / embedded security parameters / embedded networks of checksums of the Hth replica of the function when a parameter into sp_{CDs-assignment} is set to a Hth value;
   Advantageously, depending on the value set in SP_{CDs-assignment}, different one or more parts of [or_{2a-sRx} / or_{2b-SPRx1}] are used in the de-obfuscation of the corresponding part of the of the application code / embedded security parameters / embedded networks of checksums of the corresponding replica of the at least one given function fi_{CDx/2}. The testing process may test all possible values, using DID_{TEST} device identifier as used device.

According to some implementations, after successful testing the protected mobile device software application is stored in the data base (DB) of the provider of personalization services that is associated to protected mobile device software applications, in association to the security personalization data that enables the one or more first code domains for regular operation and to the security personalization registries (including I-SPR).

According to some implementations, the testing process may also check that when a wrong security personalization/assignment is applied, CDx/1 and/or CDx/2 is/are not enabled for regular operation. Figure 2.e illustrates a set of security personalization registries with default (/wrong) values (SPRxDV, x= 2, 3, ..., n), that may be used for testing purposes. In the testing process, the security parameter sp_{CDs-assignment} may be also set with default (/wrong) values.

Figure 2.f illustrates a security personalization that uses the default values, once having been applied to the protected mobile device software application. The following are some examples for testing that the security personalization based on those default (/wrong) values does not enable the protected mobile device software application for regular operation:
- The value of sp_{CDs-assignment} is not corresponding to a parameter valid to assign a given CDx/1 and CDx/2, or the parameter is valid but it is not properly obfuscated, so the programmed self-protection reaction for such a scenario will be performed by the protected mobile device software application.
- The value of sp_{CDs-assignment} is correct and it is correctly obfuscated, and relates to assignment of CDx/1 and CDx/2:
   ∘ In a testing environment, sp_{1b-SPRxDV} has been personalized in obfuscated format in the part of the application data base associated to CDx/1. When using sp_{1b-SPRxDV} the validation associated to the request to preregister a first service in the protected mobile device software application will fail, and the preregistration will not be performed; also, the key calculated to de-obfuscate CDx/2 security personalization data will not be correct, so the de-obfuscated values will not be correct and one or more programmed self-protection reaction for such a scenario will be performed, as applicable when executing CDx/2 code instructions that use those values, by the protected mobile device software application.
   ∘ In a testing environment, ch_{1b-SPRxDV} has been personalized in obfuscated format in the part of the application data base associated to CDx/1. Within this testing [ch_{1a-SRx} / ch_{1b-SPRxDV}] is used in the integrity verification. If [ch_{1a-SRx}/ ch_{1b-SPRxDV}] is compared with the one calculated by the protected mobile device software application, the verification will fail and the programmed self-protection reaction for such a scenario will be performed by the protected mobile device software application.
      - In the alternative implementation, referred above in connection to figure 2.b, in a testing environment, ch_{1b-SPRxDV} has been personalized in obfuscated format in the part of the application data base associated to CDx/1. Within this testing the value set in sp_{CDs-assignment} makes given one or more parts of [ch_{1a-SRx} / ch_{1b-SPRxDv}] being used in the integrity verification. If the given one or more parts of [ch_{1a-SRx} / ch_{1b-SPRxDV}] are compared with the one calculated by the protected mobile device software application, the verification will fail and the programmed self-protection reaction for such a scenario will be performed by the protected mobile device software application.
   ∘ In a testing environment, or_{1b-SPRxDV} has been personalized in obfuscated format in the part of the application data base associated to CDx/1. Within this testing [or_{1a-SRx} / or_{1b-SPRxDV}] is used by the protected mobile device software application to de-obfuscate the corresponding part of the of the application code / embedded security parameters / embedded networks of checksums, so the de-obfuscation process will not be correct and the programmed self-protection reaction for such a scenario will be performed by the protected mobile device software application.
      - In the alternative implementation, referred above in connection to figure 2.b, in a testing environment, or_{1b_SPRxDV} has been personalized in obfuscated format in the part of the application data base associated to CDx/1. Within this testing, the value set in sp_{CDs-assignment} makes given one or more parts of [or_{1a-SRx} / or_{1b-sPRXDV}] being used by the protected mobile device software application to de-obfuscate the corresponding part of the of the application code / embedded security parameters / embedded networks of checksums of the corresponding replica of the at least one given function fi_{CDx/1}, so the de-obfuscation process will not be correct and the programmed self-protection reaction for such a scenario will be performed by the protected mobile device software application.
   ∘ In a testing environment, the device identifier of the device where the application has been installed is different than DID_{TEST}, so the key calculated by the protected mobile device software application will not be the proper one to correctly de-obfuscate the security personalized data stored into the part of the application data base associated to CDx/1, so the programmed self-protection reaction for such a scenario will be performed by the protected mobile device software application.
   ∘ In a testing environment sp_{2b-SPRxDV} has been personalized in obfuscated format in the part of the application data base associated to CDx/2. When using sp_{2b-SPRxDV} the validation associated to the request to register the above referred first service in the protected mobile device software application will fail, and the registration will not be performed; also, the protected unstructured sensitive data stored in the protected mobile device software application data base would not be properly deciphered, so the values would be incorrect when used.
   ∘ In a testing environment ch_{2b-SPRxDV} has been personalized in obfuscated format in the part of the application data base associated to CDx/2. Within this testing [ch_{2a-SRx} / ch_{2b-SPRxDV}] is used in the integrity verification. If [ch_{2a-SRx}/ ch_{2b-SPRxDV}] is compared with the one calculated by the protected mobile device software application, the verification will fail and the programmed self-protection reaction for such a scenario will be performed by the protected mobile device software application.
      - In the alternative implementation, referred above in connection to figure 2.b, in a testing environment ch_{2b-SPRxDV} has been personalized in obfuscated format in the part of the application data base associated to CDx/2. Within this testing the value set in sp_{CDs-assignment} makes given one or more parts of [ch_{2a-SRx}/ ch_{2b-SPRxDV}] being used in the integrity verification. If the given one or more parts of [ch_{2a-SRx} / ch_{2b-SPRxDv}] are compared with the one calculated by the protected mobile device software application, the verification will fail and the programmed self-protection reaction for such a scenario will be performed by the protected mobile device software application.
   ∘ In a testing environment, or_{2b-SPRxDV} has been personalized in obfuscated format in the part of the application data base associated to CDx/2. Within this testing [or_{2a-SRx} / or_{2b-SPRxDV}] is used by the protected mobile device software application to de-obfuscate the corresponding part of the application code / embedded security parameters / embedded networks of checksums, so the de-obfuscation process will not be correct and the programmed self-protection reaction for such a scenario will be performed by the protected mobile device software application.
      - In the alternative implementation, referred above in connection to figure 2.b, in a testing environment, or_{2b-SPRxDV} has been personalized in obfuscated format in the part of the application data base associated to CDx/2. Within this testing, the value set in sp_{CDs-assignment} makes given one or more parts of [or_{2a-SRx} / Or_{2b-SPRxDV}] being used by the protected mobile device software application to de-obfuscate the corresponding part of the application code / embedded security parameters / embedded networks of checksums of the corresponding replica of the at least one given function fi_{CDx/2}, so the de-obfuscation process will not be correct and the programmed self-protection reaction for such a scenario will be performed by the protected mobile device software application.
   ∘ In a testing environment, at least part of sp_{1b-SPRxDV} would be used by the protected mobile device software application to calculate the key to de-obfuscate the security personalized data stored into the part of the application data base associated to CDx/2. As detailed above, by using sp_{1b-SPRxDV,} ch_{1b-SPRxDV} or_{1b-SPRxDV}, one or more defined self-protection reactions would occur and the referred key to de-obfuscate sp_{2b-SPRxDV}ch_{2b-SPRxDV}, or_{2b-SPRxDV} could not even be calculated.
   ∘ In a testing environment, the device identifier of the device where the application has been installed is different than DID_{TEST}, so the key calculated by the protected mobile device software application will not be the proper one to correctly de-obfuscate the security personalized data stored into the part of the application data base associated to CDx/2, so the programmed self-protection reaction for such a scenario will be performed by the protected mobile device software application. ∘ Etc.

Other security personalization default values may be used to further test the different possible code domains assignments and security configurations of the protected mobile device software application.

Applied self-protection reactions may be diverse (e.g. the application stop its execution; e.g. the application reacts by making the application data base being deleted and/or by sending a warning message through the mobile device to the provider of personalization services and/or to the corresponding service provider, etc.), and one or more self-protection reactions may be applied to each protection feature of the protected mobile device software application.

Once the testing process has finalized, as described in connection to figure 1 the protected mobile device software application is stored in the data base (DB) associated to protected mobile device software applications, in association to the security personalization data that enables the one or more first code domains for regular operation and to the security personalization registries (including I-SPR).

Afterwards, the security personalization module obtains by using one or more processing devices the protected mobile device software application from the data base. According to some implementation the protected application is obtained without any data associated to the security personalization that enables the one or more first code domains for regular operation, so the obtained application is a non-security personalized protected mobile device software application. The non-security personalized protected mobile device software application is in a pending security personalization status, said pending security personalization status disabling the one or more first code domains for regular operation.

As also described in figure 1, the protected mobile device software application is sent in a non-personalized security status from the provider of personalization services to a distribution server of an entity in charge to distribute the application and said application is stored in one or more memories of the distribution server of said entity. According to some implementations the distribution server relates to one or more of the servers associated to an applications distribution market or an applications store such as Google Play Store or Apple Store.

Afterwards, upon user interaction the user's mobile phone request a mobile device software application to the distribution server, the distribution server storing in one or memories the protected mobile device software application being in a non-personalized security status.

In the next step the user's mobile device receives from the distribution server and subsequently installs by using one or more processing devices in the mobile device the non-security personalized protected mobile device software application, wherein in said pending security personalization status the one or more first code domains are disabled for regular operation.

Advantageously, when the protected mobile device software application is downloaded from the distribution server and it is installed in the user's mobile device, the protected mobile device software application is in a non-personalized security status where the one or more first code domains are disabled for regular operation, thus the application will self-protect against attempts to e.g. perform code execution as extensively explained in connection to some of the previous figures.

Figures 2.g to 2.l relates to some implementations where the protected mobile device software application installed in user's 1 mobile device is personalized on security terms by using a first life cycle security personalization registry, and the protected mobile device software application installed in user's 2 mobile device is personalized on security terms by using a second life cycle security personalization registry, both the first and the second life cycle security personalization registries being different than the initialization security personalization registry (I-SPR in the examples above).

Within this implementations each life cycle security personalization registry is associated in the system of the provider of personalization services to a set of first and second code domains as follows:
- Each of SPR2j (j= 2 to N), is associated to CD2/1 and CD2/2 first code domains and CD1 second code domain;
- Each of SPR3j (j= 2 to N), is associated to CD3/1 and CD3/2 first code domains and CD1 second code domain;
- Each of SPR4j (j= 2 to N), is associated to CD4/1 and CD4/2 first code domains and CD1 second code domain;
- .....;
- Each of SPRij (j= 2 to N), is associated to CDi/1 and CDi/2 first code domains and CD1 second code domain;
- ....;
- Each of SPRnj (j= 2 to N), is associated to CDn/1 and CDn/2 first code domains and CD1 second code domain;
and the association is stored is the data base associated to protected mobile device software applications.

As described in connection to step (8) of figure 1, the user's mobile device sends a request for a security personalization of at least one of the one or more first code domains, the request being triggered by one or more processing devices by using executable code belonging to one of the one or more second code domains of the protected mobile device software application being in a non-personalized security status, the request including an identifier of the user's mobile device (DID_{USER}). In step (9) the provider of personalization services receives the request from the user's mobile device and in step (10) one or more processing devices of the provider of personalization services assign a life cycle security personalization registry to the user's mobile device (DID_{USER}) in relation to the protected mobile device software application.

Figure 2.g first relates to a scenario where the protected mobile device software application is installed in user's 1 mobile device (with DID_{USER1}), and steps (8), (9) and (10) take place in connection to said user's 1 mobile device. In the example illustrated in figure 2.g the life cycle security personalization registry assigned by the security personalization module to user's 1 mobile device is SPR43, which as referred above is in association to CD4/1, CD4/2 and CD1. Still is step (10) the assignment of the SPR43 life cycle security personalization registry to the user's 1 mobile device and to the protected mobile device software application is stored is the data base associated to protected mobile device software applications.

In more detail, according to some implementations the security personalization module may performs the following assignments and data preparation in step (10) (some of the data preparation processes could also be performed in a later stage, before sending the data to the protected mobile device software application), in connection to user's 1 mobile device and to the security personalization:
- Assignment of SPR43 in the context of the on-going security personalization process, associated to CD4/1, CD4/2 and CD1 and to DID_{USER1};
- Assigning to sp_{CDs-assigment} a data value associated to CD4/1 and CD4/2 such that, once personalized on security terms, the protected mobile device software application will use CD4/1, CD4/2 and CD1 during its execution. Within these implementations the data value is obfuscated by using a method that uses a security parameter that is embedded into a CD1 function and at least part of DID_{USER1}.
- Obfuscation of [sp_{1b-SPR43}, or_{1b-SPR43}, ch_{1b-SPR43}] by using an obfuscation algorithm and the obfuscation key to protect CD4/1 security personalization data, as illustrated in figure 2.g (in this security personalization process x = 4). Within these implementations:
   ∘ the first 10 digits of DID_{USER1} are part of the obfuscation key;
   ∘ [sp_{1a-SR4}, sp_{1b-SPR43}] becomes the two parts of the same security parameter:
      - One or more parts of [sp_{1a-SR4}, sp_{1b-SPR43}] will be used to validate that a request to preregister a first service, associated to service provider 1, in the protected mobile device software application is received from user's 1 mobile device (with DID_{USER1}) and has been triggered from CD4/1 with the proper security personalization;
      - Other one or more parts of [sp_{1a-SR4} / sp_{1b-SPR43}] security parameter will be used to protect data into certain parts of the data base of the protected mobile device software application (in this context, certain parts associated to CD4/1 and CD4/2). Within these embodiments, said other one or more parts of the security parameter are used to protect at least part of the part of the application data base that is not associated to code domains security personalization / assignment. When the protected mobile device software application receives data for storage into the at least part of the part of the data base that is not associated to code domains security personalization / assignment, those are ciphered by using the referred other one or more parts of [sp_{1a-SR4} / sp_{1b-SPR43}] security parameter, before being stored into the corresponding at least part of the part of the application data base.
      - Another one or more parts of [sp_{1a-SR4} / sp_{1b-SPR43}] security parameter are assigned as the security parameter that is part of the obfuscation key used to obfuscate [sp_{2b-SPR43}], [ch_{2b-SPR43}] and [or_{2b-SPR43}].
   ∘ [ch_{1a-SR4}, ch_{1b-SPR43}] becomes the two parts of the same network of checksums, that will be used to verify the integrity of parts of the application code of CD4/1(f1_{CD4/1,} f2_{CD4/1,} ...) functions and of at least parts of one or more security parameters embedded into the application code of CD4/1(f1_{CD4/1,} f2_{CD4/1,} ...) functions.
      - Within these implementations ch_{1b-SPR43} = ch_{1b-SPR41};
      - According to some alternative implementations ch_{1b-SPR43} = Ch_{1b-SPR41} and a parameter into sp_{CDs-assignment} is set to a given value such that one or more parts of [ch_{1a-SR4} / ch_{1b-SPR43}] network of checksums will be used to verify the integrity of parts of the application code of CD4/1(f1_{CD4/1}, f2_{CD4/1,} ...) functions and of at least parts of one or more security parameters embedded into the application code of CD4/1(f1_{CD4/1}, f2_{CD4/1}, ...) functions;
   ∘ [or_{1a-SR4}, or_{1b-SPR43}] becomes the two parts of the same obfuscation rule, that are used to obfuscate part of the application code of CD4/1(f1_{CD4/1,} f2_{CD4/1,} ...) functions together with part of the [sp_{1a-SR4}, SP_{3-SR4}, SP_{4-SR4} ..., SP_{i-SR4}] and part of the [ch_{1a-SR4}, ch_{3-SR4}, ch_{4-SR4} ..., ch_{i-SR4}] embedded into the application code of CD4/1(f1_{CD4/1}, f2_{CD4/1,} ...) functions.
      - Within these implementations or_{1b-SPR43} = or_{1b-SPR41};
      - According to some alternative implementations or_{1b-SPR43} = or_{1b-SPR41} and a parameter into sp_{CDs-assignment} is set to a given value such that one or more parts of [or_{1a-SR4} / or_{1b-SPR43}] obfuscation rule (those parts associated to the given value of the parameter) will be used to de-obfuscate by the protected mobile device software application a part of the application code / embedded security parameters / embedded networks of checksums of the replica of fi_{CD4/1} function into CD4/1 that is associated to the given value of the parameter.
- Obfuscation of [sp_{2b-SPR43}, or_{2b-SPR43}, ch_{2b-SPR43}] by using and obfuscation algorithm and the obfuscation key to protect CD4/2 security personalization data, as illustrated in figure 2.g (in this security personalization process x = 4). Within these implementations:
   ∘ the security parameter that is part of the obfuscation key is comprised by at least part of [sp_{1a-SR4}] and at least part of [sp_{1b-SPR43}]. The first 10 digits of DID_{USER1} are also part of the obfuscation key;
   ∘ [sp_{2a-SR4}, sp_{2b-SPR43}] becomes the two parts of the same security parameter:
      - One or more parts of [sp_{2a-SR4}, sp_{2b-SPR43}] will be used to validate that a request to register the above referred first service (the registration request being triggered from CD4/2 upon a previous successful preregistration of the first service), associated to service provider 1, in the protected mobile device software application is received from user's 1 mobile device (with DID_{USER1}) and has been triggered from CD4/2 with the proper security personalization;
      - Other one or more parts of [S_{P2a-SR4} / sp_{2b-SPR43}] security parameter will be used to protect certain unstructured sensitive data before being sent for storage to the protected mobile device software application into user's 1 mobile device (e.g. to protect keys/sensitive data necessary for the protected mobile device software application into user's 1 mobile device to calculate dynamic credentials associated to services provided by service provider 1; e.g. protection of session keys), when sp_{CDs-assignment} is set to the value associated to CD4/1 and CD4/2.
      - Another one or more parts of [sp_{2a-sR4} / sp_{2b-SPR43}] security parameter will be used by the protected mobile device software application into user's 1 mobile device to obfuscate certain sensitive data, in the context of the execution of some CD4/2 code instructions, to avoid they will be exposed in clear in one or more working memories of the mobile device, when sp_{CDs-assignment} is set to the value associated to CD4/1 and CD4/2.
   ∘ [ch_{2a-SR4}, ch_{2b-SPR43}] becomes the two parts of the same network of checksums, that will be used to verify the integrity of parts of the application code of CD4/2(f1_{CD4/2}, f2_{CD4/2}, ...) functions and of at least parts of one or more security parameters embedded into the application code of CD4/2(f1_{CD4/2}, f2_{CD4/2}, ...) functions.
      - Within these implementations ch_{2b-SPR43} = ch_{2b-SPR41};
      - According to some alternative implementations ch_{2b-SPR43} = Ch_{2b-SPR41} and a parameter into sp_{CDs-assignment} is set to a given value such that one or more parts of [ch_{2a-SR4} / ch_{2b-SPR43}] network of checksums will be used to verify the integrity of parts of the application code of CD4/2(f1_{CD4/2}, f2_{CD4/2}, ...) functions and of at least parts of one or more security parameters embedded into the application code of CD4/2(f1_{CD4/2}, f2_{CD4/2}, ...) functions;
   ∘ [or_{2a-SR4}, or_{2b-SPR43}] becomes the two parts of the same obfuscation rule, that are used to obfuscate part of the application code of CD4/2(f1_{CD4/2}, f2_{CD4/2}, ...) functions together with part of the [sp_{2a-SR4}, sp_{(i+1)-SR4,} sp_{(i+2)-SR4} ..., sp_{q-SR4}] and part of the [ch_{2a-SR4}, ch_{(i+1)-SR4}, ch_{(i+2)-SR4} ..., ch_{q-SR4}] embedded into the application code of CD4/2(f1_{CD4/2}, f2_{CD4/2}, ...) functions.
      - Within these implementations or_{2b-SPR43} = or_{2b-SPR41};
      - According to some alternative implementations or_{2b-SPR43} = or_{2b-SPR41} and a parameter into sp_{CDs-assignment} is set to a given value such that one or more parts of [or_{2a-SR4} / or_{2b-SPR43}] obfuscation rule (those parts associated to the given value of the parameter) will be used to de-obfuscate by the protected mobile device software application a part of the application code / embedded security parameters / embedded networks of checksums of the replica of fi_{CD4/2} function into CD4/2 that is associated to the given value of the parameter.

These assignments and prepared data are stored in the data base associated to protected mobile device software applications, in relation to user's 1 mobile device, the protected mobile device software application and the security personalization process.

In step (11) of figure 1 at least part of the assigned life cycle security personalization registry, and the association to the user's mobile device and protected mobile device software application is sent to the corresponding service provider such that it may use at least part of it in the context of certain protected mobile device software application life cycle processes. According to some implementations (in connection to figure 2.g) at least part of the assignments and data associated to user's 1 mobile device and the security personalization of the protected mobile device software application is sent to service provider 1 for storage and/or for usage of at least part of it in the context of certain protected mobile device software application life cycle processes associated to user's 1 mobile device. In a particular example:
- The one or more parts of [sp_{1a-SR4}, sp_{1b-SPR43}] that will be used to validate that a request to preregister a first service, associated to service provider 1, in the protected mobile device software application is received from user's 1 mobile device (with DID_{USER1}) and has been triggered from CD4/1 with the proper security personalization and;
- The one or more parts of [sp_{2a-SR4}, sp_{2b-SPR43}] that will be used to validate that a request to register the above referred first service (the registration request being triggered from CD4/2 upon a previous successful preregistration of the first service), associated to service provider 1, in the protected mobile device software application is received from user's 1 mobile device (with DID_{USER1}) and has been triggered from CD4/2 with the proper security personalization;
are sent to service provider 1 for storage and for usage during the preregistration and the registration process, respectively, of a first service in the protected mobile device software application in user's 1 mobile device.

In step (12) of figure 1 security personalization data associated to the assigned life cycle security personalization registry is sent from the provider of personalization services to the user's mobile device. In particular, security personalization data associated to the life cycle security personalization registry related to the user's mobile device is sent to the non-security personalized protected mobile device software application in the user's mobile device. According to some implementations (in connection to figure 2.g) [sp_{1b-SPR43}, or_{1b-SPR43}, ch_{1b-SPR43}] are sent in obfuscated format to the protected mobile device software application in user's 1 mobile device.

In step (13) of figure 1 the user's mobile device receives the security personalization data associated to the life cycle security personalization registry that relates to the user's mobile device from the provider of personalization services, the security personalization data enabling in the non-security personalized protected mobile device software application at least one of the one or more first code domains for regular operation, said personalization related to security parameters and/or obfuscation rules and/or code checksums data that are at least partly available in the one or more second code domains and that are required to enable the at least one of the one or more first code domains for regular operation.

According to some implementations the enablement of the at least one of the one or more first code domains is associated to one or more security parameters related to the life cycle security personalization registry (e.g. sp_{1b-SPR43} related to the life cycle security personalization registry SPR43), that are different than the corresponding ones of the security personalization registry (e.g. sp_{1b-SPR21}, sp_{1b-SPR31}, sp_{1b-SPR41}, ..., sp_{1b-SPRi1}, .... sp_{1b-SPRn1} in connection to I-SPR)

According to some implementations (in connection to figure 2.g) the user's 1 mobile device receives in obfuscated format (the obfuscation using a method that uses a security parameter that is embedded into a CD1 function and at least part of DID_{USER1}) the data value for storage in the part of the protected mobile device software application associated to sp_{CDs-assigment}, said value making the protected mobile device software application to use CD4/1, CD4/2 and CD1 during its execution. Within these implementations the user's 1 mobile device also receives [sp_{1b-SPR43}, or_{1b-SPR43}, ch_{1b-SPR43}] in obfuscated format from the provider of personalization services and they are stored in the part of the protected mobile device software application data base that is associated to CD4/1 (as illustrated in figure 2.h). The received and stored [sp_{1b-SPR43}, or_{1b-SPR43}, ch_{1b-SPR43}] security personalization data enables CD4/1 first code domain for regular operation, the obfuscation of said data being related to security parameters and/or obfuscation rules and/or code checksums data that are at least partly available in CD1 second code domain and that are required to enable CD4/1 first code domain for regular operation, as described in connection to figure 2.d.

Advantageously, after the above security personalization has been performed, the referred at least one of the one or more first code domains may be used to regularly perform the associated application life cycle functions.

During its life cycle the protected mobile software application will be capable to de-obfuscate sp_{CDs-assigment} and to determine that CD4/1, CD4/2 and CD1 must be used during its execution. Also, the protected mobile device software application will be able to de-obfuscate [sp_{1b-SPR43}, or_{1b-SPR43}, ch_{1b-SPR43}] by using the obfuscation algorithm and the obfuscation key that protects CD4/1 security personalization data, as already illustrated in connection to figure 2.g (x = 4). More in detail:
- In order to request the preregistration of a first service, one or more parts of [sp_{1a-SR4} / sp_{1b-sPR43}] are de-obfuscated by the protected mobile device software application, and a calculation based on the de-obfuscated one or more parts of [sp_{1a-SR4} / sp_{1b-SPR43}] is sent to service provider 1 for verification that the request is sent from the appropriate device and has been triggered from the adequate code domain (CD4/1) with the proper security personalization. As referred above, service provider 1 has previously stored the one or more parts of [sp_{1a-SR4} / sp_{1b-SPR43}] in association to the user's 1 mobile device, to use them during the verification process.
- As detailed above, other one or more parts of [sp_{1a-SR4} / sp_{1b-SPR43}] security parameter are used to protect at least part of the part of the application data base associated to CD4/1 and CD4/2 (and not associated to code domains security personalization / assignment). When the protected mobile device software application requires usage of data stored into said at least part of the part of the data base, the other one or more parts of [sp_{1a-SR4} / sp_{1b-SPR43}] security parameter are de-obfuscated by the protected mobile device software application in order to use them to decipher the data into the data base, for usage.

- Another one or more parts of [sp_{1a-SR4} / sp_{1b-SPR43}] security parameter will be de-obfuscated by the protected mobile device software application in order to use them to calculate the obfuscation key to de-obfuscate [sp_{2b-SPR43]}, [ch_{2b-SPR43}] and [or_{2b-SPR43}], when required.
- During the protected mobile device software application life cycle, [ch_{1a-SR4}, ch_{1b-SPR43}] will be used to verify the integrity of the related parts of the application code of CD4/1(f1_{CD4/1,} f2_{CD4/1,} ...) functions and of at least parts of one or more security parameters embedded into the application code of CD4/1(f1_{CD4/1}, f2_{CD4/1,} ...) functions. When the protected mobile device software application requires verifying the referred integrity, [ch_{1a-SR4}, ch_{1b-SPR43}] network of checksums is de-obfuscated by the protected mobile device software application in order to use it in the verification process. As referred above, within these implementations ch_{1b-SPR43} = ch_{1b-SPR41};
   - According to the alternative implementations referred above, ch_{1b-SPR43} = Ch_{1b-SPR41} and a parameter into sp_{CDs-assignment} has been set to a given value such that associated one or more parts of [ch_{1a-SR4} / ch_{1b-SPR43}] network of checksums will be used to verify the integrity of related parts of the application code of CD4/1(f1_{CD4/1}, f2_{CD4/1,} ...) functions and of related at least parts of one or more security parameters embedded into the application code of CD4/1(f1_{CD4/1,} f2_{CD4/1}, ...) functions;
- During the protected mobile device software application life cycle, [or_{1a-SR4}, or_{1b-SPR43}] will be used to de-obfuscate the related part of the application code of CD4/1(f1_{CD4/1}, f2_{CD4/1,} ...) functions, the related part of the [sp_{1a-SR4}, sp_{3-SR4}, sp_{4-SR4} ..., sp_{i-SR4}] and the related part of the [ch_{1a-SR4}, ch_{3-SR4}, Ch_{4-SR4} ..., ch_{i-SR4}] embedded into the application code of CD4/1(f1_{CD4/1}, f2_{CD4/1,} ...) functions. When the protected mobile device software application requires using said referred part of the application code / embedded security parameters / embedded networks of checksums, the corresponding de-obfuscation process is applied by using [or_{1a-SR4} / or_{1b-SPR43}]. As referred above, within these implementations or_{1b-SPR43} = or_{1b-SPR41};
   - According to the alternative implementations referred above or_{1b-SPR43} = or_{1b-SPR41} and a parameter into sp_{CDs-assignment} is set to a given value such that one or more parts of [or_{1a-SR4} / or_{1b-SPR43}] obfuscation rule (those parts associated to the given value of the parameter) will be used to de-obfuscate by the protected mobile device software application a part of the application code / embedded security parameters / embedded networks of checksums of the replica of fi_{CD4/1} function into CD4/1 that is associated to the given value of the parameter when the protected mobile device software application requires usage of said part of the application code / embedded security parameters / embedded networks of checksums.

In reference again to figure 1, according to some implementations different groups of not-enabled one or more first code domains are personalized in security terms at different time instants. This approach increases the security of the protected mobile device software application.

In the implementations described in figures 2.a to 2.l, CDx/2 are another first code domains. Steps (14a) to (14e) described herein below are in connection to the protected mobile device software application installed in user's 1 mobile device, the assigned life cycle security personalization registry being SPR43 and sp_{CDs-assigment} having an assigned data value associated to CD4/1 and CD4/2, so in this context CD4/2 is the another first code domain.

Also, for simplicity, in the context of figures 2.a to 2.l, steps (15a) to (15e) and steps (16a) to (16e) does not take place.

As already described in figure 1, step (14a) represents a successive request for a security personalization of at least another one or more first code domains, sent from the user's mobile device to the provider of personalization services (in the current context: a security personalization of CD4/2 sent from user's 1 mobile device).

Within these implementations, each user's mobile device request is triggered by one or more processing devices by using executable code belonging to one of the one or more first code domains that has previously been enabled for regular operation (in the current context: i.e. executable code belonging to CD4/1, the request triggered from user's 1 mobile device).

In step (14a) of figure 1 a successive request is sent from the user's 1 mobile device to the provider of personalization services and in step (14b) the provider of personalization services receives the successive request from the user's 1 mobile device, and one or more processing devices of the provider of personalization services may obtain in step (14c) security personalization data ([sp_{2b-SPR43}, or_{2b-SPR43}, ch_{2b-SPR43}]) from the life cycle security personalization registry previously assigned to the user's mobile device (from SPR43). According to some implementations the security personalization data has been previously obtained from the security personalization registry: it can be made e.g. in step (10), where as described above ([sp_{2b-SPR43}, or_{2b-SPR43}, ch_{2b-SPR43}] has been stored in obfuscated format in the data base associated to protected mobile device software applications, in relation to user's 1 mobile device, the protected mobile device software application and the security personalization process.

In step (14d) of figure 1 the security personalization data associated to the life cycle security personalization registry SPR43 previously assigned to the user's 1 mobile device is sent from the provider of personalization services to the user's 1 mobile device. In particular, security personalization data associated to the life cycle security personalization registry (SPR43) is sent to the partly-security personalized protected mobile device software application. According to some implementations (in connection to figure 2.g) [sp_{2b-SPR43}, or_{2b-SPR43}, ch_{2b-SPR43}] are sent in obfuscated format to the protected mobile device software application in user's 1 mobile device.

In step (14e) of figure 1 the user's 1 mobile device receives from the provider of personalization services the security personalization data ([sp_{2b-SPR43}, or_{2b-SPR43}, ch_{2b-SPR43}] in obfuscated format) associated to the life cycle security personalization registry (SPR43) related to the user's 1 mobile device in the partly-security personalized protected mobile device software application, the data are stored in the part of the protected mobile device software application data base that is associated to CD4/2 (as illustrated in figure 2.i), the security personalization data enabling in the application for regular operation the at least another one or more first code domains (CD4/2) that is associated to the particular request.

According to some implementations, at least one of the another one or more first code domains (CD4/2) is paired on security terms by the provider of personalization services to one or more first code domains (CD4/1) via the security personalization ([sp_{2b-SPR43}, or_{2b-SPR43}, ch_{2b-SPR431}), said personalization related to security parameters (at least part of [sp_{1a-SR4}, sp_{1b-SPR43}]) and/or obfuscation rules (at least part of [or_{1a-SR4}, or_{1b-SPR43}]) and/or code checksums data (at least part of [ch_{1a-SR4}, ch_{1b-SPR43}]) that are at least partly available in the one or more first code domains (CD4/1) and that are required to enable the at least one of the another one or more first code domains for regular operation.

According to some implementations, at least part of the security parameters and/or obfuscation rules and/or code checksums data required to enable the at least one of the another one or more first code domains for regular operation have been previously sent from the provider of personalization services to the user's mobile device and are available in a part of the protected mobile device software application data base that is associated to one or more first code domains that has previously been enabled for regular operation ([sp_{1b-SPR43}]) and/or [or_{1b-sPR43}]) and/or [ch_{1b-SPR43}] are available in a part of the application data base that is associated to CD4/1).

Advantageously, after the above security personalization has been performed, the referred at least another one or more first code domains may be used to regularly perform the associated application life cycle functions.

During its life cycle the protected mobile device software application will be able to de-obfuscate [sp_{2b-spR43}, or_{2b-SPR43}, ch_{2b-SPR43}] by using the obfuscation algorithm and the obfuscation key that protects CD4/2 security personalization data, as already illustrated in connection to figure 2.g (x = 4). More in detail:
- In order to request the registration of the above referred first service (the registration request being triggered from CD4/2 upon a previously successful preregistration of the first service), one or more parts of [sp_{2a-SR4} / sp_{2b-SPR43}] are de-obfuscated by the protected mobile device software application, and a calculation based on the de-obfuscated one or more parts of [sp_{2a-SR4} / sp_{2b-SPR43}] is sent to service provider 1 for verification that the request is sent from the appropriate device and has been triggered from the adequate code domain (CD4/2) with the proper security personalization. As referred above, service provider 1 has previously stored the one or more parts of [sp_{2a-SR4} / sp_{2b-SPR43}] in association to the user's 1 mobile device, to use them during the verification process.
- As detailed above, other one or more parts of [sp_{2a-SR4} / sp_{2b-SPR43}] security parameter are used to protect certain unstructured sensitive data before being sent for storage to the protected mobile device software application in user's 1 mobile device. According to some implementations when the protected mobile device software application requires usage of at least part of the unstructured sensitive data, the other one or more parts of [sp_{2a-SR4} / sp_{2b-SPR43}] security parameter are de-obfuscated by the protected mobile device software application in order to use them to decipher the at least part of the stored unstructured sensitive data, for usage.
- As detailed above, another one or more parts of [sp_{2a-SR4} / sp_{2b-SPR43}] security parameter are used to obfuscate certain sensitive data, in the context of the execution of some CD4/2 code instructions, to avoid they will be exposed in clear in one or more working memories of the user's 1 mobile device. When, during the execution of certain CD4/2 code instructions, one or more processing devices in user's 1 mobile device require using the obfuscated sensitive data previously stored in the one or more working memories, they use the another one or more parts of [sp_{2a-SR4} / sp_{2b-SPR43}] (and the obfuscation rule referred above in connection to figure 2.b) to obtain the adequate data for the related calculation/process.
- During the protected mobile device software application life cycle, [ch_{2a-SR4}, ch_{2b-SPR43}] will be used to verify the integrity of the related parts of the application code of CD4/2(f1_{CD4/2}, f2_{CD4/2}, ...) functions and of at least parts of one or more security parameters embedded into the application code of CD4/2(f1_{CD4/2}, f2_{CD4/2}, ...) functions. When the protected mobile device software application requires verifying the referred integrity, [ch_{2a-SR4}, ch_{2b-SPR43}] network of checksums is de-obfuscated by the protected mobile device software application in order to use it in the verification process. As referred above, within these implementations ch_{2b-SPR43} = ch_{2b-SPR41};
   - According to the alternative implementations referred above, ch_{2b-SPR43} = ch_{2b-SPR41} and a parameter into sp_{CDs-assignment} has been set to a given value such that associated one or more parts of [ch_{2a-SR4} / ch_{2b-SPR43}] network of checksums will be used to verify the integrity of related parts of the application code of CD4/2(f1_{CD4/2}, f2_{CD4/2}, ...) functions and of related at least parts of one or more security parameters embedded into the application code of CD4/2(f1_{CD4/2}, f2_{CD4/2}, ...) functions;
- During the protected mobile device software application life cycle, [or_{2a-SR4}, or_{2b-SPR43}] will be used to de-obfuscate the related part of the application code of CD4/2(f1_{CD4/2}, f2_{CD4/2}, ...) functions, the related part of the [sp_{2a-SR4}, sp_{(i+1)-SR4}, sp_{(i+2)-SR4} ..., sp_{q-SR4}] and the related part of the [ch_{2a-SR4}, ch_{(i+1)-SR4}, ch_{(i+2)-SR4}..., ch_{q-SR4}] embedded into the application code of CD4/2(f1_{CD4/2}, f2_{CD4/2}, ...) functions. When the protected mobile device software application requires using said referred part of the application code / embedded security parameters / embedded networks of checksums, the corresponding de-obfuscation process is applied by using [or_{2a-SR4} / or_{2b-SPR43}]. As referred above, within these implementations or_{2b-SPR43}= or_{2b-SPR41};
   - According to the alternative implementations referred above or_{2b-SPR43} = or_{2b-SPR41} and a parameter into sp_{CDs-assignment} is set to a given value such that one or more parts of [or_{2a-SR4} / or_{2b-SPR43}] obfuscation rule (those parts associated to the given value of the parameter) will be used to de-obfuscate by the protected mobile device software application a part of the application code / embedded security parameters / embedded networks of checksums of the replica of fi_{CD4/2} function into CD4/2 that is associated to the given value of the parameter when the protected mobile device software application requires usage of said part of the application code / embedded security parameters / embedded networks of checksums.

In a particular example processes including up to step 13 has already been performed so the protected mobile device software application into user's 1 mobile device is in a party-security personalized status. As described above, in step (14a) a successive request is sent from the user's 1 mobile device and received in step (14b) by the provider of personalization services. Within this example, at the starting of step (14c), one or more processing devices of the provider of personalization services verifies whether the request has been received (step 14b) later than a predefined period of time after security personalization data was sent to the protected mobile device software application in step (12).

If the request has been received later than said predefined period of time, then the partly-security personalized protected mobile device software application associated to the user's 1 mobile device expires in the system of the provider of personalization services. According to some implementations, the provider of personalization services notifies (not illustrated in figure 1) to service provider 1 about the expiration status of the protected mobile device software application associated to the user's 1 mobile device. Also, a notification indicating that the partly-security personalized protected mobile device software application has expired is sent to the user's 1 mobile device and received in the user's 1 mobile device.

So according to some implementations one or more processing devices in the system of the provider of personalization services make a partly-security personalized protected mobile device software application expiring if a request for a security personalization of at least another one or more first code domains (e.g. CD4/2) is received later than a predefined period of time after security personalization data related to a previous request for a security personalization of at least one (e.g. CD4/1) or another different one of the one or more first code domains was sent to the protected mobile device software application being in either a non-personalized or in a partly-personalized security status. This approach further increases the security of the protected mobile device software application.

Also, according to some implementation, a notification from the provider of personalization services indicating that the partly-security personalized protected mobile device software application has expired is sent to the user's 1 mobile device and received in the user's 1 mobile device.

According to some implementations:
- [sp_{1b-SPR43}, or_{1b-SPR43}, ch_{1b-SPR43}] in obfuscated format are sent to (step (12)) and stored in (step (13) the protected mobile device software application in user's 1 mobile device. The received and stored [sp_{1b-SPR43}, or _{1b-SPR43}, ch_{1b-SPR43}] security personalization data enables CD4/1 first code domain for regular operation.
- One or more parts of [sp_{1a-SR4}, sp_{1b-SPR43}] will be later used to validate that a request to preregister a first service, associated to service provider 1, in the protected mobile device software application is received from user's 1 mobile device and has been triggered from CD4/1 with the proper security personalization. In a particular example user 1 obtains an activation code and it is sent in the context of the first service preregistration process, from the user's 1 mobile device to the provider of personalization services, for validation. In a particular example steps (14a) to (14e) are also performed in the context of the first service preregistration process (e.g. upon successful validation of the activation code referred in the previous example), so [sp_{2b-SPR43}, or_{2b-SPR43}, ch_{2b-SPR43}] will be received and stored in obfuscated format in the part of the application data base associated to CD4/2 before the first service preregistration process will finalize.
- One or more parts of [sp_{2a-SR4}, sp_{2b-SPR43}] will be later used to validate that a request to register the above referred first service (the registration request being triggered from CD4/2 upon a previous successful preregistration of the first service), associated to service provider 1, in the protected mobile device software application is received from user's 1 mobile device and has been triggered from CD4/2 with the proper security personalization.
   In a particular example a PIN (Personal Identification Number) is selected by user 1 and inserted in user's 1 mobile device during the process of registering said first service into the protected mobile device software application and data sent to and stored in the protected mobile device software application data base during the preregistration process of said first service are used to authenticate the registration of the selected PIN in the system of service provider 1 (e.g. said data may permit to calculate a PIN-based dynamic credential that may be authenticated by the provider of personalization services, thus ensuring that the calculation has been performed from user's 1 mobile device and e.g. by functions into CD4/2, with the proper security personalization applied).
   If the validations are successful the registration process may successfully conclude (e.g. by sending data associated to the first service registration process to the user's 1 mobile device).

According to some implementation, in addition to setting a time limit between steps (12) and steps (14b) for the partly-security personalized protected mobile device software application to expire, another time limit associated to the overall pre-registration and registration process of the first service in the protected mobile device software application may be set, once the protected mobile device software application is already in a partly-security personalized status. Advantageously, these time limits may increase the security of the system.

Figure 2.g also relates to a scenario where the protected mobile device software application is installed in user's 2 mobile device (with DID_{USER2}), and steps (8), (9) and (10) take place in connection to said user's 2 mobile device. In the example illustrated in figure 2.g the life cycle security personalization registry assigned by the security personalization module to user's 2 mobile device is SPR32, which as referred above is in association to CD3/1, CD3/2 and CD1. Still is step (10) the assignment of the SPR32 life cycle security personalization registry to the user's 2 mobile device and to the protected mobile device software application is stored is the data base associated to mobile device software applications.

In more detail, according to some implementations the security personalization module may performs the following assignments and data preparation in step (10) (some of the data preparation processes could also be performed in a later stage, before sending the data to the protected mobile device software application), in connection to user's 2 mobile device and to the security personalization:
- Assignment of SPR32 in the context of the on-going security personalization process, associated to CD3/1, CD3/2 and CD1 and to DID_{USER2};
- Assigning to sp_{CDs-assigment} a data value associated to CD3/1 and CD3/2 such that, once personalized on security terms, the protected mobile device software application will use CD3/1, CD3/2 and CD1 during its execution. Within these implementations the data value is obfuscated by using a method that uses a security parameter that is embedded into a CD1 function and at least part of DID_{USER2}.
- Obfuscation of [sp_{1b-SPR32}, or _{1b-SPR32}, ch_{1b-SPR32}] by using an obfuscation algorithm and the obfuscation key to protect CD3/1 security personalization data, as illustrated in figure 2.g (in this security personalization process x = 3). Within these implementations:
   ∘ the first 10 digits of DID_{USER2} are part of the obfuscation key;
   ∘ [sp_{1a-SR3}, sp_{1b-SPR32}] becomes the two parts of the same security parameter:
      - One or more parts of [sp_{1a-SR3}, sp_{1b-SPR32}] will be used to validate that a request to preregister a first service, associated to service provider 1, in the protected mobile device software application is received from user's 2 mobile device (with DID_{USER2}) and has been triggered from CD3/1 with the proper security personalization;
      - Other one or more parts of [sp_{1a-SR3} / sp_{1b-SPR32}] security parameter will be used to protect data into certain parts of the data base of the protected mobile device software application (in this context, certain parts associated to CD3/1 and CD3/2). Within these embodiments, said other one or more parts of the security parameter are used to protect at least part of the part of the application data base that is not associated to code domains security personalization / assignment. When the protected mobile device software application receives data for storage into the at least part of the part of the data base that is not associated to code domains security personalization / assignment, those are ciphered by using the referred other one or more parts of [sp_{1a-SR3} / sp_{1b-SPR32}] security parameter, before being stored into the corresponding at least part of the part of the application data base.
      - Another one or more parts of [sp_{1a-SR3} / sp_{1b-SPR32}] security parameter are assigned as the security parameter that is part of the obfuscation key used to obfuscate [sp_{2b-SPR32}], [ch_{2b-SPR32}] and [or_{2b-SPR32}].
   ∘ [ch_{1a-SR3}, ch_{1b-SPR32}] becomes the two parts of the same network of checksums, that will be used to verify the integrity of parts of the application code of CD3/1(f1_{CD3/1}, f2_{CD3/1}, ...) functions and of at least parts of one or more security parameters embedded into the application code of CD3/1(f1_{CD3/1}, f2_{CD3/1}, ...) functions.
      - Within these implementations ch_{1b-SPR32} = ch_{1b-SPR31}];
      - According to some alternative implementations ch_{1b-SPR32} = ch_{1b-SPR31} and a parameter into sp_{CDs-assignment} is set to a given value such that one or more parts of [ch_{1a-SR3} / ch_{1b-SPR32}] network of checksums will be used to verify the integrity of parts of the application code of CD3/1(f1_{CD3/1}, f2_{CD3/1}, ...) functions and of at least parts of one or more security parameters embedded into the application code of CD3/1(f1_{CD3/1}, f2_{CD3/1}, ...) functions;
   ∘ [or_{1a-SR3}, or_{1b-SPR32}] becomes the two parts of the same obfuscation rule, that are used to obfuscate part of the application code of CD3/1(f1_{CD3/1}, f2_{CD3/1}, ...) functions together with part of the [sp_{1a-SR3}, sp_{3-SR3}, sp_{4-SR3} ..., sp_{h-SR3}] and part of the [ch_{1a-SR3}, ch_{3-SR3}, ch_{4-SR3} ..., ch_{h-SR3}] embedded into the application code of CD3/1(f1_{CD3/1}, f2_{CD3/1}, ...) functions.
      - Within these implementations or_{1b-SPR32} = or_{1b-SPR31};
      - According to some alternative implementations or_{1b-SPR32} = or_{1b-SPR31} and a parameter into sp_{CDs-assignment} is set to a given value such that one or more parts of [or_{1a-SR3} / or_{1b-SPR32}] obfuscation rule (those parts associated to the given value of the parameter) will be used to de-obfuscate by the protected mobile device software application a part of the application code / embedded security parameters / embedded networks of checksums of the replica of fi_{CD3/1} function into CD3/1 that is associated to the given value of the parameter.
- Obfuscation of [sp_{2b-SPR32}, or_{2b-SPR32}, ch_{2b-SPR32}] by using and obfuscation algorithm and the obfuscation key to protect CD3/2 security personalization data, as illustrated in figure 2.g (in this security personalization process x = 3). Within these implementations:
   ∘ the security parameter that is part of the obfuscation key is comprised by at least part of [sp_{1a-SR3}] and at least part of [sp_{1b-SPR32}]. The first 10 digits of DID_{USER2} are also part of the obfuscation key;
   ∘ [sp_{2a-SR3}, sp_{2b-SPR32}] becomes the two parts of the same security parameter:
      - One or more parts of [sp_{2a-SR3}, sp_{2b-SPR32}] will be used to validate that a request to register the above referred first service (the registration request being triggered from CD3/2 upon a previous successful preregistration of the first service), associated to service provider 1, in the protected mobile device software application is received from user's 2 mobile device (with DID_{USER2}) and has been triggered from CD3/2 with the proper security personalization;
      - Other one or more parts of [sp_{2a-SR3} / sp_{2b-SPR32}] security parameter will be used to protect certain unstructured sensitive data before being sent for storage to the protected mobile device software application into user's 2 mobile device (e.g. to protect keys/sensitive data necessary for the protected mobile device software application into user's 2 mobile device to calculate dynamic credentials associated to services provided by service provider 1; e.g. protection of session keys), when sp_{CDs-assignment} is set to the value associated to CD3/1 and CD3/2.
      - Another one or more parts of [sp_{2a-SR3} / sp_{2b-SPR32}] security parameter will be used by the protected mobile device software application into user's 2 mobile device to obfuscate certain sensitive data, in the context of the execution of some CD3/2 code instructions, to avoid they will be exposed in clear in one or more working memories of the mobile device, when sp_{CDs-assignment} is set to the value associated to CD3/1 and CD3/2.
   ∘ [ch_{2a-SR3}, ch_{2b-SPR32}] becomes the two parts of the same network of checksums, that will be used to verify the integrity of parts of the application code of CD3/2(f1_{CD3/2}, f2_{CD3/2}, ...) functions and of at least parts of one or more security parameters embedded into the application code of CD3/2(f1_{CD3/2}, f2_{CD3/2}, ...) functions.
      - Within these implementations ch_{2b-SPR32} = ch_{2b-SPR31};
      - According to some alternative implementations ch_{2b-SPR32} = ch_{2b-SPR31} and a parameter into sp_{CDs-assignment} is set to a given value such that one or more parts of [ch_{2a-SR3} / ch_{2b-SPR32}] network of checksums will be used to verify the integrity of parts of the application code of CD3/2(f1_{CD3/2}, f2_{CD3/2}, ...) functions and of at least parts of one or more security parameters embedded into the application code of CD3/2(f1_{CD3/2}, f2_{CD3/2}, ...) functions;
   ∘ [or_{2a-SR3}, or_{2b-SPR32}] becomes the two parts of the same obfuscation rule, that are used to obfuscate part of the application code of CD3/2(f1_{CD3/2}, f2_{CD3/2}, ...) functions together with part of the [sp_{2a-SR3}, sp_{(h+1)-SR3}, sp_{(h+2)-SR3} ..., sp_{p-SR3}] and part of the [ch_{2a-SR3}, ch_{(h+1)-SR3}, ch_{(h+2)-SR3} ..., ch_{p-SR3}] embedded into the application code of CD3/2(f1_{CD3/2}, f2_{CD3/2}, ...) functions.
      - Within these implementations or_{2b-SPR32} = or_{2b-SPR31};
      - According to some alternative implementations or_{2b-SPR32} = or_{2b-SPR31} and a parameter into sp_{CDs-assignment} is set to a given value such that one or more parts of [or_{2a-SR3} / or_{2b-SPR32}] obfuscation rule (those parts associated to the given value of the parameter) will be used to de-obfuscate by the protected mobile device software application a part of the application code / embedded security parameters / embedded networks of checksums of the replica of fi_{CD3/2} function into CD3/2 that is associated to the given value of the parameter.

These assignments and prepared data are stored in the data base associated to mobile device software applications, in relation to user's 2 mobile device, the protected mobile device software application and the security personalization process.

In step (11) of figure 1 at least part of the assigned life cycle security personalization registry, and the association to the user's mobile device and protected mobile device software application is sent to the corresponding service provider such that it may use at least part of it in the context of certain protected mobile device software application life cycle processes. According to some implementations (in connection to figure 2.g) at least part of the assignments and data associated to user's 2 mobile device and the security personalization of the protected mobile device software application is sent to service provider 1 for storage and/or for usage of at least part of it in the context of certain protected mobile device software application life cycle processes associated to user's 2 mobile device. In a particular example:
- The one or more parts of [sp_{1a-SR3}, sp_{1b-SPR32}] that will be used to validate that a request to preregister a first service, associated to service provider 1, in the protected mobile device software application is received from user's 2 mobile device (with DID_{USER2}) and has been triggered from CD3/1 with the proper security personalization and;
- The one or more parts of [sp_{2a-SR3}, sp_{2b-SPR32}] that will be used to validate that a request to register the above referred first service (the registration request being triggered from CD3/2 upon a previous successful preregistration of the first service), associated to service provider 1, in the protected mobile device software application is received from user's 2 mobile device (with DID_{USER2}) and has been triggered from CD3/2 with the proper security personalization;
are sent to service provider 1 for storage and for usage during the preregistration and the registration process, respectively, of a first service in the protected mobile device software application in user's 2 mobile device.

In step (12) of figure 1 security personalization data associated to the assigned life cycle security personalization registry is sent from the provider of personalization services to the user's mobile device. In particular, security personalization data associated to the life cycle security personalization registry related to the user's mobile device is sent to the non-security personalized protected mobile device software application in the user's mobile device. According to some implementations (in connection to figure 2.g) [sp_{1b-SPR32}, or_{1b-SPR32}, ch_{1b-SPR32}] are sent in obfuscated format to the protected mobile device software application in user's 2 mobile device.

In step (13) of figure 1 the user's mobile device receives the security personalization data associated to the life cycle security personalization registry that relates to the user's mobile device from the provider of personalization services, the security personalization data enabling in the non-security personalized protected mobile device software application at least one of the one or more first code domains for regular operation, said personalization related to security parameters and/or obfuscation rules and/or code checksums data that are at least partly available in the one or more second code domains and that are required to enable the at least one of the one or more first code domains for regular operation.

According to some implementations the enablement of the at least one of the one or more first code domains is associated to one or more security parameters related to the life cycle security personalization registry (e.g. sp_{1b-SPR32} related to the life cycle security personalization registry SPR32), that are different than the corresponding ones of the security personalization registry (e.g. sp_{1b-SPR21}, sp_{1b-SPR31}, sp_{1b-SPR41}, ..., sp_{1b-SPRi1}, .... sp_{1b-SPRn1} in connection to I-SPR)

According to some implementations (in connection to figure 2.g) the user's 2 mobile device receives in obfuscated format (the obfuscation using a method that uses a security parameter that is embedded into a CD1 function and at least part of DID_{USER2}) the data value for storage in the part of the protected mobile device software application associated to sp_{CDs-assigment}, said value making the protected mobile device software application to use CD3/1, CD3/2 and CD1 during its execution. Within these implementations the user's 2 mobile device also receives [sp_{1b-SPR32}, or_{1b-SPR32}, ch_{1b-SPR32}] in obfuscated format from the provider of personalization services and they are stored in the part of the protected mobile device software application data base that is associated to CD3/1 (as illustrated in figure 2.j). The received and stored [sp_{1b-SPR32}, or_{1b-SPR32}, ch_{1b-SPR32}] security personalization data enables CD3/1 first code domain for regular operation, the obfuscation of said data being related to security parameters and/or obfuscation rules and/or code checksums data that are at least partly available in CD1 second code domain and that are required to enable CD3/1 first code domain for regular operation, as described in connection to figure 2.d. Advantageously, after the above security personalization has been performed, the referred at least one of the one or more first code domains may be used to regularly perform the associated application life cycle functions.

During its life cycle the protected mobile device software application will be capable to de-obfuscate sp_{CDs-assigment} and to determine that CD3/1, CD3/2 and CD1 must be used during its execution. Also, the protected mobile device software application will be able to de-obfuscate [sp_{1b-SPR32}, or _{1b-SPR32}, ch_{1b-SPR32}] by using the obfuscation algorithm and the obfuscation key that protects CD3/1 security personalization data, as already illustrated in connection to figure 2.g (x = 3). More in detail:
- In order to request the preregistration of a first service, one or more parts of [sp_{1a-SR3} / sp_{1b-SPR32}] are de-obfuscated by the protected mobile device software application, and a calculation based on the de-obfuscated one or more parts of [sp_{1a-SR3} / sp_{1b-SPR32}] is sent to service provider 1 for verification that the request is sent from the appropriate device and has been triggered from the adequate code domain (CD3/1) with the proper security personalization. As referred above, service provider 1 has previously stored the one or more parts of [sp_{1a-SR3} / sp_{1b-SPR32}] in association to the user's 2 mobile device, to use them during the verification process.
- As detailed above, other one or more parts of [sp_{1a-SR3} / sp_{1b-SPR32}] security parameter are used to protect at least part of the part of the application data base associated to CD3/1 and CD3/2 (and not associated to code domains security personalization / assignment). When the protected mobile device software application requires usage of data stored into said at least part of the part of the data base, the other one or more parts of [sp_{1a-SR3} / sp_{1b-SPR32}] security parameter are de-obfuscated by the protected mobile device software application in order to use them to decipher the data into the data base, for usage.
- Another one or more parts of [sp_{1a-SR3} / sp_{1b-SPR32}] security parameter will be de-obfuscated by the protected mobile device software application in order to use them to calculate the obfuscation key to de-obfuscate [sp_{2b-SPR32}], [ch_{2b-SPR32}] and [or_{2b-SR32}], when required.
- During the protected mobile device software application life cycle, [ch_{1a-SR3}, ch_{1b-SPR32}] will be used to verify the integrity of the related parts of the application code of CD3/1(f1_{CD3/1}, f2_{CD3/1}, ...) functions and of at least parts of one or more security parameters embedded into the application code of CD3/1(f1_{CD3/1}, f2_{CD3/1}, ...) functions. When the protected mobile device software application requires verifying the referred integrity, [ch_{1a-SR3}, ch_{1b-SPR32}] network of checksums is de-obfuscated by the protected mobile device software application in order to use it in the verification process. As referred above, within these implementations ch_{1b-SPR32} = ch_{1b-SPR31};
   - According to the alternative implementations referred above, ch_{1b-SPR32} = ch_{1b-SPR3}, and a parameter into sp_{CDs-assignment} has been set to a given value such that associated one or more parts of [ch_{1a-SR3} / ch_{1b-SPR32}] network of checksums will be used to verify the integrity of related parts of the application code of CD3/1(f1_{CD3/1}, f2_{CD3/1}, ...) functions and of related at least parts of one or more security parameters embedded into the application code of CD3/1(f1_{CD3/1}, f2_{CD3/1}, ...) functions;
- During the protected mobile device software application life cycle, [or_{1a-SR3}, or_{1b-SPR32}] will be used to de-obfuscate the related part of the application code of CD3/1(f1_{CD3/1}, f2_{CD3/1}, ...) functions, the related part of the [sp_{1a-SR3}, sp_{3-SR3}, sp_{4-SR3} ..., sp_{h-SR3}] and the related part of the [ch_{1a-SR3}, ch_{3-SR3}, ch_{4-SR3} ..., ch_{h-SR3}] embedded into the application code of CD3/1(f1_{CD3/1}, f2_{CD3/1}, ...) functions. When the protected mobile device software application requires using said referred part of the application code / embedded security parameters / embedded networks of checksums, the corresponding de-obfuscation process is applied by using [or_{1a-SR3} / or_{1b-SPR32}]. As referred above, within these implementations or_{1b-SRP32} = or_{1b-SPR31};
   - According to the alternative implementations referred above or_{1b-SPR32} = or_{1b-SPR31} and a parameter into sp_{CDs-assignment} is set to a given value such that one or more parts of [or_{1a-SR3} / or_{1b-SPR32}] obfuscation rule (those parts associated to the given value of the parameter) will be used to de-obfuscate by the protected mobile device software application a part of the application code / embedded security parameters / embedded networks of checksums of the replica of fi_{CD3/1} function into CD3/1 that is associated to the given value of the parameter when the protected mobile device software application requires usage of said part of the application code / embedded security parameters / embedded networks of checksums.

In reference again to figure 1, according to some implementations different groups of not-enabled one or more first code domains are personalized in security terms at different time instants. This approach increases the security of the protected mobile device software application.

In the implementations described in figures 2.a to 2.l, CDx/2 are another first code domains. Steps (14a) to (14e) described herein below are in connection to the protected mobile device software application installed in user's 2 mobile device, the assigned life cycle security personalization registry being SPR32 and sp_{CDs-assigment} having an assigned data value associated to CD3/1 and CD3/2, so in this context CD3/2 is the another first code domain.

Also, for simplicity, in the context of figures 2.a to 2.l, steps (15a) to (15e) and steps (16a) to (16e) does not take place.

As already described in figure 1, step (14a) represents a successive request for a security personalization of at least another one or more first code domains, sent from the user's mobile device to the provider of personalization services (in the current context: a security personalization of CD3/2 sent from user's 2 mobile device).

Within these implementations, each user's mobile device request is triggered by one or more processing devices by using executable code belonging to one of the one or more first code domains that has previously been enabled for regular operation (in the current context: i.e. executable code belonging to CD3/1, the request triggered from user's 2 mobile device).

In step (14a) of figure 1 a successive request is sent from the user's 2 mobile device to the provider of personalization services and in step (14b) the provider of personalization services receives the successive request from the user's 2 mobile device, and one or more processing devices of the provider of personalization services may obtain in step (14c) security personalization data ([sp_{2b-SPR32}, or_{2b-SPR32}, ch_{2b-SPR32}]) from the life cycle security personalization registry previously assigned to the user's mobile device (from SPR32). According to some implementations the security personalization data has been previously obtained from the security personalization registry: it can be made e.g. in step (10), where as described above ([sp_{2b-SPR32}, or_{2b-SPR32}, ch_{2b-SPR32}] has been stored in obfuscated format in the data base associated to protected mobile device software applications, in relation to user's 2 mobile device, the protected mobile device software application and the security personalization process.

In step (14d) of figure 1 the security personalization data associated to the life cycle security personalization registry SPR32 previously assigned to the user's 2 mobile device is sent from the provider of personalization services to the user's 2 mobile device. In particular, security personalization data associated to the life cycle security personalization registry (SPR32) is sent to the partly-security personalized protected mobile device software application. According to some implementations (in connection to figure 2.g) [sp_{2b-SPR32}, or_{2b-SPR32}, ch_{2b-SPR32}] are sent in obfuscated format to the protected mobile device software application in user's 2 mobile device.

In step (14e) of figure 1 the user's 2 mobile device receives from the provider of personalization services the security personalization data ([sp_{2b-SPR32}, or_{2b-SPR32}, ch_{2b-SPR32}] in obfuscated format) associated to the life cycle security personalization registry (SPR32) related to the user's 2 mobile device in the partly-security personalized protected mobile device software application, the data are stored in the part of the protected mobile device software application data base that is associated to CD3/2 (as illustrated in figure 2.j), the security personalization data enabling in the application for regular operation the at least another one or more first code domains (CD3/2) that is associated to the particular request.

According to some implementations, at least one of the another one or more first code domains (CD3/2) is paired on security terms by the provider of personalization services to one or more first code domains (CD3/1) via the security personalization ([sp_{2b-SPR32}, or_{2b-SPR32}, ch_{2b-SPR32}]), said personalization related to security parameters (at least part of [sp_{1a-SR3}, sp_{1b-SPR32}]) and/or obfuscation rules (at least part of [or_{1a-SR3}, or_{1b-SPR32}]) and/or code checksums data (at least part of [ch_{1a-SR3}, ch_{1b-SPR32}]) that are at least partly available in the one or more first code domains (CD3/1) and that are required to enable the at least one of the another one or more first code domains for regular operation.

According to some implementations, at least part of the security parameters and/or obfuscation rules and/or code checksums data required to enable the at least one of the another one or more first code domains for regular operation have been previously sent from the provider of personalization services to the user's mobile device and are available in a part of the protected mobile device software application data base that is associated to one or more first code domains that has previously been enabled for regular operation ([sp_{1b-SPR32}]) and/or [or_{1b-SPR32}]) and/or [ch_{1b-SPR32}] are available in a part of the application data base that is associated to CD3/1). Advantageously, after the above security personalization has been performed, the referred at least another one or more first code domains may be used to regularly perform the associated application life cycle functions.

During its life cycle the protected mobile device software application will be able to de-obfuscate [sp_{2b-SPR32}, or_{2b-SPR32}, ch_{2b-SPR32}] by using the obfuscation algorithm and the obfuscation key that protects CD3/2 security personalization data, as already illustrated in connection to figure 2.g (x = 3). More in detail:
- In order to request the registration of the above referred first service (the registration request being triggered from CD3/2 upon a previously successful preregistration of the first service), one or more parts of [sp_{2a-SR3} / sp_{2b-SPR32}] are de-obfuscated by the protected mobile device software application, and a calculation based on the de-obfuscated one or more parts of [sp_{2a-SR3} / sp_{2b-SPR32}] is sent to service provider 1 for verification that the request is sent from the appropriate device and has been triggered from the adequate code domain (CD3/2) with the proper security personalization. As referred above, service provider 1 has previously stored the one or more parts of [sp_{2a-SR3} / sp_{2b-SPR32}] in association to the user's 2 mobile device, to use them during the verification process.
- As detailed above, other one or more parts of [sp_{2a-SR3} / sp_{2b-SPR32}] security parameter are used to protect certain unstructured sensitive data before being sent for storage to the protected mobile device software application in user's 2 mobile device. According to some implementations when the protected mobile device software application requires usage of at least part of the unstructured sensitive data, the other one or more parts of [sp_{2a-SR3} / sp_{2b-SPR32}] security parameter are de-obfuscated by the protected mobile device software application in order to use them to decipher the at least part of the stored unstructured sensitive data, for usage.
- As detailed above, another one or more parts of [sp_{2a-SR3} / sp_{2b-SPR32}] security parameter are used to obfuscate certain sensitive data, in the context of the execution of some CD3/2 code instructions, to avoid they will be exposed in clear in one or more working memories of the user's 2 mobile device. When, during the execution of certain CD3/2 code instructions, one or more processing devices in user's 2 mobile device require using the obfuscated sensitive data previously stored in the one or more working memories, they use the another one or more parts of [sp_{2a-SR3} / sp_{2b-SPR32}] (and the obfuscation rule referred above in connection to figure 2.b) to obtain the adequate data for the related calculation/process.
- During the protected mobile device software application life cycle, [ch_{2a-SR3}, ch_{2b-SPR32}] will be used to verify the integrity of the related parts of the application code of CD3/2(f1_{CD3/2}, f2_{CD3/2}, ...) functions and of at least parts of one or more security parameters embedded into the application code of CD3/2(f1_{CD3/2}, f2_{CD3/2}, ...) functions. When the protected mobile device software application requires verifying the referred integrity, [ch_{2a-SR3}, ch_{2b-SPR32}] network of checksums is de-obfuscated by the protected mobile device software application in order to use it in the verification process. As referred above, within these implementations ch_{2b-SPR32} = ch_{2b-SPR31};
   - According to the alternative implementations referred above, ch_{2b-SPR32} = ch_{2b-SPR31} and a parameter into sp_{CDs-assgnment} has been set to a given value such that associated one or more parts of [ch_{2a-SR3} / ch_{2b-SPR32}] network of checksums will be used to verify the integrity of related parts of the application code of CD3/2(f1_{CD3/2}, f2_{CD3/2}, ...) functions and of related at least parts of one or more security parameters embedded into the application code of CD3/2(f1_{CD3/2}, f2_{CD3/2}, ...) functions;
- During the protected mobile device software application life cycle, [or_{2a-SR3}, or_{2b-SPR32}] will be used to de-obfuscate the related part of the application code of CD3/2(f1_{CD3/2}, f2_{CD3/2}, ...) functions, the related part of the [sp_{2a-SR3}, sp_{(h+1)-SR3}, sp_{(h+2)-SR3} ..., sp_{p-SR3}] and the related part of the [ch_{2a-SR3}, ch_{(h+1)-SR3}, ch_{(h+2)-SR3} ..., ch_{p-SR3}] embedded into the application code of CD3/2(f1_{CD3/2}, f2_{CD3/2}, ...) functions. When the protected mobile device software application requires using said referred part of the application code / embedded security parameters / embedded networks of checksums, the corresponding de-obfuscation process is applied by using [or_{2a-SR3} / or_{2b-SPR32}]. As referred above, within these implementations or_{2b-SPR32} = or_{2b-SPR31};
   - According to the alternative implementations referred above or_{2b-SPR32} = or_{2b-SPR31} and a parameter into sp_{CDs-assignment} is set to a given value such that one or more parts of [or_{2a-SR3} / or_{2b-SPR32}] obfuscation rule (those parts associated to the given value of the parameter) will be used to de-obfuscate by the protected mobile device software application a part of the application code / embedded security parameters / embedded networks of checksums of the replica of fi_{CD3/2} function into CD3/2 that is associated to the given value of the parameter when the protected mobile device software application requires usage of said part of the application code / embedded security parameters / embedded networks of checksums.

In a particular example processes including up to step 13 has already been performed so the protected mobile device software application into user's 2 mobile device is in a party-security personalized status. As described above, in step (14a) a successive request is sent from the user's 2 mobile device and received in step (14b) by the provider of personalization services. Within this example, at the starting of step (14c), one or more processing devices of the provider of personalization services verifies whether the request has been received (step 14b) later than a predefined period of time after security personalization data was sent to the protected mobile device software application in step (12).

If the request has been received later than said predefined period of time, then the partly-security personalized protected mobile device software application associated to the user's 2 mobile device expires in the system of the provider of personalization services. According to some implementations, the provider of personalization services notifies (not illustrated in figure 1) to service provider 1 about the expiration status of the protected mobile device software application associated to the user's 2 mobile device. Also, a notification indicating that the partly-security personalized protected mobile device software application has expired is sent to the user's 2 mobile device and received in the user's 2 mobile device.

So according to some implementations one or more processing devices in the system of the provider of personalization services make a partly-security personalized protected mobile device software application expiring if a request for a security personalization of at least another one or more first code domains (e.g. CD3/2) is received later than a predefined period of time after security personalization data related to a previous request for a security personalization of at least one (e.g. CD3/1) or another different one of the one or more first code domains was sent to the protected mobile device software application being in either a non-personalized or in a partly-personalized security status. This approach further increases the security of the protected mobile device software application.

Also, according to some implementation, a notification from the provider of personalization services indicating that the partly-security personalized protected mobile device software application has expired is sent to the user's 2 mobile device and received in the user's 2 mobile device.

According to some implementations:
- [sp_{1b-SPR32}, or_{1b-SPR32}, ch_{1b-SPR32}] in obfuscated format are sent to (step (12)) and stored in (step (13) the protected mobile device software application in user's 2 mobile device. The received and stored [sp_{1b-SPR32}, or_{1b-SPR32}, ch_{1b-SPR32}] security personalization data enables CD3/1 first code domain for regular operation.
- One or more parts of [sp_{1a-SR3}, sp_{1b-SPR32}] will be later used to validate that a request to preregister a first service, associated to service provider 1, in the protected mobile device software application is received from user's 2 mobile device and has been triggered from CD3/1 with the proper security personalization. In a particular example user 2 obtains an activation code and it is sent in the context of the first service preregistration process, from the user's 2 mobile device to the provider of personalization services, for validation. In a particular example steps (14a) to (14e) are also performed in the context of the first service preregistration process (e.g. upon successful validation of the activation code referred in the previous example), so [sp_{2b-SPR32}, or_{2b-SPR32}, ch_{2b-SPR32}] will be received and stored in obfuscated format in the part of the application data base associated to CD3/2 before the first service preregistration process will finalize.
- One or more parts of [sp_{2a-SR3}, sp_{2b-SPR32}] will be later used to validate that a request to register the above referred first service (the registration request being triggered from CD3/2 upon a previous successful preregistration of the first service), associated to service provider 1, in the protected mobile device software application is received from user's 2 mobile device and has been triggered from CD3/2 with the proper security personalization.
   In a particular example a PIN (Personal Identification Number) is selected by user 2 and inserted in user's 2 mobile device during the process of registering said first service into the protected mobile device software application and data sent to and stored in the protected mobile device software application data base during the preregistration process of said first service are used to authenticate the registration of the selected PIN in the system of service provider 1 (e.g. said data may permit to calculate a PIN-based dynamic credential that may be authenticated by the provider of personalization services, thus ensuring that the calculation has been performed from user's 2 mobile device and e.g. by functions into CD3/2, with the proper security personalization applied).
   If the validations are successful the registration process may successfully conclude (e.g. by sending data associated to the first service registration process to the user's 2 mobile device).

According to some implementation, in addition to setting a time limit between steps (12) and steps (14b) for the partly-security personalized protected mobile device software application to expire, another time limit associated to the overall pre-registration and registration process of the first service in the protected mobile device software application may be set, once the protected mobile device software application is already in a partly-security personalized status. Advantageously, these time limits may increase the security of the system.

Within the embodiments described in connection to figure 2.g, the life cycle security personalization registry assigned to user's 1 mobile device (SPR43) is different than the life cycle security personalization registry assigned to user's 2 mobile device (SPR32); and they are both different than the security personalization registry used when generating the security personalized mobile device software application (I-SPR).

Also, as extensively detailed in connection to figure 2.g, according to some implementations the one or more first/second code domains associated in one or more memories of the provider of personalization services to the protected mobile device software application in a mobile device of a first user (CD4/1 and CD4/2 first code domains, associated to user's 1 mobile device) are different than the one or more first/second code domains associated in one or more memories of the provider of personalization services to the protected mobile device software application in a mobile device of a second user (CD3/1 and CD3/2 first code domains, associated to user's 2 mobile device).

And, according to some implementations the one or more first code domains enabled via first security personalization data received in the protected mobile device software application installed in a mobile device of a first user (CD4/1 and CD4/2 first code domains, associated to user's 1 mobile device) are different than the one or more first code domains enabled via second security personalization data received in the protected mobile device software application installed in a mobile device of a second user (CD3/1 and CD3/2 first code domains, associated to user's 2 mobile device).

As also described above, according to some implementations the security personalization data received in the mobile device of a first user, the data (e.g. [sp_{1b-SPR43}], [ch_{1b-SPR43}], [or_{1b-SPR43}] and [sp_{2b-SPR43}], [ch_{2b-SPR43}], [or_{2b-SPR43}] stored in the application data base in obfuscated format) enabling in the application one or more first code domains (CD4/1 and CD4/2) for regular operation and associated to a first life cycle security personalization registry (SPR43) that comprises first security parameters and/or obfuscation rules and/or code checksums data ([sp_{1b-SPR43}], [ch_{1b-SPR43}], [or_{1b-SPR43}] and [sp_{2b-SPR43}], [ch_{2b-SPR43}], [or_{2b-SPR43}]), are different than the security personalization data received in the mobile device of a second user, the data (e.g. [sp_{1b-SPR32}], [ch_{1b-SPR32}], [or_{1b-SPR32}] and [sp_{2b-SPR32}], [ch_{2b-SPR32}], [or_{2b-SPR32}] stored in the application data base in obfuscated format) enabling in the application one or more first code domains (CD3/1 and CD3/2) for regular operation and associated to a second life cycle security personalization registry (SPR32) that comprises second security parameters and/or obfuscation rules and/or code checksums data ([sp_{1b-SPR32}], [ch_{1b-SPR32}], [or_{1b-SPR32}] and [sp_{2b-SPR32}], [ch_{2b-SPR32}], [or_{2b-SPR32}]).

Advantageously, an attacker is unaware of the code domains and security personalization data that will be assigned to / stored in the protected mobile device software application of a given user, to enable assigned first code domains for regular operation, so it makes extremely hard succeeding in a later attack. This attack is even harder if time limits are established to perform certain enablement sensitive process, as described above.

Furthermore, thanks to the unpredictable code domains assignment process and different security personalization data applied to the protected mobile device software application in different user's mobile devices, to enable for regular operation assigned first code domains, the incentive for a massive attack drastically decline.

Also, the code domains assignment and the security personalization data may be modified during the life cycle of a protected mobile device software application installed in the mobile device of a given user, thus it further increases the security of the system.

Figures 2k and 2l relates to some implementations where a protected mobile device software application is re-personalized on security terms along its life cycle. In particular, they refer to a security re-personalization process of the protected mobile device software application installed into user's 2 mobile device (as explained above said application is already personalized on security terms in relation to SPR32 life cycle security personalization registry).

According to some implementation a security re-personalization is initiated (e.g. in step (17) of figure 1) by one or more processing devices within the system of the provider of personalization services (e.g. a period of time after a previous security personalization / re-personalization was performed; e.g. due to risk criteria).

According to other implementations the security re-personalization process is initiated as a result of an on-line connection stablished (not illustrated in figure 1) from the user's 2 mobile device towards to system of the provider of personalization services. In a particular example a PIN-based dynamic credential is received from the user's 2 mobile device during the on-line connection, and successful verification of said credential is required in order one or more processing devices of the system of the provider of personalization services will initiate (e.g. in step (17) of figure 1) the security re-personalization process.

As illustrated in figure 1, in step (17) one or more processing devices within the system of the provider of personalization services obtain security re-personalization data associated to the life cycle security personalization registry (e.g. in case SPR32 will contain data associated to one or more security re-personalization processes), or to other life cycle security personalization registry related to the user's mobile device, from the data base associated to protected mobile device software applications.

Within the embodiments described herein below, the security re-personalization of the protected mobile device software application into user's 2 mobile device will be performed in association to SPR2j life cycle security personalization registry, i.e. in step (17) of figure 1 the new life cycle security personalization registry assigned by the security personalization module to user's 2 mobile device is SPR2j, which is in association to CD2/1, CD2/2 and CD1. Still is step (17) the assignment of the new SPR2j life cycle security personalization registry to the user's 2 mobile device is stored is the data base associated to mobile device software applications (data related to SPR32, currently assigned to the protected mobile device software application in user's 2 mobile device, are still valid, as at this stage the re-personalization process has still not been performed)

In more detail (taking also as reference figures 2k and 2l), according to some implementations the security personalization module may performs the following new assignments and data preparation in step (17) of figure 1, in connection to user's 2 mobile device and to the security re-personalization:
- Assignment of SPR2j in the context of the on-going security re-personalization process, associated to CD2/1, CD2/2 and CD1 and to DID_{USER2};
- Assigning to sp_{CDs-assigment} a data value associated to CD2/1 and CD2/2 such that, once personalized on security terms, the protected mobile device software application will use CD2/1, CD2/2 and CD1 during its execution. Within these implementations the data value is obfuscated by using a method that uses a security parameter that is embedded into a CD1 function and at least part of DID_{USER2}.
- Obfuscation of [sp_{1b-SPR2j}, or_{1b-SPR2j}, ch_{1b-SPR2j}] by using an obfuscation algorithm and the obfuscation key to protect CD2/1 security personalization data, as illustrated in figure 2.k (in this security personalization process x = 2). Within these implementations:
   ∘ the first 10 digits of DID_{USER2} are part of the obfuscation key;
   ∘ [sp_{1a-SR2}, sp_{1b-SPR2j}] becomes the two parts of the same security parameter:
      - One or more parts of [sp_{1a-SR2}, sp_{1b-SPR2j}] will be used to validate that a request to preregister a first service (if said preregistration is pending), associated to service provider 1, in the protected mobile device software application is received from user's 2 mobile device (with DID_{USER2}) and has been triggered from CD2/1 with the proper security personalization;
      - Other one or more parts of [sp_{1a-SR2} / sp_{1b-SPR2j}] security parameter will be used to protect data into certain parts of the data base of the protected mobile device software application (in this context, certain parts associated to CD2/1 and CD2/2). Within these embodiments, said other one or more parts of the security parameter are used to protect at least part of the part of the application data base that is not associated to code domains security personalization / assignment. When the protected mobile device software application receives data for storage into the at least part of the part of the data base that is not associated to code domains security personalization / assignment, those are ciphered by using the referred other one or more parts of [sp_{1a-SR2} / sp_{1b-SPR2j}] security parameter, before being stored into the corresponding at least part of the part of the application data base.
      - Another one or more parts of [sp_{1a-SR2} / sp_{1b-SPR2j}] security parameter are assigned as the security parameter that is part of the obfuscation key used to obfuscate [sp_{2b-SPR2j}], [ch_{2b-SPR2j}] and [or_{2b-SPR2j}].
   ∘ [ch_{1a-SR2}, ch_{1b-SPR2j}] becomes the two parts of the same network of checksums, that will be used to verify the integrity of parts of the application code of CD2/1(f1_{CD2/1}, f2_{CD2/1}, ...) functions and of at least parts of one or more security parameters embedded into the application code of CD2/1(f1_{CD2/1}, f2_{CD2/1}, ...) functions.
      - Within these implementations ch_{1b-SPR2j} = ch_{1b-SPR21};
      - According to some alternative implementations ch_{1b-SPR2j} = ch_{1b-SPR21} and a parameter into sp_{CDs-assignment} is set to a given value such that one or more parts of [ch_{1a-SR2} / ch_{1b-SPR2j}] network of checksums will be used to verify the integrity of parts of the application code of CD2/1(f1_{CD2/1}, f2_{CD2/1}, ...) functions and of at least parts of one or more security parameters embedded into the application code of CD2/1(f1_{CD2/1}, f2_{CD2/1}, ...) functions;
   ∘ [or_{1a-SR2}, or_{1b-SPR2j}] becomes the two parts of the same obfuscation rule, that are used to obfuscate part of the application code of CD2/1(f1_{CD2/1}, f2_{CD2/1}, ...) functions together with part of the [sp_{1a-SR2}, sp_{3-SR2}, sp_{4-SR2} ..., sp_{g-SR2}] and part of the [ch_{1a-SP2}, ch_{3-SR2}, ch_{4-SR2} ..., ch_{g-SR2}] embedded into the application code of CD2/1(f1_{CD2/1}, f2_{CD2/1}, ...) functions.
      - Within these implementations or_{1b-SPR2j} = or_{1b-SPR21};
      - According to some alternative implementations or_{1b-SPR2j} = or_{1b-SPR21} and a parameter into sp_{CDs-assignment} is set to a given value such that one or more parts of [or_{1a-SR2} / or_{1b-SPR2j}] obfuscation rule (those parts associated to the given value of the parameter) will be used to de-obfuscate by the protected mobile device software application a part of the application code / embedded security parameters / embedded networks of checksums of the replica of fi_{CD2/1} function into CD2/1 that is associated to the given value of the parameter.
- Obfuscation of [sp_{2b-SPR2j}, or_{2b-SPR2j}, ch_{2b-SPR2j}] by using and obfuscation algorithm and the obfuscation key to protect CD2/2 security personalization data, as illustrated in figure 2.k (in this security personalization process x = 2). Within these implementations:
   ∘ the security parameter that is part of the obfuscation key is comprised by at least part of [sp_{1a-SR2}] and at least part of [sp_{1b-SPR2j}]. The first 10 digits of DID_{USER2} are also part of the obfuscation key;
   ∘ [sp_{2a-SR2}, sp_{2b-SPR2j}] becomes the two parts of the same security parameter:
      - One or more parts of [sp_{2a-SR2}, sp_{2b-SPR2j}] will be used to validate that a request to register the above referred first service (the registration request being triggered from CD2/2 upon a previous successful preregistration of the first service, if said preregistration was pending), associated to service provider 1, in the protected mobile device software application is received from user's 2 mobile device (with DID_{USER2}) and has been triggered from CD2/2 with the proper security personalization;
      - Other one or more parts of [sp_{2a-SR2} / sp_{2b-SPR2j}] security parameter will be used to protect certain unstructured sensitive data before being sent for storage to the protected mobile device software application into user's 2 mobile device (e.g. to protect keys/sensitive data necessary for the protected mobile device software application into user's 2 mobile device to calculate dynamic credentials associated to services provided by service provider 1; e.g. protection of session keys), when sp_{CDs-assignment} is set to the value associated to CD2/1 and CD2/2.
      - Another one or more parts of [sp_{2a-SR2} / sp_{2b-SPR2j}] security parameter will be used by the protected mobile device software application into user's 2 mobile device to obfuscate certain sensitive data, in the context of the execution of some CD2/2 code instructions, to avoid they will be exposed in clear in one or more working memories of the mobile device, when sp_{CDs-assignment} is set to the value associated to CD2/1 and CD2/2.
   ∘ [ch_{2a-SR2}, ch_{2b-SPR2j}] becomes the two parts of the same network of checksums, that will be used to verify the integrity of parts of the application code of CD2/2(f1_{CD2/2}, f2_{CD2/2,} ...) functions and of at least parts of one or more security parameters embedded into the application code of CD2/2(f1_{CD2/2}, f2_{CD2/2,} ...) functions.
      - Within these implementations ch_{2b-SPR2j} = ch_{2b-SPR21};
      - According to some alternative implementations ch_{2b-SPR2j} = ch_{2b-SPR21} and a parameter into sp_{CDs-assignment} is set to a given value such that one or more parts of [ch_{2a-SR2} / ch_{2b-SPR2j}] network of checksums will be used to verify the integrity of parts of the application code of CD2/2(f1_{CD2/2}, f2_{CD2/2,} ...) functions and of at least parts of one or more security parameters embedded into the application code of CD2/2(f1_{CD2/2}, f2_{CD2/2,} ...) functions;
   ∘ [or_{2a-SR2}, or_{2b-SPR2j}] becomes the two parts of the same obfuscation rule, that are used to obfuscate part of the application code of CD2/2(f1_{CD2/2}, f2_{CD2/2,} ...) functions together with part of the [sp_{2a-SR2}, sp_{(g+1)-SR2}, sp_{(g+2)-SR2} ..., sp_{m-SR2}] and part of the [ch_{2a-SR2}, ch_{(g+1)-SR2}, ch_{(g+2)-SR2} ..., ch_{m-SR2}] embedded into the application code of CD2/2(f1_{CD2/2}, f2_{CD2/2,} ...) functions.
      - Within these implementations or_{2b-SPR2j} = or_{2b-SPR21};
      - According to some alternative implementations or_{2b-SPR2j} = or_{2b-SPR21} and a parameter into sp_{CDs-assignment} is set to a given value such that one or more parts of [or_{2a-SR2} / or_{2b-SPR2j}] obfuscation rule (those parts associated to the given value of the parameter) will be used to de-obfuscate by the protected mobile device software application a part of the application code / embedded security parameters / embedded networks of checksums of the replica of fi_{CD2/2} function into CD2/2 that is associated to the given value of the parameter.

These assignments and prepared data are stored in the data base associated to protected mobile device software applications, in relation to user's 2 mobile device, the protected mobile device software application and the security re-personalization process.

In step (18) of figure 1 security re-personalization data associated to the new assigned life cycle security personalization registry (SPR2j) is sent from the provider of personalization services to the protected mobile device software application (in user's 2 mobile device) being in either a partly-personalized or in a personalized security status, the security re-personalization data is at least partly different than the security personalization data. According to some implementations (in connection to figures 2.k and 2.l) [sp_{1b-SPR2j}, or_{1b-SPR2j}, ch_{1b-SPR2j}] and [sp_{2b-SPR2j}, or_{2b-SPR2j}, ch_{2b-SPR2j}] are sent in obfuscated format to the protected mobile device software application in user's 2 mobile device.

In step (19) of figure 1 the user's 2 mobile device receives the security re-personalization data associated to the life cycle security personalization registry, or to other life cycle security personalization registry related to the user's mobile device, in the protected mobile device software application being in either a partly-personalized or in a personalized security status, the security re-personalization data is at least partly different than the security personalization data and enables in the application for regular operation at least one of the one or more first code domains and/or at least one of the another one or more first code domains. Advantageously, within this invention at least part of the security protection may be renewed from time to time or under certain circumstances.

According to some implementations (in connection to figure 2.l) the user's 2 mobile device receives in obfuscated format (the obfuscation using a method that uses a security parameter that is embedded into a CD1 function and at least part of DID_{USER2}) from the provider of personalization services the data value for storage in the part of the protected mobile device software application associated to sp_{CDs-assigment}, said value making the protected mobile device software application to use CD2/1, CD2/2 and CD1 during its execution (i.e. to stop using CD3/1 and CD3/2 during its execution).

Within these implementations the user's 2 mobile device also receives [sp_{1b-SPR2j}, or_{1b-SPR2j}, ch_{1b-SPR2j}] and [sp_{2b-SPR2j}, or_{2b-SPR2j}, ch_{2b-SPR2j}] in obfuscated format from the provider of personalization services and they are respectively stored in the part of the protected mobile device software application data base that is associated to CD2/1 and CD2/2 (as illustrated in figure 2.l).

The received and stored [sp_{1b-SPR2j}, or_{1b-SPR2j}, ch_{1b-SPR2j}] security personalization data enables CD2/1 first code domain for regular operation, the obfuscation of [sp_{1b-SPR2j}, or_{1b-SPR2j}, ch_{1b-SPR2j}] data being related to security parameters and/or obfuscation rules and/or code checksums data that are at least partly available in CD1 second code domain and that are required to enable CD2/1 first code domain for regular operation, as partly illustrated above in relation to figure 2.k (x = 2).

The received and stored [sp_{2b-SPR2j}, or_{2b-SPR2j}, ch_{2b-SPR2j}] security personalization data enables CD2/2 another first code domain for regular operation, the obfuscation of [sp_{2b-SPR2j}, or_{2b-SPR2j}, ch_{2b-SPR2j}] data being related to the security parameter (another one or more parts of [sp_{1a-SR2} / sp_{1b-SPR2j}]) that is part of the obfuscation key that protect CD2/2 security re-personalization data, as illustrated above in relation to figure 2.k (x = 2).

In the context described in figures 2.k and 2.l, CD2/2 is the at least one of the another one or more first code domains. In relation to the security re-personalization associated to SPR2j life cycle security personalization registry and to the user's 2 mobile device, the at least one of the another one or more first code domains (CD2/2) is paired on security terms by the provider of personalization services to one or more first code domains (CD2/1) via the security re-personalization ([sp_{2b-SPR2j}, or_{2b-SPR2j}, ch_{2b-SPR2j}] in obfuscated format), said re-personalization related to security parameters (at least part of [sp_{1a-SR2}, sp_{1b-SPR2j}]) and/or obfuscation rules (at least part of [or_{1a-SR2}, or_{1b-SPR2j}]) and/or code checksums data (at least part of [ch_{1a-SR2}, ch_{1b-SPR2j}]) that are at least partly available in the one or more first code domains (CD2/1) and that are required to enable the at least one of the another one or more first code domains for regular operation.

Also in the context of the security re-personalization associated to SPR2j life cycle security personalization registry and to the user's 2 mobile device, at least part of the security parameters and/or obfuscation rules and/or code checksums data required to enable the at least one of the another one or more first code domains for regular operation have been previously sent to a part of the protected mobile device software application data base that is associated to the one or more first code domains ([sp_{1b-SPR2j}]) and/or [or_{1b-SPR2j}]) and/or [ch_{1b-SPR2j}] are available in a part of the application data base that is associated to CD2/1).

Also, within the security re-personalization process, in relation to user's 2 mobile device, according to some embodiments:
- The part of the protected mobile device software application data base associated to CD3/1 and CD3/2 security personalization data is set to default values [sp_{1b-SPR3DV}, or_{1b-SPR3DV}, ch_{1b-SPR3DV}] and [sp_{2b-SPR3DV}, or_{2b-SPR3DV}, ch_{2b-SPR3DV}], as illustrated in figure 2.l.
- Data into certain parts of the protected mobile device software application data base, previously protected by the other one or more parts of [sp_{1a-SR3} / sp_{1b-SPR32}] security parameter (related to the "old" security personalization associated to CD3/1 and CD3/2) are deleted and those data are at least partly replaced during the re-personalization process (as far as possible / necessary) with renewal data sent from the provider of personalization services to user's 2 mobile device. As already said above when those renewal data are received, other one or more parts of [sp_{1a-SR2} / sp_{1b-SPR2j}] will be used to protect the renewal data into said certain parts of the data base of the protected mobile device software application (in this re personalization context, certain parts associated to CD2/1 and CD2/2).
   Within these embodiments, said other one or more parts of [sp_{1a-SR2} / sp_{1b-SPR2j}] are used to protect at least part of the part of the application data base that is not associated to code domains security personalization / assignment. In connection to the security re-personalization, when the protected mobile device software application receives data (either from the provider of personalization services or from other sources) for storage into the at least part of the part of the data base that is not associated to code domains security personalization / assignment, those are ciphered by using the referred other one or more parts of [sp_{1a-SR2} / sp_{1b-SPR2j}] security parameter, before being stored into the corresponding at least part of the part of the application data base.
- Certain unstructured sensitive data stored into the protected mobile device software application data base, previously protected by the other one or more parts of [sp_{2a-SR3} / sp_{2b-SPR32}] security parameter (related to the "old" security personalization associated to CD3/1 and CD3/2) are deleted and those data are replaced during the re-personalization process (as far as possible / necessary) by certain renewal unstructured sensitive data sent from the provider of personalization services to user's 2 mobile device.
   In connection to the security re-personalization, other one or more parts of [sp_{2a-SR2} / sp_{2b-SPR2j}] security parameter will be used to protect said renewal unstructured sensitive data before being sent for storage to the protected mobile device software application into user's 2 mobile device (e.g. to protect keys/sensitive data necessary for the protected mobile device software application into user's 2 mobile device to calculate dynamic credentials associated to services provided by service provider 1; e.g. protection of session keys), when sp_{CDs-assignment} is set to the value associated to CD2/1 and CD2/2.

Advantageously, after the above security re-personalization has been performed, the referred at least one of the one or more first code domains (CD2/1) and the at least one of the another one or more first code domains (CD2/2) may be used to regularly perform the associated application life cycle functions.

Once the security re-personalization process has successfully finalized, in a further step (not illustrated in figure 1) the data sent to service provider 1 in the context of step (11) of figure 1 is updated. According to some implementations at least part of the assignments and/or data associated to user's 2 mobile device and the security re-personalization of the protected mobile device software application is sent to service provider 1 for storage and for usage of at least part of it in the context of certain protected mobile device software application life cycle processes associated to user's 2 mobile device. In a particular example:
- The one or more parts of [sp_{1a-SR2}, sp_{1b-SPR2j}] that will be used to validate that a request to preregister a first service (if said preregistration is pending), associated to service provider 1, in the protected mobile device software application is received from user's 2 mobile device (with DID_{USER2}) and has been triggered from CD2/1 with the proper security personalization and;
- The one or more parts of [sp_{2a-SR2}, sp_{2b-SPR2j}] that will be used to validate that a request to register the above referred first service (the registration request being triggered from CD2/2 upon a previous successful preregistration of the first service, if said preregistration was pending), associated to service provider 1, in the protected mobile device software application is received from user's 2 mobile device (with DID_{USER2}) and has been triggered from CD2/2 with the proper security personalization;
are sent to service provider 1 for storage and for usage during the preregistration and the registration process, respectively, of a first service (if pending) in the protected mobile device software application in user's 2 mobile device.

During its life cycle the security re-personalized protected mobile device software application will be capable to de-obfuscate sp_{CDs-assigment} and to determine that CD2/1, CD2/2 and CD1 must be used during its execution. Also, the protected mobile device software application will be able to de-obfuscate [sp_{1b-SPR2j}, or_{1b-SPR2j}, ch_{1b-SPR2j}] by using the obfuscation algorithm and the obfuscation key that protects CD2/1 security personalization data, as already illustrated in connection to figure 2.k (x = 2). More in detail:
- In order to request the preregistration of a first service (if pending), one or more parts of [sp_{1a-SR2} / sp_{1b-SPR2j}] are de-obfuscated by the protected mobile device software application, and a calculation based on the de-obfuscated one or more parts of [sp_{1a-SR2} / sp_{1b-SPR2j}] is sent to service provider 1 for verification that the request is sent from the appropriate device and has been triggered from the adequate code domain (CD2/1) with the proper security personalization. As referred above, service provider 1 has previously stored the one or more parts of [sp_{1a-SR2} / sp_{1b-SPR2j}] in association to the user's 2 mobile device, to use them during the verification process.
- As detailed above, other one or more parts of [sp_{1a-SR2} / sp_{1b-SPR2j}] security parameter are used to protect at least part of the part of the application data base associated to CD2/1 and CD2/2 (and not associated to code domains security personalization / assignment). When the protected mobile device software application requires usage of data stored into said at least part of the part of the data base, the other one or more parts of [sp_{1a-SR2} / sp_{1b-SPR2j}] security parameter are de-obfuscated by the protected mobile device software application in order to use them to decipher the data into the data base, for usage.
- Another one or more parts of [sp_{1a-SR2} / sp_{1b-SPR2j}] security parameter will be de-obfuscated by the protected mobile device software application in order to use them to calculate the obfuscation key to de-obfuscate [sp_{2b-SPR2j}], [ch_{2b-SPR2j}] and [or_{2b-SPR2j}], when required.
- During the protected mobile device software application life cycle, [ch_{1a-SR2}, ch_{1b-SPR2j}] will be used to verify the integrity of the related parts of the application code of CD2/1(f1_{CD2/1}, f2_{CD2/1}, ...) functions and of at least parts of one or more security parameters embedded into the application code of CD2/1(f1_{CD2/1}, f2_{CD2/1}, ...) functions. When the protected mobile device software application requires verifying the referred integrity, [ch_{1a-SR2}, ch_{1b-SPR2j}] network of checksums is de-obfuscated by the protected mobile device software application in order to use it in the verification process. As referred above, within these implementations ch_{1b-SPR2j} = ch_{1b-SPR21};
   - According to the alternative implementations referred above, ch_{1b-SPR2j} = ch_{1b-SPR21} and a parameter into sp_{CDs-assignment} has been set to a given value such that associated one or more parts of [ch_{1a-SR2} / ch_{1b-SPR2j}] network of checksums will be used to verify the integrity of related parts of the application code of CD2/1(f1_{CD2/1}, f2_{CD2/1}, ...) functions and of related at least parts of one or more security parameters embedded into the application code of CD2/1(f1_{CD2/1}, f2_{CD2/1}, ...) functions;
- During the protected mobile device software application life cycle, [or_{1a-SR2}, or_{1b-SPR2j}] will be used to de-obfuscate the related part of the application code of CD2/1(f1_{CD2/1}, f2_{CD2/1}, ...) functions, the related part of the [sp_{1a-SR2}, sp_{3-SR2,} sp_{4-SR2} ..., sp_{g-SR2}] and the related part of the [ch_{1a-SR2}, ch_{3-SR2,} ch_{4-SR2} ..., ch_{g-SR2}] embedded into the application code of CD2/1(f1_{CD2/1}, f2_{CD2/1}, ...) functions. When the protected mobile device software application requires using said referred part of the application code / embedded security parameters / embedded networks of checksums, the corresponding de-obfuscation process is applied by using [or_{1a-SR2} / or_{1b-SPR2j}]. As referred above, within these implementations or_{1b-SPR2j} = or_{1b-SPR21};
   - According to the alternative implementations referred above or_{1b-SPR2j} = or_{1b-SPR21} and a parameter into sp_{CDs-assignment} is set to a given value such that one or more parts of [or_{1a-SR2} / or_{1b-SPR2j}] obfuscation rule (those parts associated to the given value of the parameter) will be used to de-obfuscate by the protected mobile device software application a part of the application code / embedded security parameters / embedded networks of checksums of the replica of fi_{CD2/1} function into CD2/1 that is associated to the given value of the parameter when the protected mobile device software application requires usage of said part of the application code / embedded security parameters / embedded networks of checksums.

Also, during its life cycle the security re-personalized protected mobile device software application will be able to de-obfuscate [sp_{2b-SPR2j}, or_{2b-SPR2j}, ch_{2b-SPR2j}] by using the obfuscation algorithm and the obfuscation key that protects CD2/2 security personalization data, as already illustrated in connection to figure 2k (x = 2). More in detail:
- In order to request the registration of the above referred first service (the registration request being triggered from CD2/2 upon a previously successful preregistration of the first service, if said preregistration was pending), one or more parts of [sp_{2a-SR2} / sp_{2b-SPR2j}] are de-obfuscated by the protected mobile device software application, and a calculation based on the de-obfuscated one or more parts of [sp_{2a-SR2} / sp_{2b-SPR2j}] is sent to service provider 1 for verification that the request is sent from the appropriate device and has been triggered from the adequate code domain (CD2/2) with the proper security personalization. As referred above, service provider 1 has previously stored the one or more parts of [sp_{2a-SR2} / sp_{2b-SPR2j}] in association to the user's 2 mobile device, to use them during the verification process.
- As detailed above, other one or more parts of [sp_{2a-SR2} / sp_{2b-SPR2j}] security parameter are used to protect certain unstructured sensitive data before being sent for storage to the protected mobile device software application in user's 2 mobile device. According to some implementations when the protected mobile device software application requires usage of at least part of the unstructured sensitive data, the other one or more parts of [sp_{2a-SR2} / sp_{2b-SPR2j}] security parameter are de-obfuscated by the protected mobile device software application in order to use them to decipher the at least part of the stored unstructured sensitive data, for usage.
- As detailed above, another one or more parts of [sp_{2a-SR2} / sp_{2b-SPR2j}] security parameter are used to obfuscate certain sensitive data, in the context of the execution of some CD2/2 code instructions, to avoid they will be exposed in clear in one or more working memories of the user's 2 mobile device. When, during the execution of certain CD2/2 code instructions, one or more processing devices in user's 2 mobile device require using the obfuscated sensitive data previously stored in the one or more working memories, they use the another one or more parts of [sp_{2a-SR2} / sp_{2b-SPR2j}] (and the obfuscation rule referred above in connection to figure 2.b) to obtain the adequate data for the related calculation/process.
- During the protected mobile device software application life cycle, [ch_{2a-SR2}, ch_{2b-SPR2j}] will be used to verify the integrity of the related parts of the application code of CD2/2(f1_{CD2/2}, f2_{CD2/2,} ...) functions and of at least parts of one or more security parameters embedded into the application code of CD2/2(f1_{CD2/2}, f2_{CD2/2,} ...) functions. When the protected mobile device software application requires verifying the referred integrity, [ch_{2a-SR2}, ch_{2b-SPR2j}] network of checksums is de-obfuscated by the protected mobile device software application in order to use it in the verification process. As referred above, within these implementations ch_{2b-SPR2j} = ch_{2b-SPR21};
   - According to the alternative implementations referred above, ch_{2b-SPR2j} = Ch_{2b-SPR21} and a parameter into sp_{CDs-assignment} has been set to a given value such that associated one or more parts of [ch_{2a-SR2} / ch_{2b-SPR2j}] network of checksums will be used to verify the integrity of related parts of the application code of CD2/2(f1_{CD2/2}, f2_{CD2/2}, ...) functions and of related at least parts of one or more security parameters embedded into the application code of CD2/2(f1_{CD2/2}, f2_{CD2/2,} ...) functions;
- During the protected mobile device software application life cycle, [or_{2a-SR2}, or_{2b-SPR2j}] will be used to de-obfuscate the related part of the application code of CD2/2(f1_{CD2/2}, f2_{CD2/2,} ...) functions, the related part of the [sp_{2a-SR2}, sp_{(g+1)-SR2}, sp_{(g+2)-SR2} ..., sp_{m-SR2}] and the related part of the [ch_{2a-SR2}, ch_{(g+1)-SR2}, ch_{(g+2)-SR2} ..., ch_{m-SR2}] embedded into the application code of CD2/2(f1_{CD2/2}, f2_{CD2/2,} ...) functions. When the protected mobile device software application requires using said referred part of the application code / embedded security parameters / embedded networks of checksums, the corresponding de-obfuscation process is applied by using [or_{2a-SR2} / or_{2b-SPR2j}]. As referred above, within these implementations or_{2b-SPR2j} = or_{2b-SPR21};
   - According to the alternative implementations referred above or_{2b-SPR2j} = or_{2b-SPR21} and a parameter into sp_{CDs-assignment} is set to a given value such that one or more parts of [or_{2a-SR2} / or_{2b-SPR2j}] obfuscation rule (those parts associated to the given value of the parameter) will be used to de-obfuscate by the protected mobile device software application a part of the application code / embedded security parameters / embedded networks of checksums of the replica of fi_{CD2/2} function into CD2/2 that is associated to the given value of the parameter when the protected mobile device software application requires usage of said part of the application code / embedded security parameters / embedded networks of checksums.

This invention provides a huge number of methods and techniques associated to one or more service providers and a provider of personalization services in connection to the security personalization of a mobile device software application in a user's mobile device.

In a particular embodiment the protected mobile device software application relates to several service providers and an architecture equivalent to the one illustrated in figure 2.b is replicated into the application code for each one of the service providers.

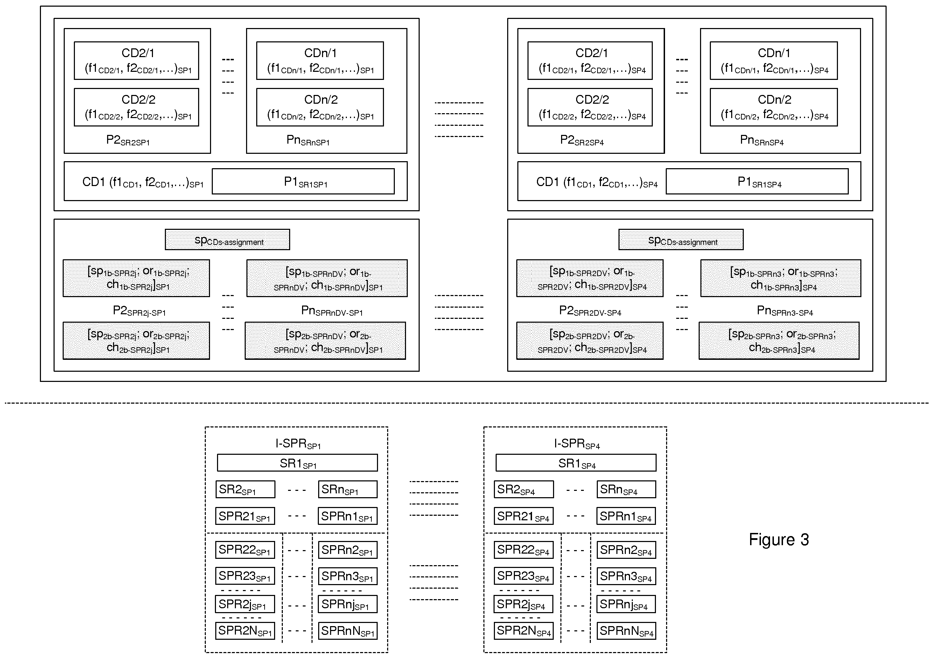

So advantageously each service provider may have its own associated first and second code domains within the protected mobile device software application, associated part of the application data base, associated security personalization registries, and applied security personalization into user's mobile devices; according to some embodiments (as illustrated in figure 3) the application code associated to a given service provider into the protected mobile device software application may be entirely isolated of the application code associated to other given service provider.

The embodiment illustrated in figure 3 refers to four service providers, each one with its own initialization security personalization registry (I-SPR_{SP1}, I-SPR_{SP2}, I-SPR_{SP3}, I-SPR_{SP4}). The application initialization security personalization registry comprises I-SPR_{SP1}, I-SPR_{SP2}, I-SPR_{SP3} and I-SPR_{SP4} and the security protection applied to the application may be tested by first using I-SPR_{SP1} (as described e.g. in connection to figure 2.b), to test the part of the application associated to service provider 1; secondly using I-SPR_{SP2}, to test the part of the application associated to service provider 2; thirdly using I-SPR_{SP3}, to test the part of the application associated to service provider 3; and finally using I-SPR_{SP4} to test the part of the application associated to service provider 4.

Steps 8 to 19 described in figure 1 may be independently accomplished in connection to the first and second code domains associated to each one of the service providers. Figure 3 shows an example where SPR2j_{SP1} has been used to personalize on security terms the part of the protected mobile device software application data base associated to CD2/1_{SP1} and CD2/2_{SP1}; figure 3 also shows an example where SPRn3_{SP4} has been used to personalize on security terms the part of the protected mobile device software application data base associated to CDn/1_{SP4} and CDn/2_{SP4}.

Advantageously, according to some implementations one or more first code domains associated to a first service provider (e.g. service provider 1) may be enabled for regular operation by the provider of personalization services independently of the enablement for regular operation of other one or more first code domains associated to a second service provider (e.g. service provider 4).

Further, although the implementations disclosed herein with reference to the drawings comprise computer apparatus and processes performed in computer apparatus, the invention also extends to computer programs, particularly computer programs on or in a carrier, adapted for putting the invention into practice. The program may be in the form of source code, object code, a code intermediate source and object code such as in partially compiled form, or in any other form suitable for use in the implementation of the processes according to the invention. The carrier may be any entity or device capable of carrying the program. For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means. When the program is embodied in a signal which may be conveyed directly by a cable or other device or means, the carrier may be constituted by such cable or other device or means. Alternatively, the carrier may be an integrated circuit in which the program is embedded, the integrated circuit being adapted for performing, or for use in the performance of, the relevant processes.

## Claims

1. A method associated with one or more service providers (201, 202, 203, 204) and a provider of personalization services (100) in connection to the security personalization of a mobile device software application in a user's mobile device (400), the method comprising:
using by the provider of personalization services (100) a mobile device software application, a security personalization registry and security protection software that are stored in one or more memories to generate by using one or more processing devices a protected mobile device software application that is personalized on security terms by using data of the security personalization registry, the generated application comprising several code domains, related to the one or more service providers (201, 202, 203, 204), where one or more first code domains are paired on security terms to one or more second code domains via the security personalization, said personalization related to security parameters and/or obfuscation rules and/or code checksums data that are at least partly available in the one or more second code domains and that are required to enable the one or more first code domains for regular operation;
sending the protected mobile device software application in a non-personalized security status from the provider of personalization services (100) to a distribution server, said status disabling the one or more first code domains for regular operation, and the protected mobile device software application being stored in one or more memories of the distribution server;
receiving from the user's mobile device (400) a request for a security personalization of at least one of the one or more first code domains, the request being triggered by using executable code belonging to one of the one or more second code domains of the protected mobile device software application being in a non-personalized security status;
sending security personalization data associated to a life cycle security personalization registry that relates to the user's mobile device (400), to the non-security personalized protected mobile device software application in the user's mobile device (400), the security personalization data enabling in the application at least one of the one or more first code domains for regular operation.

2. A method according to claim 1, wherein the provider of personalization services (100) is one of the one or more service providers (201, 202, 203, 204).

3. A method according to claim 1 or 2, wherein the enablement of the at least one of the one or more first code domains is associated to one or more security parameters related to the life cycle security personalization registry, that are different than the corresponding ones of the security personalization registry.

4. A method according to any of claims 1 to 3, wherein the security personalization associated to the life cycle security personalization registry relates to security parameters and/or obfuscation rules and/or code checksums data that are at least partly available in the one or more second code domains and that are required to enable the at least one of the one or more first code domains for regular operation.

5. A method according to any of claims 1 to 4, wherein successive requests for a security personalization of at least another one or more first code domains are received from the user's mobile device (400), each request being triggered by using executable code belonging to one of the one or more first code domains that has previously been enabled for regular operation, and security personalization data associated to the life cycle security personalization registry is sent to the partly-security personalized protected mobile device software application, the security personalization data enabling in the application for regular operation the at least another one or more first code domains that is associated to the particular request.

6. A method according to claim 5, wherein at least one of the another one or more first code domains is paired on security terms by the provider of personalization services (100) to one or more first code domains via the security personalization, said personalization related to security parameters and/or obfuscation rules and/or code checksums data that are at least partly available in the one or more first code domains and that are required to enable the at least one of the another one or more first code domains for regular operation.

7. A method according to claim 6, wherein at least part of the security parameters and/or obfuscation rules and/or code checksums data required to enable the at least one of the another one or more first code domains for regular operation have been previously sent to a part of the protected mobile device software application data base that is associated to the one or more first code domains.

8. A method according to any of claims 5 to 7, wherein one or more processing devices make a partly-security personalized protected mobile device software application expiring if a request for a security personalization of at least another one or more first code domains is received later than a predefined period of time after security personalization data related to a previous request for a security personalization of at least one or another different one of the one or more first code domains was sent to the protected mobile device software application being in either a non-personalized or in a partly-personalized security status.

9. A method according to any of claims 1 to 8, wherein security re-personalization data associated to the life cycle security personalization registry, or to other life cycle security personalization registry related to the user's mobile device (400), is sent to the protected mobile device software application being in either a partly-personalized or in a personalized security status, the security re-personalization data is at least partly different than the security personalization data and enables in the application for regular operation at least one of the one or more first code domains and/or at least one of the another one or more first code domains.

10. A method according to any of claims 1 to 9, wherein one or more first code domains associated to a first service provider (201, 202, 203, 4) may be enabled for regular operation by the provider of personalization services independently of the enablement for regular operation of other one or more first code domains associated to a second service provider (201, 202, 203, 204).

11. A method associated with the use of a user's mobile device (400) in connection to the security personalization of a protected mobile device software application in the user's mobile device (400), the protected mobile device software application previously generated by a provider of personalization services (100) in a personalized security status by using a mobile device software application, a security personalization registry and security protection software, the protected application comprising several code domains, related to one or more service providers (201, 202, 203, 204), where one or more first code domains became paired on security terms to one or more second code domains via the security personalization associated to the security personalization registry, the method comprising:
requesting from the user's mobile device (400) a mobile device software application to a distribution server, the distribution server storing in one or memories the protected mobile device software application being in a non-personalized security status;
receiving from the distribution server and subsequently installing by one or more processing devices in the mobile device (400) the non-security personalized protected mobile device software application, wherein in said pending security personalization status the one or more first code domains are disabled for regular operation;
sending from the user's mobile device (400) a request for a security personalization of at least one of the one or more first code domains, the request being triggered by one or more processing devices by using executable code belonging to one of the one or more second code domains of the protected mobile device software application being in a non-personalized security status;
receiving security personalization data associated to a life cycle security personalization registry that relates to the user's mobile device (400) from the provider of personalization services (100), the security personalization data enabling in the non-security personalized protected mobile device software application at least one of the one or more first code domains for regular operation, said personalization related to security parameters and/or obfuscation rules and/or code checksums data that are at least partly available in the one or more second code domains and that are required to enable the at least one of the one or more first code domains for regular operation.

12. A method according to claim 11, wherein successive requests for a security personalization of at least another one or more first code domains are sent from the user's mobile device (400) to the provider of personalization services (100), each request being triggered by one or more processing devices by using executable code belonging to one of the one or more first code domains that has previously been enabled for regular operation, and security personalization data associated to the life cycle security personalization registry related to the user's mobile device (400) is received in the partly-security personalized protected mobile device software application, the security personalization data enabling in the application for regular operation the at least another one or more first code domains that is associated to the particular request.

13. A method according to claim 12, wherein at least one of the another one or more first code domains is paired on security terms to one or more first code domains via the security personalization, said personalization related to security parameters and/or obfuscation rules and/or code checksums data that are at least partly available in the one or more first code domains and that are required to enable the at least one of the another one or more first code domains for regular operation.

14. A method according to claim 13, wherein at least part of the security parameters and/or obfuscation rules and/or code checksums data required to enable the at least one of the another one or more first code domains for regular operation are available in a part of the protected mobile device software application data base that is associated to one or more first code domains that has previously been enabled for regular operation.

15. A method according to any of claims 11 to 14, wherein the one or more first code domains enabled via first security personalization data received in the protected mobile device software application installed in a mobile device (400) of a first user are different than the one or more first code domains enabled via second security personalization data received in the protected mobile device software application installed in a mobile device (400) of a second user.

16. A method according to any of claims 11 to 15, wherein the security personalization data received in the mobile device (400) of a first user, the data enabling in the application one or more first code domains for regular operation and associated to a first life cycle security personalization registry that comprises first security parameters and/or obfuscation rules and/or code checksums data, are different than the security personalization data received in the mobile device (400) of a second user, the data enabling in the application one or more first code domains for regular operation and associated to a second life cycle security personalization registry that comprises second security parameters and/or obfuscation rules and/or code checksums data.

17. A non-transitory computer readable medium storing computer readable program code for causing a processor of a user's mobile device (400) to perform a method associated to the security personalization of a protected mobile device software application in the user's mobile device (400), the protected mobile device software application previously generated by a provider of personalization services (100) in a personalized security status by using a mobile device software application, a security personalization registry and security protection software, the protected application comprising several code domains, related to one or more service providers (201, 202, 203, 204), where one or more first code domains became paired on security terms to one or more second code domains via the security personalization associated to the security personalization registry, the method comprising:
requesting from the user's mobile device (400) a mobile device software application to a distribution server, the distribution server storing in one or memories the protected mobile device software application being in a non-personalized security status;
receiving from the distribution server and subsequently installing by one or more processing devices in the mobile device (400) the non-security personalized protected mobile device software application, wherein in said pending security personalization status the one or more first code domains are disabled for regular operation;
sending from the user's mobile device (400) a request for a security personalization of at least one of the one or more first code domains, the request being triggered by one or more processing devices by using executable code belonging to one of the one or more second code domains of the protected mobile device software application being in a non-personalized security status;
receiving security personalization data associated to a life cycle security personalization registry that relates to the user's mobile device (400) from the provider of personalization services (100), the security personalization data enabling in the non-security personalized protected mobile device software application at least one of the one or more first code domains for regular operation, said personalization related to security parameters and/or obfuscation rules and/or code checksums data that are at least partly available in the one or more second code domains and that are required to enable the at least one of the one or more first code domains for regular operation.

18. A non-transitory computer readable medium storing computer readable program code according to claim 17 that causes the processor sending successive requests for a security personalization of at least another one or more first code domains from the user's mobile device (400) to the provider of personalization services (100), each request being triggered by one or more processing devices by using executable code belonging to one of the one or more first code domains that has previously been enabled for regular operation, and receiving security personalization data associated to the life cycle security personalization registry related to the user's mobile device (400) in the partly-security personalized protected mobile device software application, the security personalization data enabling in the application for regular operation the at least another one or more first code domains that is associated to the particular request.

19. A user's mobile device (400) associated with the security personalization of a protected mobile device software application in the user's mobile device (400), the protected mobile device software application previously generated by a provider of personalization services (100) in a personalized security status by using a mobile device software application, a security personalization registry and security protection software, the protected application comprising several code domains, related to one or more service providers (201, 202, 203, 204), where one or more first code domains became paired on security terms to one or more second code domains via the security personalization associated to the security personalization registry, the mobile device (400) comprising:
an electronic storage medium that stores security personalization data; and
a processor adapted to:
request a mobile device software application to a distribution server, the distribution server storing in one or memories the protected mobile device software application being in a non-personalized security status;
receive from the distribution server and subsequently install in the mobile device (400) the non-security personalized protected mobile device software application, wherein in said pending security personalization status the one or more first code domains are disabled for regular operation;
send a request for a security personalization of at least one of the one or more first code domains, the request being triggered by using executable code belonging to one of the one or more second code domains of the protected mobile device software application being in a non-personalized security status;
receive security personalization data associated to a life cycle security personalization registry that relates to the user's mobile device (400) from the provider of personalization services (100), the security personalization data enabling in the non-security personalized protected mobile device software application at least one of the one or more first code domains for regular operation, said personalization related to security parameters and/or obfuscation rules and/or code checksums data that are at least partly available in the one or more second code domains and that are required to enable the at least one of the one or more first code domains for regular operation.

20. A user's mobile device (400) according to claim 19, wherein the processor is adapted to send successive requests for a security personalization of at least another one or more first code domains from the user's mobile device (400) to the provider of personalization services (100), each request being triggered by using executable code belonging to one of the one or more first code domains that has previously been enabled for regular operation, and to receive security personalization data associated to the life cycle security personalization registry related to the user's mobile device (400) in the partly-security personalized protected mobile device software application, the security personalization data enabling in the application for regular operation the at least another one or more first code domains that is associated to the particular request.

## Patentansprüche

1. Ein Verfahren, das mit einem oder mehreren Dienstleistern (201, 202, 203, 204) und einem Anbieter von Personalisierungsdiensten (100) in Verbindung mit der Sicherheitspersonalisierung einer Software-Anwendung für Mobilgeräte auf dem Mobilgerät eines Benutzers (400) verbunden ist, wobei das Verfahren Folgendes umfasst:
der Anbieter von Personalisierungsdiensten (100) nutzt eine Software-Anwendung für Mobilgeräte, eine Sicherheits-Personalisierungsregistrierung und Sicherheitsschutzsoftware, die in einem oder mehreren Speichern gespeichert sind, um mit Hilfe eines oder mehrerer Verarbeitungsgeräte eine geschützte Software-Anwendung für Mobilgeräte zu erzeugen, die zur Sicherheit unter Verwendung von Daten der Sicherheits-Personalisierungsregistrierung personalisiert wird, wobei die generierte Anwendung mehrere Code-Domänen umfasst, die mit einem oder mehreren 10 Dienstleistern (201, 202, 203, 204) in Verbindung stehen, bei der eine oder mehrere erste Code-Domänen unter Sicherheitsbedingungen mit einer oder mehreren zweiten Code-Domänen über die Sicherheits-Personalisierung gekoppelt werden, die Personalisierung im Zusammenhang mit Sicherheitsparametern und/oder Verschleierungsregeln und/oder Code-Prüfsummen-Daten stehen, die zumindest teilweise in der einen oder mehreren zweiten Code-Domänen verfügbar sind und die erforderlich sind, um die eine oder mehrere erste Code-Domänen für den regulären Betrieb zu aktivieren;
die geschützte Software-Anwendung für mobile Geräte wird in einem nicht personalisierten Sicherheitsstatus vom Anbieter von Personalisierungsdiensten (100) an einen Distributionsserver gesendet, wobei besagter Status die eine oder mehrere erste Code-Domänen für den regulären Betrieb deaktiviert und die geschützte Software-Anwendung für mobile Geräte in einem oder mehreren Speichern des Distributionsservers gespeichert ist;
vom Mobilgerät des Benutzers (400) geht eine Anforderung für eine Sicherheitspersonalisierung von mindestens 20 der einen oder mehreren ersten Code-Domänen ein, wobei die Anforderung durch Verwendung von ausführbarem Code ausgelöst wird, der zu einer der einen oder mehreren zweiten Code-Domänen der geschützten Software-Anwendung für Mobilgeräte gehört und sich in einem nicht personalisierten Sicherheitsstatus befindet;
es werden Sicherheits-Personalisierungsdaten, die mit einem Life-Cycle-Sicherheitspersonalisierungsregister verbunden sind, das sich auf das Mobilgerät des Benutzers (400) bezieht, an die nicht-Sicherheits-personalisierte geschützte 25 Mobilgerätesoftware-Anwendung im Mobilgerät des Benutzers (400) gesendet, wobei die Sicherheits-Personalisierungsdaten in der Anwendung mindestens eine der ersten Code-Domänen für den regulären Betrieb ermöglichen.

2. Ein Verfahren nach Anspruch 1, bei dem der Anbieter von Personalisierungsdiensten (100) einer des einen oder der mehrern Dienstleister (201, 202, 203, 204) ist.

3. Verfahren nach Anspruch 1 oder 2, bei dem die Aktivierung von mindestens einer der einen oder mehreren ersten Code-Domänen einem oder mehreren Sicherheitsparametern im Zusammenhang mit dem Life-Cycle-Sicherheitspersonalisierungsregister zugeordnet ist, die sich von den entsprechenden Parametern des Life-Cycle-Sicherheitspersonalisierungsregisters unterscheiden.

4. Ein Verfahren nach einem der Ansprüche 1 bis 3, bei dem sich die mit 35 verbundene Personalisierung des Life-Cycle-Sicherheitspersonalisierungsregisters auf Sicherheitsparameter und/oder Verschleierungsregeln und/oder Code-Prüfsummen bezieht, die zumindest teilweise in einer oder mehreren zweiten Code-Domänen verfügbar sind und erforderlich sind, um mindestens eine der ersten Code-Domänen für den regulären Betrieb zu ermöglichen.

5. Verfahren nach einem der Ansprüche 1 bis 4, bei dem aufeinanderfolgende Anfragen nach einer Sicherheitspersonalisierung von mindestens einer oder mehreren ersten Code-Domänen vom Mobilgerät des Benutzers (400) eingehen, wobei jede Anfrage durch Verwendung von ausführbarem Code ausgelöst wird, der zu einer oder mehreren ersten Code-Domänen gehört, die zuvor für den regulären Betrieb aktiviert wurden, und Sicherheits-personalisierungsdaten, die mit dem Life-Cycle-Sicherheitspersonalisierungsregister verbunden sind, und an die zum Teil sicherheitsrelevante, personalisierte geschützte Software-Anwendung für mobile Geräte gesendet werden, wobei die Sicherheits-Personalisierungsdaten, die in der Anwendung für den regulären Betrieb die mindestens eine oder mehrere erste Code-Domänen ermöglichen, die mit der jeweiligen Anfrage verbunden sind.

6. Ein Verfahren nach Anspruch 5, bei dem durch den Anbieter von Personalisierungsdiensten (100) mindestens eine der anderen oder mehrere ersten Code-Domänen sicherheitstechnisch an eine oder mehrere erste Code-Domänen über die Sicherheits-Personalisierung gekoppelt ist, besagte Personalisierung bezogen auf Sicherheitsparameter und/oder Verschleierungsregeln und/oder Code-Prüfsummen-Daten, die zumindest teilweise in der einen oder mehreren ersten Code-Domänen verfügbar sind und erforderlich sind, um die mindestens eine der anderen oder mehrere erste Code-Domänen für den Regelbetrieb zu ermöglichen.

7. Ein Verfahren nach Anspruch 6, bei dem mindestens ein Teil der Sicherheitsparameter und/oder Verschleierungsregeln und/oder Code-Prüfsummen-Daten, die erforderlich sind, um die mindestens eine der anderen oder mehrere erste Code-Domänen für den regulären Betrieb zu ermöglichen, zuvor an einen Teil der geschützten Software-Anwendungsdatenbank für mobile Geräte gesendet wurden, der einer oder mehreren ersten Code-Domänen zugeordnet ist.

8. Ein Verfahren nach einem der Ansprüche 5 bis 7, bei dem ein oder mehrere Verarbeitungsgeräte eine Anwendung zum Teil sicheren personalisierten Schutz von Mobilgeräten zum Auslaufen bringen, wenn eine Anfrage für eine Personalisierung der Sicherheit von mindestens einer anderen oder mehreren ersten Code-Domänen später als ein vordefinierter Zeitraum nach der Personalisierung der Sicherheit von Daten im Zusammenhang mit einer früheren Anfrage für eine Personalisierung der Sicherheit von mindestens einer oder einer anderen der einer oder mehreren ersten Code-Domänen 25 an die Software-Anwendung des geschützten Mobilgeräts gesendet wurde, die sich entweder in einem nicht personalisierten oder teilweise personalisierten Sicherheitsstatus befindet.

9. Ein Verfahren nach einem der Ansprüche 1 bis 8, bei der Daten zur Neupersonalisierung der Sicherheit im Zusammenhang mit dem Life-Cycle-Sicherheitspersonalisierungsregister oder einer anderen Life-Cycle-Sicherheitspersonalisierungsregister im Zusammenhang mit dem Mobilgerät des Benutzers (400) an die geschützte Software-Anwendung für Mobilgeräte gesendet werden, die sich entweder in einem teilweise personalisierten oder in einem personalisierten Sicherheitsstatus befindet. Die Daten zur Neupersonalisierung der Sicherheit unterscheiden sich zumindest teilweise von den Daten zur Personalisierung der Sicherheit und ermöglichen in der Anwendung für den regulären Betrieb mindestens eine der ersten Code-Domänen und/oder mindestens eine der anderen oder mehreren ersten Code-Domänen.

10. Ein Verfahren nach einem der Ansprüche 1 bis 9, bei der eine oder mehrere erste Code-Domänen, die 35 mit einem ersten Dienstleister (201, 202, 203, 4) verbunden sind, vom Anbieter von Personalisierungsdiensten für den regulären Betrieb aktiviert werden können, unabhängig von der Möglichkeit des regulären Betriebs einer oder mehrerer erster Code-Domänen, die mit einem zweiten Dienstleister (201, 202, 203, 204) verbunden sind.

11. Ein Verfahren, das mit der Verwendung des Mobilgeräts eines Benutzers (400) in Verbindung mit der Sicherheitspersonalisierung einer geschützten Software-Anwendung für Mobilgeräte im Mobilgerät des Benutzers (400), die geschützte Software-Anwendung für Mobilgeräte, die zuvor von einem Anbieter von Personalisierungsdiensten (100) in einem personalisierten Sicherheitsstatus durch die Verwendung einer Software-Anwendung für Mobilgeräte generiert wurde, eine Sicherheitspersonalisierungsregistrierung und Sicherheitsschutzsoftware, die geschützte Anwendung, die mehrere Code-Domänen umfasst, die mit einem oder mehreren Dienstleistern (201, 202, 203, 204) verbunden sind, bei der eine oder mehrere erste Code-Domänen unter Sicherheitsbedingungen mit einer oder mehreren zweiten Code-Domänen über die Sicherheitspersonalisierung verknüpft wurden, die mit der Sicherheits-Personalisierungsregistrierung verbunden ist, das Verfahren, das Folgendes umfasst:
vom Mobilgerät des Benutzers (400) wird eine Software-Anwendung für Mobilgeräte auf einem Verteilungsserver angefordert, wobei der Verteilungsserver die geschützte Software-Anwendung für Mobilgeräte 10 in einem nicht personalisierten Sicherheitsstatus speichert;
vom Verteilungsserver geht die nicht-sicherheitsrelevante, personalisierte geschützte Software-Anwendung für Mobilgeräte ein und wird anschließend durch ein oder mehrere Verarbeitungsgeräte im Mobilgerät (400) installiert, wobei in dem anstehenden Sicherheitspersonalisierungsstatus die eine oder mehrere erste Code-Domänen für den regulären Betrieb deaktiviert sind;
vom Mobilgerät des Benutzers (400) wird eine Anforderung für eine Sicherheitspersonalisierung von mindestens der einen oder mehreren ersten Code-Domänen gesendet, wobei die Anforderung durch ein oder mehrere Verarbeitungsgeräte mithilfe der Verwendung von ausführbarem Code ausgelöst wird, der zu einer der einen oder mehreren zweiten Code-Domänen der geschützten Software-Anwendung für Mobilgeräte gehört und sich in einem nicht personalisierten Sicherheitsstatus befindet;
es gehen Sicherheits-Personalisierungsdaten im Zusammenhang mit einem Life-Cycle-Sicherheitspersonalisierungsregister ein, die sich auf das Mobilgerät des Benutzers (400) vom Anbieter von Personalisierungsdiensten (100) beziehen, wobei die Sicherheits-Personalisierungsdaten die in der nicht-sicheren, personalisierten geschützten Software-Anwendung für Mobilgeräte mindestens einen der einen oder mehreren ersten Code-Domänen für den regulären Betrieb ermöglichen, und diese Personalisierung im Zusammenhang mit Sicherheitsparametern und/oder Verschleierungsregeln und/oder Code 25 Prüfsummen-Daten steht, die zumindest teilweise in der einen oder mehreren zweiten Code-Domänen verfügbar sind und die erforderlich sind, um die mindestens eine der einen oder mehrere erste Code-Domänen für den regulären Betrieb zu ermöglichen.

12. Ein Verfahren nach Anspruch 11, bei dem aufeinanderfolgende Anfragen nach einer Sicherheitspersönlichkeit von mindestens einer anderen oder mehreren ersten Code-Domänen vom Mobilgerät des Benutzers (400) an den Anbieter von Personalisierungsdiensten (100) gesendet werden, wobei jede Anfrage durch ein oder mehrere Verarbeitungsgeräte ausgelöst wird, indem ausführbarer Code verwendet wird, der zu einer der einer oder mehreren ersten Code-Domänen gehört, die zuvor für den regulären Betrieb aktiviert wurden, und Daten zur Sicherheitspersönlichkeit, die dem Life-Cycle-Sicherheitspersonalisierungsregister im Zusammenhang mit dem Mobilgerät des Benutzers (400) zugeordnet sind, in der Software-Anwendung zum Teil sicheren personalisierten geschützten Mobilgerät empfangen werden, die Daten zur Sicherheitspersönlichkeit, die in der Anwendung für den regulären Betrieb mindestens eine andere oder 35 weitere erste Code-Domänen ermöglicht, die der jeweiligen Anfrage zugeordnet sind.

13. Ein Verfahren nach Anspruch 12, bei dem mindestens eine der anderen oder mehrere ersten Code-Domänen sicherheitstechnisch an eine oder mehrere erste Code-Domänen über die Sicherheits-Personalisierung gekoppelt ist, diese Personalisierung bezog sich auf Sicherheitsparameter und/oder Verschleierungsregeln und/oder Code-Prüfsummen-Daten, die zumindest teilweise in der einen oder mehreren ersten Code-Domänen verfügbar sind und erforderlich sind, um die mindestens eine der anderen oder mehreren ersten Code-Domänen für den regulären Betrieb zu ermöglichen.

14. Ein Verfahren nach Anspruch 13, bei dem zumindest ein Teil der Sicherheitsparameter und/oder Verschleierungsregeln und/oder Code-Prüfsummen-Daten, die erforderlich sind, um mindestens eine der anderen oder mehrere erste Code-Domänen für den regulären Betrieb zu ermöglichen, in einem Teil der geschützten Anwendungsdatenbank für Software-Anwendungen für mobile Geräte verfügbar sind, der einer oder mehreren ersten Code-Domänen zugeordnet ist, die zuvor für den regulären Betrieb aktiviert wurden.

15. Ein Verfahren nach einem der Ansprüche 11 bis 14, bei dem die eine oder mehrere erste Code-Domänen, die über die ersten Sicherheits-Personalisierungsdaten in der in einem Mobilgerät (400) eines ersten Benutzers installierten geschützten Software-Anwendung aktiviert wurden, sich von der einen oder mehreren ersten Code-Domänen unterscheiden, die über die zweiten Sicherheits-Personalisierungsdaten in der geschützten Software-Anwendung für mobile Geräte, die in einem Mobilgerät (400) eines zweiten Benutzers installiert wurde, aktiviert wurden.

16. Ein Verfahren nach einem der Ansprüche 11 bis 15, bei dem die im Mobilgerät (400) eines ersten Benutzers erhaltenen Daten zur Personalisierung der Sicherheit, die Daten, die in der Anwendung eine oder mehrere erste Code-Domänen für den regulären Betrieb ermöglichen und eines ersten Life-Cycle-Sicherheitspersonalisierungsregisters zugeordnet sind, die die ersten Sicherheitsparameter und/oder Verschleierungsregeln und/oder Code-Prüfsummen-Daten enthält, sich von den im Mobilgerät (400) eines zweiten Benutzers erhaltenen Daten zur Personalisierung der Sicherheit, die Daten, die in der Anwendung eine oder mehrere erste Code-Domänen für den regulären Betrieb ermöglichen, und einer zweiten zugeordnet sind, die 20 zweite Sicherheitsparameter und/oder Verschleierungsregeln und/oder Code-Prüfsummen-Daten enthält.

17. Ein nicht-transitorisches, computerlesbares Medium, das computerlesbaren Programmcode speichert, um einen Prozessor des Mobilgeräts (400) eines Benutzers dazu zu bringen, ein Verfahren durchzuführen, die das der Sicherheitspersönlichkeit einer geschützten Software-Anwendung für mobile Geräte im Mobilgeräts des Benutzers (400) verbunden ist, der geschützten Software-Anwendung für mobile Geräte, die zuvor von einem Anbieter von Personalisierungsdiensten (100) in einem personalisierten Sicherheitsstatus durch die Verwendung einer Software-
Anwendung für mobile Geräte generiert wurde, eine Sicherheits-Personalisierungsregistrierung und Sicherheitsschutzsoftware, die geschützte Anwendung, die mehrere Code-Domänen umfasst, die mit einem oder mehreren Dienstleistern verbunden sind (201, 202, 203, 204), wobei eine oder mehrere erste Code-Domänen zu Sicherheitsbedingungen mit einer oder mehreren zweiten Code-Domänen über die Sicherheits-Personalisierung verknüpft wurden, die mit der Sicherheits-Personalisierungsregistrierung 30 verbunden ist, wobei das Verfahren Folgendes umfasst:
vom Mobilgerät des Benutzers (400) wird eine Software-Anwendung für Mobilgeräte auf einem Verteilungsserver angefordert, wobei der Verteilungsserver die geschützte Software-Anwendung für Mobilgeräte in einem nicht personalisierten Sicherheitsstatus speichert;
vom Verteilungsserver geht die nicht-sicherheitsrelevante, personalisierte geschützte 35 Software-Anwendung für Mobilgeräte ein und wird anschließend durch ein oder mehrere Verarbeitungsgeräte im Mobilgerät (400) installiert, wobei in dem anstehenden Sicherheitspersonalisierungsstatus die eine oder mehrere erste Code-Domänen für den regulären Betrieb deaktiviert sind;
vom Mobilgerät des Benutzers (400) wird eine Anforderung für eine Sicherheitspersonalisierung von mindestens der einen oder mehreren ersten Code-Domänen gesendet, wobei die Anforderung durch ein oder mehrere Verarbeitungsgeräte mithilfe der Verwendung von ausführbarem Code ausgelöst wird, der zu einer der einen oder mehreren zweiten Code-Domänen der geschützten Software-Anwendung für Mobilgeräte gehört und sich in einem nicht personalisierten Sicherheitsstatus befindet;
es gehen Sicherheits-Personalisierungsdaten im Zusammenhang mit einem Life-Cycle-Sicherheitspersonalisierungsregister ein, die sich auf das Mobilgerät des Benutzers (400) vom Anbieter von Personalisierungsdiensten (100) beziehen, wobei die Sicherheits-Personalisierungsdaten die in der nicht-sicheren, personalisierten geschützten Software-Anwendung für Mobilgeräte mindestens einen der einen oder mehreren ersten Code-Domänen für den regulären Betrieb ermöglichen, und diese Personalisierung im Zusammenhang mit Sicherheitsparametern und/oder Verschleierungsregeln und/oder Code Prüfsummen-Daten steht, die zumindest teilweise in der einen oder mehreren zweiten Code-Domänen verfügbar sind und die erforderlich sind, um die mindestens eine der einen 10 oder mehrere erste Code-Domänen für den regulären Betrieb zu ermöglichen.

18. Ein nicht-transitorisches computerlesbares Medium, das computerlesbaren Programmcode gemäß Anspruch 17 speichert, der dazu führt, dass der Prozessor sukzessive Anfragen für eine Sicherheitspersonalisierung von mindestens einer oder mehreren ersten Codedomänen vom Mobilgerät des Benutzers (400) an den Anbieter von Personalisierungsdiensten (100) sendet, wobei jede Anfrage von einem oder mehreren Verarbeitungsgeräten ausgelöst wird, indem ausführbarer Code verwendet wird, der zu einer der einer oder mehreren ersten Codedomänen gehört, die zuvor für den regulären Betrieb aktiviert wurden, und Sicherheitspersonalisierungsdaten erhält, die mit dem Life-Cycle-Sicherheitspersonalisierungsregister verbunden sind, die mit dem Mobilgerät des Benutzers (400) in der zum Teil sicheren personalisierten geschützten Software-Anwendung für Mobilgeräte zusammenhängen, die Sicherheitspersonalisierungsdaten, die in der Anwendung für den regulären Betrieb mindestens eine weitere oder 20 weitere erste Codedomänen ermöglichen, die mit der bestimmten Anforderung verbunden sind.

19. Das Mobilgerät (400) eines Benutzers, das mit der Sicherheitspersonalisierung einer geschützten Software-Anwendung für Mobilgeräte im Mobilgerät des Benutzers (400) verbunden ist, die geschützte Software-Anwendung für Mobilgeräte, die zuvor von einem Anbieter von Personalisierungsdiensten (100) in einem personalisierten Sicherheitsstatus durch die Verwendung einer Software-Anwendung für Mobilgeräte erstellt wurde, eine Sicherheitspersonalisierungsregistrierung und Sicherheitsschutzsoftware, die geschützte Anwendung, die mehrere Code-Domänen umfasst, die mit einem oder mehreren Dienstleistern verbunden sind (201, 202, 203, 204), bei der eine oder mehrere erste Code-Domänen unter Sicherheitsbedingungen mit einer oder mehreren zweiten Code-Domänen über die Sicherheitspersonalisierung verknüpft wurde, die mit der Sicherheits-Personalisierungsregistrierung verbunden ist, wobei das Mobilgerät (400) folgende Elemente umfasst:
ein elektronisches Speichermedium, das Daten zur Personalisierung der Sicherheit speichert, und
einen Prozessor, angepasst für:
die Anforderung einer Software-Anwendung für Mobilgeräte an einen Verteilungsserver, wobei der Verteilungsserver die geschützte Software-Anwendung für Mobilgeräte in einem nicht personalisierten Sicherheitsstatus speichert;
den Erhalt vom Verteilungsserver und der anschließenden Installation im Mobilgerät 35 (400) der Software-Anwendung für nicht sicherheitsrelevante personalisierte geschützte mobile Geräte, bei der in dem anstehenden Sicherheitsstatus die eine oder mehrere erste Code-Domänen für den regulären Betrieb deaktiviert sind;
das Senden einer Anforderung für eine Sicherheitspersonalisierung von mindestens 20 der einen oder mehreren ersten Code-Domänen, wobei die Anforderung durch Verwendung von ausführbarem Code ausgelöst wird, der zu einer der einen oder mehreren zweiten Code-Domänen der geschützten Software-Anwendung für Mobilgeräte gehört und sich in einem nicht personalisierten Sicherheitsstatus befindet;
den Empfang von Sicherheits-Personalisierungsdaten im Zusammenhang mit einem Life-Cycle-Sicherheitspersonalisierungsregister, die sich auf das Mobilgerät des Benutzers (400) vom Anbieter von Personalisierungsdiensten (100) beziehen, wobei die Sicherheits-Personalisierungsdaten die in der nicht-sicheren, personalisierten geschützten Software-Anwendung für Mobilgeräte mindestens einen der einen oder mehreren ersten Code-Domänen für den regulären Betrieb ermöglichen, und diese Personalisierung im Zusammenhang mit Sicherheitsparametern und/oder Verschleierungsregeln und/oder Code Prüfsummen-Daten steht, die zumindest teilweise in der einen oder mehreren zweiten Code-Domänen verfügbar sind und die erforderlich sind, um die mindestens eine der einen oder mehrere erste Code-Domänen für den regulären Betrieb zu ermöglichen.

20. Das Mobilgerät (400) eines Benutzers gemäß Anspruch 19, wobei der Prozessor angepasst ist, um sukzessive Anfragen für eine Sicherheitspersönlichkeit von mindestens einer oder mehreren ersten Code-Domänen vom Mobilgerät des Benutzers (400) an den Anbieter von Personalisierungsdiensten (100) zu senden, wobei jede Anfrage durch Verwendung von ausführbarem Code ausgelöst wird, der zu einer oder mehreren ersten Code-Domänen gehört, die zuvor für den regulären Betrieb aktiviert wurden, und um Daten zur Sicherheitspersönlichkeit zu erhalten, die dem Life-Cycle-Sicherheitspersonalisierungsregister zugeordnet sind, die mit dem Mobilgerät des Benutzers (400) in der zum Teil sicheren personalisierten geschützten Software-Anwendung für Mobilgeräte zusammenhängt, die Daten zur Sicherheitspersönlichkeit, die in der Anwendung für den regulären Betrieb mindestens eine andere oder mehrere erste Code-Domänen ermöglicht, die der jeweiligen Anforderung zugeordnet sind.

## Revendications

1. Une méthode associée à un ou plusieurs prestataires (201, 202, 203, 204) et un prestataire de services de personnalisation (100) dans le cadre de la personnalisation de sécurité d'une application logicielle d'appareil mobile dans l'appareil mobile d'un utilisateur (400), la méthode comprenant :
l'utilisation par le prestataire de services de personnalisation (100) d'une application logicielle d'appareil mobile, d'un registre de personnalisation de la sécurité et d'un logiciel de protection de la sécurité qui sont stockés dans une ou plusieurs mémoires pour générer moyennant l'utilisation d'un ou de plusieurs dispositifs de traitement une application logicielle d'appareil mobile protégé qui est personnalisée en termes de sécurité en utilisant des données du registre de personnalisation de la sécurité, l'application générée comprenant plusieurs domaines de code, en relation avec un ou plusieurs prestataires de services (201, 202, 203, 204) où un ou plusieurs domaines de code de premier plan sont couplés en termes de sécurité à un ou plusieurs domaines de code de deuxième plan via la personnalisation de la sécurité, ladite personnalisation étant liée à des paramètres de sécurité et/ou des règles de masquage et/ou des données de somme de contrôle qui sont au moins partiellement disponibles dans un ou plusieurs domaines de code de deuxième plan et qui sont nécessaires pour permettre le fonctionnement normal d'un ou plusieurs domaines de code de premier plan ;
L'envoi de l'application logicielle mobile protégée dans un état de sécurité non personnalisé du prestataire de services de personnalisation (100) à un serveur de distribution, cet état désactivant un ou plusieurs domaines de code de premier plan pour un fonctionnement normal, et l'application logicielle mobile protégée étant stockée dans une ou plusieurs mémoires du serveur de distribution ;
La réception depuis l'appareil mobile de l'utilisateur (400) d'une demande de personnalisation de la sécurité d'au moins un du ou des domaines du code de premier plan, la demande étant déclenchée par l'utilisation d'un code exécutable appartenant à l'un du ou des domaines de code de deuxième plan de l'application logicielle de l'appareil mobile protégé se trouvant dans un état de sécurité non personnalisé ;
L'envoi des données de personnalisation de la sécurité associées à un registre de personnalisation de la sécurité du cycle de vie qui concerne l'appareil mobile de l'utilisateur (400) à l'application logicielle de l'appareil mobile protégé et non personnalisé en termes de sécurité dans l'appareil mobile de l'utilisateur (400), les données de personnalisation de la sécurité activant dans l'application au moins un du ou des domaines de code de premier plan pour un fonctionnement normal.

2. Une méthode selon la revendication 1, dans laquelle le prestataire de services de personnalisation (100) est le prestataire de services ou l'un des divers prestataires de services (201, 202, 203, 204).

3. Une méthode selon la revendication 1 ou 2, dans laquelle l'activation d'au moins un du ou des domaines de code de premier plan est associée à un ou plusieurs paramètres de sécurité liés au registre de personnalisation de la sécurité du cycle de vie, qui sont différents des paramètres correspondants du registre de personnalisation de la sécurité.

4. Une méthode selon l'une quelconque des revendications 1 à 3, dans laquelle la personnalisation de la sécurité associée au registre de personnalisation de la sécurité du cycle de vie concerne les paramètres de sécurité et/ou les règles de masquage et/ou les données de somme de contrôle du code qui sont au moins partiellement disponibles dans un ou plusieurs domaines de code de deuxième plan et qui sont nécessaires pour activer au moins un ou plusieurs des domaines de code de premier plan pour un fonctionnement normal.

5. Une méthode selon l'une quelconque des revendications 1 à 4, dans laquelle les demandes successives de personnalisation de la sécurité d'au moins un autre ou plusieurs autres domaines de code de premier plan sont reçues depuis l'appareil mobile de l'utilisateur (400), chaque demande étant déclenchée en utilisant un code exécutable appartenant au domaine de code ou à l'un des domaines de code de premier plan précédemment activé pour un fonctionnement normal, et où les données de personnalisation de la sécurité associées au registre de personnalisation de la sécurité du cycle de vie sont envoyées à l'application logicielle de l'appareil mobile protégé protégé et partiellement personnalisé en termes de sécurité, les données de personnalisation de la sécurité activant dans l'application pour un fonctionnement normal au moins un autre domaine de code ou plusieurs autres domaines de code de premier plan associés à la demande particulière.

6. Une méthode selon la revendication 5, dans laquelle au moins un autre domaine de code ou un des autres domaines de code de premier plan est associé en termes de sécurité par le prestataire de services de personnalisation (100) à un ou plusieurs domaines de code de premier plan via la personnalisation de la sécurité, ladite personnalisation étant liée aux paramètres de sécurité et/ou aux règles de masquage et/ou aux données des sommes de contrôle du code qui sont au moins partiellement disponibles dans le domaine de code ou dans plusieurs domaines de code de premier plan et qui sont nécessaires pour activer au moins l'autre domaine de code ou un des autres domaines de code de premier plan pour un fonctionnement normal.

7. Une méthode selon la revendication 6, dans laquelle au moins une partie des paramètres de sécurité et/ou des règles de masquage et/ou des données des sommes de contrôle requises pour activer au moins un autre domaine de code ou un des autres domaines de code de premier plan pour un fonctionnement normal a été préalablement envoyée à une partie de la base de données de l'application logicielle de l'appareil mobile protégé qui est associée à ce domaine de code ou à ces domaines de code de premier plan.

8. Une méthode selon l'une quelconque des revendications 5 à 7, dans laquelle un ou plusieurs appareils de traitement créent une application logicielle d'appareil mobile protégé et partiellement personnalisé en termes de sécurité expirant si une demande de personnalisation de la sécurité d'au moins un autre domaine de code ou de plusieurs autres domaines de code de premier plan est reçue après une période prédéfinie une fois que les données de personnalisation de la sécurité relatives à une demande de personnalisation de la sécurité antérieure d'au moins un autre domaine de code ou de plusieurs autres domaines de code différents du domaine de code ou des domaines de code de premier plan ont été envoyées à l'application logicielle d'appareil mobile protégé se trouvant soit dans un état de sécurité non personnalisé soit dans un état de sécurité partiellement personnalisé.

9. Une méthode selon l'une quelconque des revendications 1 à 8, dans laquelle les données de re-personnalisation de la sécurité associées au registre de personnalisation de la sécurité du cycle de vie, ou à un autre registre de personnalisation de la sécurité du cycle de vie associé à l'appareil mobile de l'utilisateur (400), sont envoyées à l'application logicielle de l'appareil mobile protégé se trouvant dans un état de sécurité soit partiellement personnalisé, soit personnalisé, les données de re-personnalisation de la sécurité étant au moins en partie différentes des données de personnalisation de la sécurité et activant dans l'application pour un fonctionnement normal au moins domaine de code ou un des domaines de code de premier plan et/ou au moins un autre domaine de code ou plusieurs autres domaines de code de premier plan.

10. Une méthode selon l'une quelconque des revendications 1 à 9, dans laquelle un ou plusieurs domaines de code de premier plan associés à un premier prestataire de services (201, 202, 203, 4) peuvent être activés pour un fonctionnement normal par le prestataire de services de personnalisation indépendamment de l'habilitation pour un fonctionnement normal d'un autre ou de plusieurs autres domaines de code de premier plan associés à un second prestataire de services (201, 202, 203, 204).

11. Une méthode associée à l'utilisation de l'appareil mobile d'un utilisateur (400) dans le cadre de la personnalisation de la sécurité d'une application logicielle d'appareil mobile protégé dans l'appareil mobile de l'utilisateur (400), l'application logicielle d'appareil mobile protégé précédemment générée par un prestataire de services de personnalisation (100) dans un état de sécurité personnalisé moyennant l'utilisation d'une application logicielle d'appareil mobile, d'un registre de personnalisation de la sécurité et d'un logiciel de protection de la sécurité, l'application protégée comprenant plusieurs domaines de code, associés à un ou plusieurs prestataires de services (201, 202, 203, 204), où un ou plusieurs domaines de code de premier plan sont associés en termes de sécurité à un ou plusieurs domaines de code de deuxième plan via la personnalisation de sécurité associée au registre de personnalisation de la sécurité, la méthode comprenant :
La demande depuis l'appareil mobile de l'utilisateur (400) d'une application logicielle d'appareil mobile à un serveur de distribution, le serveur de distribution stockant dans une ou plusieurs mémoires l'application logicielle de l'appareil mobile protégé se trouvant dans un état de sécurité non personnalisé ;
La réception depuis le serveur de distribution et l'installation ultérieure par un ou plusieurs appareils de traitement dans l'appareil mobile (400) de l'application logicielle d'appareil mobile protégé non personnalisé en termes de sécurité, où, dans ledit état de personnalisation de la sécurité en attente, le domaine de code ou les domaines de code de premier plan sont désactivés pour un fonctionnement normal ;
L'envoi depuis l'appareil mobile de l'utilisateur (400) d'une demande de personnalisation de la sécurité d'au moins un du ou des domaines du code de premier plan, la demande étant déclenchée par un ou plusieurs dispositifs de traitement utilisant un code exécutable appartenant à l'un du ou des domaines de code de deuxième plan de l'application logicielle de l'appareil mobile protégé se trouvant dans un état de sécurité non personnalisé ;
la réception des données de personnalisation de la sécurité associées à un registre de personnalisation de la sécurité du cycle de vie se rapportant à l'appareil mobile de l'utilisateur (400) et provenant du prestataire de services de personnalisation (100), les données de personnalisation de la sécurité activant dans l'application logicielle de l'appareil mobile protégé et non personnalisé en termes de sécurité au moins le domaine de code ou plusieurs des domaines de code de premier plan pour un fonctionnement normal, ladite personnalisation étant associée aux paramètres de sécurité et/ou aux règles de masquage et/ou aux données des sommes de contrôle du code qui sont au moins partiellement disponibles dans un domaine de code ou dans plusieurs domaines de code de deuxième plan et qui sont nécessaires pour activer au moins un ou plusieurs des domaines de code de premier plan pour un fonctionnement normal.

12. Une méthode selon la revendication 11, dans laquelle des demandes successives de personnalisation de la sécurité d'au moins un autre ou plusieurs autres domaines de code de premier plan sont envoyées par l'appareil mobile de l'utilisateur (400) au prestataire de services de personnalisation (100), chaque demande étant déclenchée par un ou plusieurs dispositifs de traitement en utilisant un code exécutable appartenant au domaine de code ou l'un des domaines de code de premier plan qui a été précédemment activé pour un fonctionnement normal, et où les données de personnalisation de la sécurité associées au registre de personnalisation de la sécurité du cycle de vie associé à l'appareil mobile de l'utilisateur (400) sont reçues dans l'application logicielle de l'appareil mobile protégé et partiellement personnalisé en termes de sécurité, les données de personnalisation de la sécurité activant dans l'application pour un fonctionnement normal au moins un autre ou plusieurs autres domaines de code de premier plan qui sont associés à la demande particulière.

13. Une méthode selon la revendication 12, dans laquelle au moins un autre domaine de code ou un des autres domaines de code de premier plan est associé en termes de sécurité à un ou plusieurs domaines de code de premier plan via la personnalisation de la sécurité, ladite personnalisation étant liée aux paramètres de sécurité et/ou aux règles de masquage et/ou aux données des sommes de contrôle du code qui sont au moins partiellement disponibles dans le domaine de code ou dans plusieurs domaines de code de premier plan et qui sont nécessaires pour activer au moins l'autre domaine de code ou un des autres domaines de code de premier plan pour un fonctionnement normal.

14. Une méthode selon la revendication 13, dans laquelle au moins une partie des paramètres de sécurité et/ou des règles de masquage et/ou des données des sommes de contrôle requises pour activer au moins un autre domaine de code ou un des autres domaines de code de premier plan pour un fonctionnement normal sont disponibles dans une partie de la base de données de l'application logicielle de l'appareil mobile protégé qui est associée à ce domaine de code ou à ces domaines de code de premier plan qui ont été préalablement activés pour un fonctionnement normal.

15. Une méthode selon l'une quelconque des revendications 11 à 14, dans laquelle un ou plusieurs domaines de code de premier plan activés via les données primaires de personnalisation de la sécurité reçues dans l'application logicielle d'appareil mobile protégé installée dans un appareil mobile (400) d'un premier utilisateur sont différents du ou des domaine(s) de code de premier plan activés via les données secondaires de personnalisation de la sécurité reçues dans l'application logicielle d'appareil mobile protégé installée dans un appareil mobile (400) d'un deuxième utilisateur.

16. Une méthode selon l'une quelconque des revendications 11 à 15, dans laquelle les données de personnalisation de la sécurité reçues dans l'appareil mobile (400) d'un premier utilisateur, les données activant dans l'application un ou plusieurs domaines de code de premier plan pour un fonctionnement normal et étant associées à un premier registre de personnalisation de la sécurité du cycle de vie qui comprend les premiers paramètres de sécurité et/ou règles de masquage et/ou données des somme de contrôle, sont différentes des données de personnalisation de la sécurité reçues dans l'appareil mobile (400) d'un second utilisateur, les données activant dans l'application un ou plusieurs domaines de code de premier plan pour un fonctionnement normal et étant associées à un second registre de personnalisation de la sécurité du cycle de vie qui comprend les seconds paramètres de sécurité et/ou règles de masquage et/ou données des sommes de contrôle.

17. Un code de programme non transitoire, lisible par ordinateur et stockant des supports, permettant à un processeur de l'appareil mobile de l'utilisateur (400) d'exécuter une méthode associée à la personnalisation de la sécurité d'une application logicielle d'appareil mobile protégé dans l'appareil mobile de l'utilisateur (400), l'application logicielle d'appareil mobile protégé précédemment générée par un prestataire de services de personnalisation (100) dans un état de sécurité personnalisé en utilisant une application logicielle d'appareil mobile,
Un registre de personnalisation de la sécurité et un logiciel de protection de la sécurité, l'application protégée comprenant plusieurs domaines de code, associés à un ou plusieurs prestataires de services (201, 202, 203, 204), où un ou plusieurs domaines de code de premier plan sont associés en termes de sécurité à un ou plusieurs domaines de code de deuxième plan via la personnalisation de la sécurité associée au registre de personnalisation de la sécurité, la méthode comprenant :
La demande depuis l'appareil mobile de l'utilisateur (400) d'une application logicielle d'appareil mobile à un serveur de distribution, le serveur de distribution stockant dans une ou plusieurs mémoires l'application logicielle de l'appareil mobile protégé se trouvant dans un état de sécurité non personnalisé ;
La réception depuis le serveur de distribution et l'installation ultérieure par un ou plusieurs appareils de traitement dans l'appareil mobile (400) de l'application logicielle d'appareil mobile protégé non personnalisé en termes de sécurité, où, dans ledit état de personnalisation de la sécurité en attente, le domaine de code ou les domaines de code de premier plan sont désactivés pour un fonctionnement normal ;
L'envoi depuis l'appareil mobile de l'utilisateur (400) d'une demande de personnalisation de la sécurité d'au moins un du ou des domaines du code de premier plan, la demande étant déclenchée par un ou plusieurs dispositifs de traitement utilisant un code exécutable appartenant à l'un du ou des domaines de code de deuxième plan de l'application logicielle de l'appareil mobile protégé se trouvant dans un état de sécurité non personnalisé ;
la réception des données de personnalisation de la sécurité associées à un registre de personnalisation de la sécurité du cycle de vie se rapportant à l'appareil mobile de l'utilisateur (400) et provenant du prestataire de services de personnalisation (100), les données de personnalisation de la sécurité activant dans l'application logicielle de l'appareil mobile protégé et non personnalisé en termes de sécurité au moins le domaine de code ou plusieurs des domaines de code de premier plan pour un fonctionnement normal, ladite personnalisation étant associée aux paramètres de sécurité et/ou aux règles de masquage et/ou aux données des sommes de contrôle du code qui sont au moins partiellement disponibles dans un domaine de code ou dans plusieurs domaines de code de deuxième plan et qui sont nécessaires pour activer au moins un ou plusieurs des domaines de code de premier plan pour un fonctionnement normal.

18. Un code de programme non transitoire, lisible par ordinateur et stockant des supports selon la revendication 17 qui amène le processeur à envoyer des demandes successives de personnalisation de la sécurité d'au moins un autre ou plusieurs autres domaines de code de premier plan depuis l'appareil mobile de l'utilisateur (400) au prestataire de services de personnalisation (100), chaque demande étant déclenchée par un ou plusieurs dispositifs de traitement en utilisant un code exécutable appartenant au domaine de code ou à l'un des différents domaines de code de premier plan qui a été précédemment activé pour un fonctionnement normal, et recevant les données de personnalisation de la sécurité associées au registre de personnalisation de la sécurité du cycle de vie associé à l'appareil mobile de l'utilisateur (400) dans l'application logicielle de l'appareil mobile protégé et partiellement personnalisé en termes de sécurité, les données de personnalisation de la sécurité activant dans l'application pour un fonctionnement normal au moins un autre ou plusieurs autres domaines de code de premier plan qui sont associés à la demande particulière.

19. Un appareil mobile de l'utilisateur (400) associé à la personnalisation de la sécurité d'une application logicielle d'appareil mobile protégé dans l'appareil mobile de l'utilisateur (400), l'application logicielle d'appareil mobile protégé précédemment générée par un prestataire de services de personnalisation (100) dans un état de sécurité personnalisé moyennant l'utilisation d'une application logicielle d'appareil mobile, d'un registre de personnalisation de la sécurité et d'un logiciel de protection de la sécurité, l'application protégée comprenant plusieurs domaines de code, associés à un ou plusieurs prestataires de services (201, 202, 203, 204), où un ou plusieurs domaines de code de premier plan sont associés en termes de sécurité à un ou plusieurs domaines de code de deuxième plan via la personnalisation de sécurité associée au registre de personnalisation de la sécurité, l'appareil mobile (400) comprenant :
Un support de stockage électronique qui stocke des données de personnalisation de sécurité ; et
Un processeur adapté pour :
Demander une application logicielle d'appareil mobile à un serveur de distribution, le serveur de distribution stockant dans une ou plusieurs mémoires l'application logicielle de l'appareil mobile protégé se trouvant dans un état de sécurité non personnalisé
Recevoir du serveur de distribution puis installer dans l'appareil mobile (400) l'application logicielle d'appareil mobile protégé non personnalisé en termes de sécurité, dans laquelle, dans ledit état de personnalisation de la sécurité en attente, le ou les domaines de code de premier plan sont désactivés pour un fonctionnement normal ;
Envoyer une demande de personnalisation de la sécurité d'au moins un du ou des domaines du code de premier plan, la demande étant déclenchée par l'utilisation d'un code exécutable appartenant à l'un du ou des domaines de code de deuxième plan de l'application logicielle de l'appareil mobile protégé se trouvant dans un état de sécurité non personnalisé ;
Recevoir les données de personnalisation de la sécurité associées à un registre de personnalisation de la sécurité du cycle de vie se rapportant à l'appareil mobile de l'utilisateur (400) et provenant du prestataire de services de personnalisation (100), les données de personnalisation de la sécurité activant dans l'application logicielle de l'appareil mobile protégé et non personnalisé en termes de sécurité au moins le domaine de code ou plusieurs des domaines de code de premier plan pour un fonctionnement normal, ladite personnalisation étant associée aux paramètres de sécurité et/ou aux règles de masquage et/ou aux données des sommes de contrôle du code qui sont au moins partiellement disponibles dans un domaine de code ou dans plusieurs domaines de code de deuxième plan et qui sont nécessaires pour activer au moins un ou plusieurs des domaines de code de premier plan pour un fonctionnement normal.

20. Un appareil mobile de l'utilisateur (400) selon la revendication 19, dans laquelle le processeur est adapté pour envoyer des demandes successives de personnalisation de la sécurité d'au moins un autre ou plusieurs autres domaines de code de premier plan depuis l'appareil mobile de l'utilisateur (400) au prestataire de services de personnalisation (100), chaque demande étant déclenchée par l'utilisation d'un code exécutable appartenant au domaine de code ou à l'un des domaines de code de premier plan qui a été précédemment activé pour un fonctionnement normal, et pour recevoir les données de personnalisation de la sécurité associées au registre de personnalisation de la sécurité du cycle de vie associé à l'appareil mobile de l'utilisateur (400) dans l'application logicielle de l'appareil mobile protégé et partiellement personnalisé en termes de sécurité, les données de personnalisation de la sécurité activant dans l'application pour un fonctionnement normal au moins un autre ou plusieurs autres domaines de code de premier plan qui sont associés à la demande particulière.
